# EUROPEAN PATENT APPLICATION

(11) **EP 4 089 521 A1**
(43) Date of publication of application: **16.11.2022**
(21) Application number: 21753117.7
(22) Date of filing: 28.01.2021
(51) Int. Cl.: G06F 3/14, G06F 1/16, G06F 3/00, G06F 3/0481, H04N 5/232, H04N 5/247, H04N 5/225

(54) **METHOD AND APPARATUS FOR OPERATING ELECTRONIC DEVICE INCLUDING FLEXIBLE DISPLAY**

(30) Priority: 10.02.2020 KR 20200015959; 10.04.2020 KR 20200044352
(71) Applicant: Samsung Electronics Co., Ltd., Gyeonggi-do, 16677 (KR)
(72) Inventor: JANG, Jaechan, Suwon-si, Gyeonggi-do 16677 (KR); JANG, Jongwoon, Suwon-si, Gyeonggi-do 16677 (KR); KIM, Misu, Suwon-si, Gyeonggi-do 16677 (KR); KIM, Minho, Suwon-si, Gyeonggi-do 16677 (KR); PARK, Bongseok, Suwon-si, Gyeonggi-do 16677 (KR)
(74) Representative: HGF
(86) International application number: PCT/KR2021/001158
(87) International publication number: WO 2021/162295

(57) **Abstract**

Disclosed in various embodiments of the present disclosure are an electronic device including a flexible display (or a foldable display) and an operating method therefor. The electronic device according to various embodiments comprises a camera device, a first display, a second display, and a processor, wherein the processor may be configured to: identify the state of the electronic device on the basis of execution of the camera device; identify an operation mode of the camera device and a display operating in response to the execution of the camera device, on the basis of the state of the electronic device; update settings of the camera device at least on the basis of the operation mode of the camera device and the identified display; and display a preview obtained from the camera device through the identified display, on the basis of the updated settings. Various embodiments are possible.

## Description

### [Technical Field]

Various embodiments of the disclosure relate to an electronic device having a flexible display (or foldable display) and a method for operating the same.

### [Background Art]

In line with recent development of digital technologies, there has been widespread use of various kinds of electronic devices such as a mobile communication terminal, a smartphone, a tablet personal computer (PC), a notebook, and a wearable device.

Electronic devices may have limited sizes for the sake of portability, and this limits display sizes. Therefore, there has recently been development of various types of electronic devices such that electronic devices provide more expanded screens through multi-display. For example, multiple displays are used to provide a screen expanded by multi-display. As another example, electronic devices have been designed such that the screen size increases gradually while displays have limited sizes, thereby providing users with various services through large screens.

Recently, electronic devices may have a new form factor such as multi-display (for example, dual display device (for example, foldable device)). A foldable device may have a fold (or curved) display (for example, foldable display or flexible display) and may be used in a folded or unfolded state. In addition, in line with multi-display implementation, there has been increasing needs to develop a user interface (UI) corresponding to multi-display and operations thereof.

### [Disclosure of Invention]

### [Technical Problem]

Various embodiments provide a method and an apparatus for operating a camera device and a display in connection with an electronic device (for example, foldable device) having at least two display surfaces.

Various embodiments provide a method and an apparatus capable of efficiently controlling a camera device and operations related to photography using the camera device, based on physical characteristics of the electronic device being folded or unfolded.

Various embodiments provide a method and an apparatus wherein, when a camera device operates based on a state change of an electronic device, the configuration of the camera device can be controlled based on the folded state, unfolded state, or intermediate state of the electronic device, and a user interface can be provided through a display accordingly.

### [Solution to Problem]

An electronic device according to various embodiments of the disclosure may include a camera device, a first display, a second display, and a processor, wherein the processor is configured to identify a state of the electronic device, based on the execution of the camera device, identify a display operating in response to an operation mode of the camera device and the execution of the camera device, based on a state of the electronic device, update a configuration of the camera device, at least based on an operation mode of the camera device and the identified display, and display, through the identified display, a preview obtained based on the updated configuration from the camera device.

A method for operating an electronic device according to various embodiments of the disclosure may include identifying a state of the electronic device, based on the execution of a camera device, identifying a display operating in response to an operation mode of the camera device and the execution of the camera device, based on a state of the electronic device, updating a configuration of the camera device, at least based on an operation mode of the camera device and the identified display, and displaying, through the identified display, a preview obtained from the camera device, based on the updated configuration.

In order to solve the above-mentioned problems, various embodiments of the disclosure may include a computer-readable recording medium in which a program for executing the above method by a processor is recorded.

Additional scopes of applicability of the disclosure will become clear from the following detailed description. However, various changes and modifications can be clearly understood by those skilled in the art within the idea and scope of the disclosure, and specific embodiments (for example, preferred embodiments) of the disclosure and the detailed description are to be understood as being given only as examples.

### [Advantageous Effects of Invention]

According to an electronic device and a method for operating the same, according to various embodiments, in connection with an electronic device having a flexible display, a camera device and/or display of the electronic device processes a corresponding event in response to the state of the electronic device (for example, unfolded state, folded, or intermediate state) or state change thereof, thereby providing an efficient camera mode switching experience. According to various embodiments, if the user causes a state change of the electronic device while the camera device operates, the electronic device may process an event according to the state change, thereby providing the user with a seamless camera use experience.

According to various embodiments, an electronic device may use a single camera device so as to provide the user with a front photography (for example, front camera mode or selfie mode) and rear photography (for example, rear camera module) experiences, and may provide a preview optimized for the display according to the user's photography mode. According to various embodiments, an electronic device may, during front or rear photography, divide the display area into a preview area and a sub area and, through adaptive switching of the areas (for example, arrangement position switching), may enable the user to capture images at various camera angles (for example, high or low angle), thereby improving the user's usability and/or convenience regarding photography.

### [Brief Description of Drawings]

In connection with descriptions of the drawings, same or similar reference numerals will be used to refer to same or similar elements.
FIG. 1 illustrates an electronic device in a network environment according to an embodiment.
FIG. 2 is a block diagram illustrating the display device according to various embodiments.
FIG. 3A is a front perspective view showing a flat stage or an unfolded state of an electronic device according to various embodiments.
FIG. 3B is a plan view showing the front surface thereof in an unfolded state of an electronic device according to various embodiments.
FIG. 3C is a plan view showing the rear surface thereof in an unfolded state of an electronic device according to various embodiments.
FIG. 4A is a perspective view showing a folded state of an electronic device according to various embodiments.
FIG. 4B is a perspective view showing an intermediate state of an electronic device according to various embodiments.
FIG. 5 is a view schematically showing a configuration of an electronic device according to various embodiments.
FIG. 6 is a flowchart illustrating an operation method of an electronic device according to various embodiments.
FIG. 7 is a flowchart illustrating an operation method of an electronic device according to various embodiments.
FIG. 8 is a flowchart illustrating an operation method of an electronic device according to various embodiments.
FIG. 9 is a flowchart illustrating an operation method of an electronic device according to various embodiments.
FIG. 10 is a flowchart illustrating an operation method of an electronic device according to various embodiments.
FIG. 11 is a flowchart illustrating an operation method of an electronic device according to various embodiments.
FIG. 12A, FIG. 12B, and FIG. 12C are views for explaining examples in which a camera device and a display operate in an electronic device according to various embodiments.
FIG. 13 is a flowchart illustrating an operation method of an electronic device according to various embodiments.
FIG. 14 is a flowchart illustrating an operation method of an electronic device according to various embodiments.
FIG. 15A, FIG. 15B, and FIG. 15C are views for explaining examples of operating in an intermediate state of an electronic device according to various embodiments.
FIG. 16A, FIG. 16B, FIG. 16C, FIG. 16D, and FIG. 16E are views for explaining examples of providing a sub-area in an intermediate state of an electronic device according to various embodiments.
FIG. 17 is a flowchart illustrating an operation method of an electronic device according to various embodiments.
FIG. 18 is a flowchart illustrating an operation method of an electronic device according to various embodiments.
FIG. 19 is a view for explaining an example of operating in an unfolded state of an electronic device according to various embodiments.
FIG. 20 is a flowchart illustrating an operation method of an electronic device according to various embodiments.
FIG. 21A and FIG. 21B are views for explaining examples of an interface provided for a multi-preview display in an electronic device according to various embodiments.
FIG. 22, FIG. 23 and FIG. 24 are views for explaining examples in which an electronic device is changed from an unfolded state to an intermediate state according to various embodiments.
FIG. 25 and FIG. 26 are views for explaining examples of use in an intermediate state of an electronic device according to various embodiments.
FIG. 27 is a view for explaining an example of a photographing operation using an electronic device in an intermediate state of the electronic device according to various embodiments.
FIG. 28 is a view for explaining another example of a photographing operation using an electronic device in an intermediate state of the electronic device according to various embodiments.
FIG. 29 and FIG. 30 are views for explaining examples of changing, from an intermediate state to an unfolded state, an electronic device according to various embodiments.
FIG. 31 is a view for explaining another example of a preview area and a sub-area in an intermediate state of an electronic device according to various embodiments.
FIG. 32 is a view for explaining an example of a screen configuration in an intermediate state of an electronic device according to various embodiments.
FIG. 33 is a view for explaining an example of a screen configuration in an intermediate state of an electronic device according to various embodiments.
FIG. 34, FIG. 35, and FIG. 36 are views for explaining examples of setting a preview position by using a subject and an angle of a hinge module in an electronic device according to various embodiments.
FIG. 37, FIG. 38, and FIG. 39 are views for explaining another example of setting a preview position by using a subject and an angle of a hinge module in an electronic device according to various embodiments.
FIG. 40 and FIG. 41 are views for explaining examples of setting a preview position by using a gaze position of a photographer in an electronic device according to various embodiments.
FIG. 42 is a view for explaining an example of setting a preview position by using a device angle and an angle of a hinge module in an electronic device according to various embodiments.
FIG. 43, FIG. 44, FIG. 45, and FIG. 46 are views for explaining examples of setting a preview position by using a fixed position and an angle of a hinge module in an electronic device according to various embodiments.
FIG. 47 is a view for explaining an example of an operation for changing a preview position in an intermediate state of the electronic device according to various embodiments.

### [Mode for the Invention]

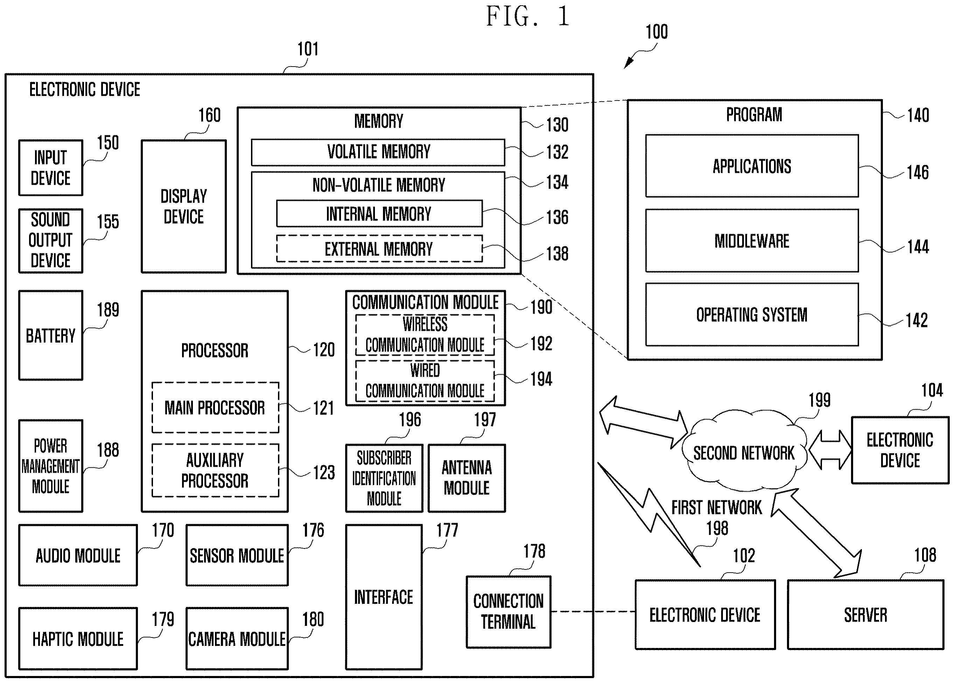

FIG. 1 illustrates an electronic device 101 in a network environment 100 according to an embodiment.

Referring to FIG. 1, the electronic device 101 in the network environment 100 may communicate with an electronic device 102 via a first network 198 (e.g., a short-range wireless communication network), with an electronic device 104 or a server 108 via a second network 199 (e.g., a long-range wireless communication network), or with the electronic device 104 via the server 108, and may include a processor 120, a memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) card 196, and an antenna module 197. At least one (e.g., the display device 160 or the camera module 180) of the components may be omitted from the electronic device 101, or one or more other components may be added in the electronic device 101. Some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. The processor 120 may load a command or data received from another component (e.g., the sensor module 176 or the communication module 190) in the volatile memory 132, process the command or the data stored in the volatile memory 132, and store resulting data in non-volatile memory 134. The processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101 and may include software (e.g., the program 140) and input data or output data for a command related thereto. The memory 130 may include the volatile memory 132 or the non-volatile memory 134.

The program 140 may be stored in the memory 130 as software, and may include an operating system (OS) 142, middleware 144, or an application 146.

The input device 150 may receive a command or data to be used by another component (e.g., the processor 120) of the electronic device 101, from the outside (e.g., a user) of the electronic device 101, and may include a microphone, a mouse, a keyboard, or a digital pen (e.g., a stylus pen).

The sound output device 155 may output sound signals to the outside of the electronic device 101 and may include a speaker or a receiver. The speaker may be used for general purposes, such as playing multimedia or playing record, and the receiver may be used for incoming calls and may be implemented as separate from, or as part of the speaker.

The display device 160 may visually provide information to the outside (e.g., a user) of the electronic device 101 and may include a display, a hologram device, or a projector and control circuitry to control a corresponding one of the display, hologram device, and projector. The display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa, and may obtain the sound via the input device 150, or output the sound via the sound output device 155 or a headphone of an external electronic device (e.g., an electronic device 102) directly (e.g., over wires) or wirelessly coupled with the electronic device 101.

The sensor module 176 may detect an operational state (e.g., power or temperature) of the electronic device 101 or an environmental state (e.g., a state of a user) external to the electronic device 101, and generate an electrical signal or data value corresponding to the detected state, and may include a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., over wires) or wirelessly, and may include a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102), and may include a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation, and may include a motor, a piezoelectric element, or an electric stimulator.

The camera module 180 may capture a still image or moving images and may include one or more lenses, image sensors, image signal processors, or flashes.

The power management module 188 may manage power supplied to the electronic device 101, and may be implemented as at least part of a power management integrated circuit (PMIC).

The battery 189 may supply power to at least one component of the electronic device 101, and may include a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., a LAN or a wide area network (WAN)). These various types of communication modules may be implemented as a single component (e.g., a single chip), or may be implemented as multi components (e.g., multi chips) separate from each other.

The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101 and may include an antenna including a radiating element composed of a conductive material or a conductive pattern formed in or on a substrate (e.g., a PCB). The antenna module 197 may include a plurality of antennas. In such a case, at least one antenna appropriate for a communication scheme used in the communication network, such as the first network 198 or the second network 199, may be selected by the communication module 190 (e.g., the wireless communication module 192) from the plurality of antennas. The signal or the power may then be transmitted or received between the communication module 190 and the external electronic device via the selected at least one antenna. Another component (e.g., an RFIC) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 and 104 may be a device of a same type as, or a different type, from the electronic device 101.

All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing, as at least part of a reply to the request. To that end, a cloud, distributed, or client-server computing technology may be used, for example.

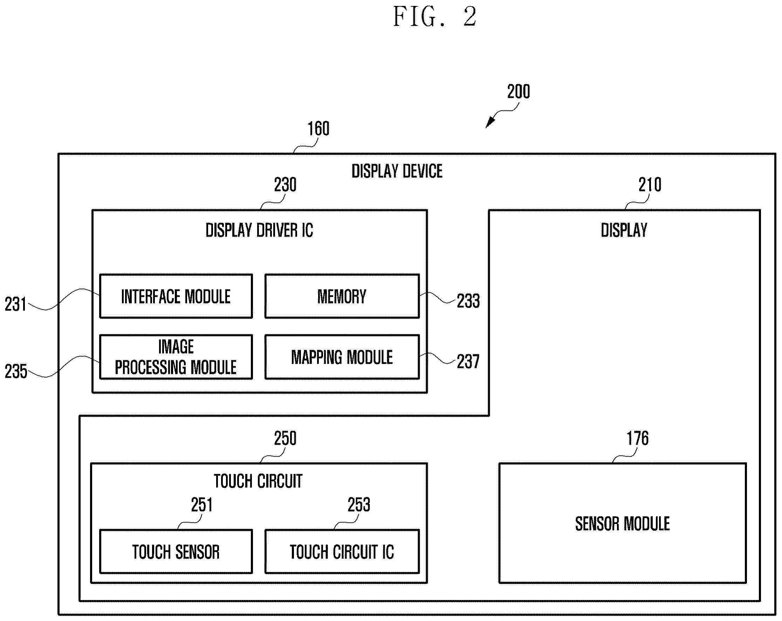

FIG. 2 is a block diagram 200 illustrating the display device 160 according to various embodiments.

Referring to Fig. 2, the display device 160 may include a display 210 and a display driver integrated circuit (DDI) 230 to control the display 210. The DDI 230 may include an interface module 231, memory 233 (e.g., buffer memory), an image processing module 235, or a mapping module 237.

The DDI 230 may receive image information that contains image data or an image control signal corresponding to a command to control the image data from another component of the electronic device 101 via the interface module 231. For example, according to an embodiment, the image information may be received from the processor 120 (e.g., the main processor 121 (e.g., an application processor)) or the auxiliary processor 123 (e.g., a graphics processing unit) operated independently from the function of the main processor 121. The DDI 230 may communicate, for example, with touch circuitry 350 or the sensor module 176 via the interface module 231. The DDI 230 may also store at least part of the received image information in the memory 233, for example, on a frame by frame basis.

The image processing module 235 may perform pre-processing or post-processing (e.g., adjustment of resolution, brightness, or size) with respect to at least part of the image data. According to an embodiment, the pre-processing or post-processing may be performed, for example, based at least in part on one or more characteristics of the image data or one or more characteristics of the display 210.

The mapping module 237 may generate a voltage value or a current value corresponding to the image data pre-processed or post-processed by the image processing module 235. According to an embodiment, the generating of the voltage value or current value may be performed, for example, based at least in part on one or more attributes of the pixels (e.g., an array, such as an RGB stripe or a pentile structure, of the pixels, or the size of each subpixel). At least some pixels of the display 210 may be driven, for example, based at least in part on the voltage value or the current value such that visual information (e.g., a text, an image, or an icon) corresponding to the image data may be displayed via the display 210.

According to an embodiment, the display device 160 may further include the touch circuitry 250. The touch circuitry 250 may include a touch sensor 251 and a touch sensor IC 253 to control the touch sensor 251. The touch sensor IC 253 may control the touch sensor 251 to sense a touch input or a hovering input with respect to a certain position on the display 210. To achieve this, for example, the touch sensor 251 may detect (e.g., measure) a change in a signal (e.g., a voltage, a quantity of light, a resistance, or a quantity of one or more electric charges) corresponding to the certain position on the display 210. The touch circuitry 250 may provide input information (e.g., a position, an area, a pressure, or a time) indicative of the touch input or the hovering input detected via the touch sensor 251 to the processor 120. According to an embodiment, at least part (e.g., the touch sensor IC 253) of the touch circuitry 250 may be formed as part of the display 210 or the DDI 230, or as part of another component (e.g., the auxiliary processor 123) disposed outside the display device 160.

According to an embodiment, the display device 160 may further include at least one sensor (e.g., a fingerprint sensor, an iris sensor, a pressure sensor, or an illuminance sensor) of the sensor module 176 or a control circuit for the at least one sensor. In such a case, the at least one sensor or the control circuit for the at least one sensor may be embedded in one portion of a component (e.g., the display 210, the DDI 230, or the touch circuitry 250)) of the display device 160. For example, when the sensor module 176 embedded in the display device 160 includes a biometric sensor (e.g., a fingerprint sensor), the biometric sensor may obtain biometric information (e.g., a fingerprint image) corresponding to a touch input received via a portion of the display 210. As another example, when the sensor module 176 embedded in the display device 160 includes a pressure sensor, the pressure sensor may obtain pressure information corresponding to a touch input received via a partial or whole area of the display 210. According to an embodiment, the touch sensor 251 or the sensor module 176 may be disposed between pixels in a pixel layer of the display 210, or over or under the pixel layer.

The electronic device 101 according to embodiments may be one of various types of electronic devices, such as a portable communication device (e.g., a smartphone), a computer device, a portable multimedia device, a portable medical device, a camera, a wearable device, or a home appliance. However, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., over wires), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Prior to describing various embodiments of the disclosure, an electronic device 101, to which an embodiment of the disclosure may be applied, will be described.

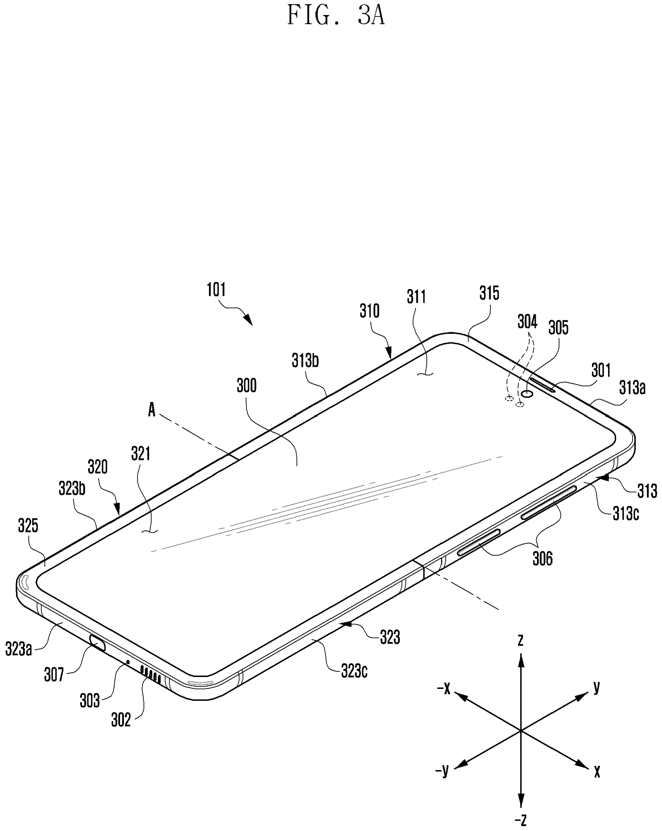

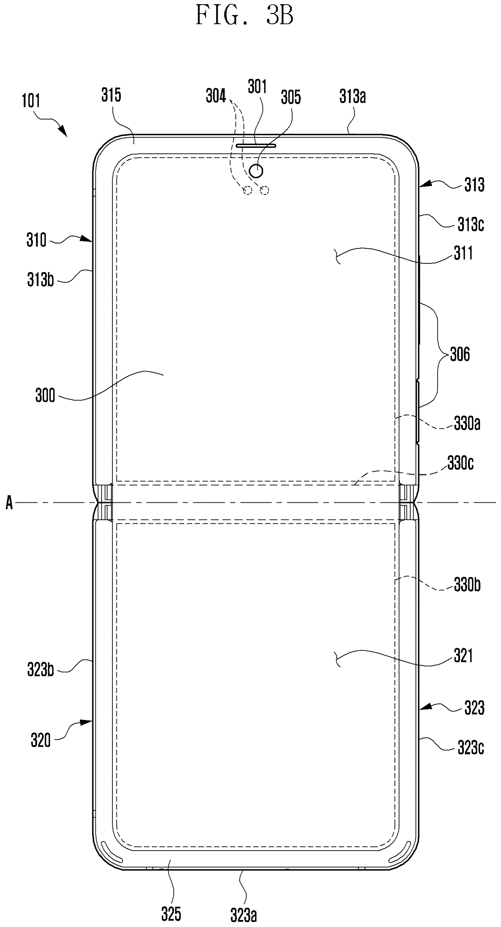

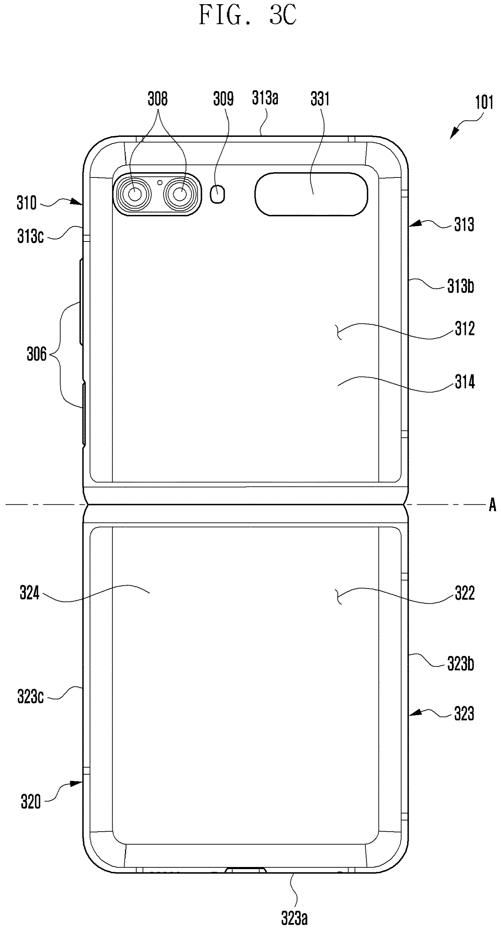

FIG. 3A is a perspective view showing a flat stage or an unfolded state of an electronic device according to various embodiments. FIG. 3B is a plan view showing the front surface thereof in an unfolded state of the electronic device according to various embodiments. FIG. 3C is a plan view showing the rear surface thereof in an unfolded state of the electronic device according to various embodiments.

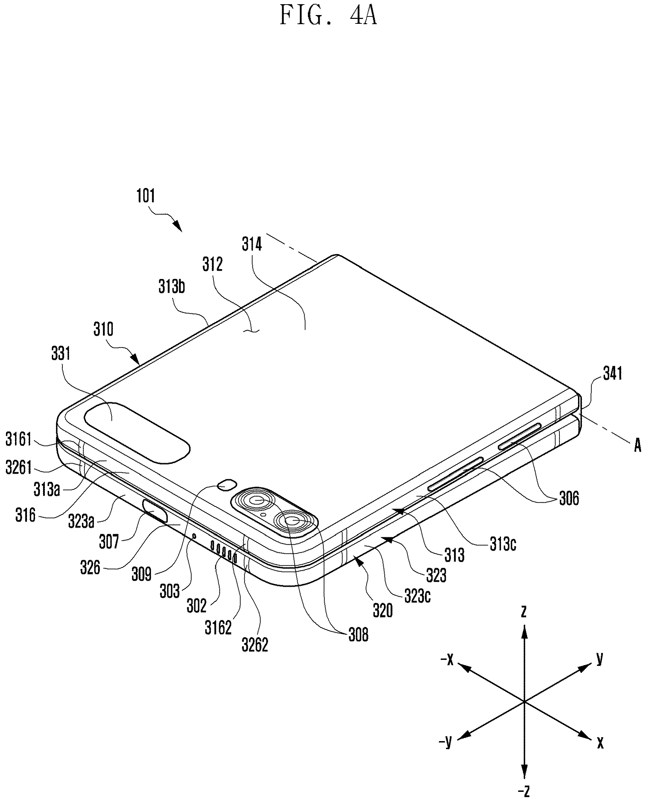

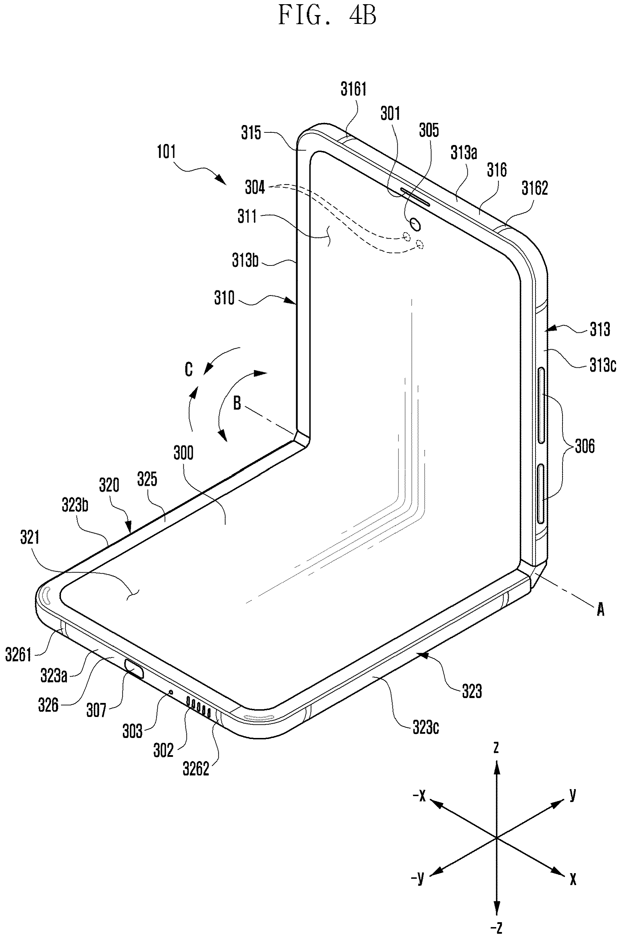

FIG. 4A is a perspective view showing a folded state of the electronic device according to various embodiments of the disclosure. FIG. 4B is a perspective view showing an intermediate state of the electronic device according to various embodiments.

Referring to FIG. 3A to FIG. 4B, an electronic device 101 may include one pair of housings 310 and 320 (e.g., a foldable housing) which are configured to face each other with reference to a hinge module (not shown) and are rotatably coupled to be folded. According to an embodiment, the electronic device 101 may include a display 210 (e.g., the flexible display 300) (or a foldable display or a second display) (e.g., the display 210 of FIG. 2) which is disposed in an area formed by the one pair of housings 310 and 320. According to an embodiment, a first housing 310 and a second housing 320 may be arranged at both sides around a folding axis (the axis A), and may have a substantially symmetrical shape with respect to the folding axis (the axis A). According to an embodiment, the first housing 310 and the second housing 320 may be configured to have different angles formed by each other or different distances from each other according to whether the state of the electronic device 101 is a flat state or an unfolded state, a folded state, or an intermediate state or a half-folded state.

According to various embodiments, the one pair of housings 310 and 320 may include a first housing 310 (e.g., a first housing structure) coupled to a hinge module and a second housing 320 (e.g., a second housing structure) coupled to the hinge module. According to an embodiment, in an unfolded state, the first housing 310 may include a first surface 311 facing a first direction (e.g., the front direction) (the z-axis direction) and a second surface 312 facing a second direction ( e.g., the rear direction) (the - z-axis direction) opposite to the first surface 311. According to an embodiment, the second housing 320 may include a third surface 321 facing the first direction (the z-axis direction) and the fourth surface 322 facing the second direction (the - z-axis direction), in an unfolded state. According to an embodiment, the electronic device 101 may be configured to operate in the manner in which the first surface 311 of the first housing 310 and the third surface 321 of the second housing 320 face substantially the same first direction (the z-axis direction) in an unfolded state, and the first surface 311 and the third surface 321 face each other in a folded state. According to an embodiment, the electronic device 101 may be configured to operate in a manner in which the second surface 312 of the first housing 310 and the fourth surface 322 of the second housing 320 face substantially the same second direction (the - z-axis direction) in an unfolded state, and the second surface 312 and the fourth surface 322 face each other in a folded state. For example, in a folded state, the second surface 312 may face the first direction (the z-axis direction), and the fourth surface 322 may face the second direction (the - z-axis direction).

According to various embodiments, the first housing 310 may include a first side frame 313 configured to at least partially form the exterior of the electronic device 101, and a first rear cover 314 coupled to the first side frame 313 and configured to form at least a part of the second surface 312 of the electronic device 101. According to an embodiment, the first side frame 313 may include a first side surface 313a, a second side surface 313b extending from one end of the first side surface 313a, and a third side surface 313c extending from the other end of the first side surface 313a. According to an embodiment, the first side frame 313 may be formed in a long rectangular (e.g., a square or an a rectangular) shape by the first side surface 313a, the second side surface 313b, and the third side surface 313c.

According to various embodiments, the second housing 320 may include a second side frame 323 configured to at least partially form the exterior of the electronic device 101, and a second rear cover 324 coupled to the second side frame 323 and configured to form at least a part of the fourth surface 322 of the electronic device 101. According to an embodiment, the second side frame 323 may include a fourth side surface 323a, a fifth side surface 323b extending from one end of the fourth side surface 323a, and a sixth side surface 323c extending from the other end of the fourth side surface 323a. According to an embodiment, the second side frame 323 may be formed in a long rectangular shape by the fourth side surface 323a, the fifth side surface 323b, and the sixth side surface 323c.

According to various embodiments, the one pair of housings 310 and 320 may not be limited to the illustrated shape and coupling, and be may implemented by a combination and/or coupling of other shapes or components. For example, the first side frame 313 may be integrally formed with the first rear cover 314, and the second side frame 323 may be integrally formed with the second rear cover 324.

According to various embodiments, in an unfolded state, the electronic device 101 may be configured such that the second side surface 313b of the first side frame 313 and the fifth side surface 323b of the second side frame 323 are connected to each other without any gap. According to various embodiments, in an unfolded state, the electronic device 101 may be configured such that the third side surface 313c of the first side frame 313 and the sixth side surface 323c of the second side frame 323 are connected to each other without any gap therebetween. According to an embodiment, in an unfolded state, the electronic device 101 may be configured such that the sum of the length of the second side surface 313b and the fifth side surface 323b is greater than the length of the first side surface 313a and/or the length of the fourth side surface 323a. In addition, the sum of the length of third side surface 313c and the sixth side surface 323c may be greater than the length of the first side surface 313a and/or the length of the fourth side surface 323a.

According to various embodiments, the first side frame 313 and/or the second side frame 323 may be formed of metal, or may further include polymer injected into the metal. According to an embodiment, the first side frame 313 and/or the second side frame 323 may include at least one conductive portion 316 and/or 326 which is electrically segmented through at least one segment portion 3161 or 3162 and/or 3261 or 3262 formed of a polymer. In this case, the at least one conductive portion 316 and/or 326 may be electrically connected to a wireless communication circuit (e.g., the wireless communication module 192 of FIG. 1) included in the electronic device 101, and thus may be used as an antenna operating in at least one designated band (e.g., a legacy band).

According to various embodiments, for example, the first rear cover 314 and/or the second rear cover 324 may be formed of at least one of coated or colored glass, ceramic, polymer or metal (e.g., aluminum (aluminum), stainless steel (STS), or magnesium, or a combination of at least two thereof.

According to various embodiments, the flexible display 300 may be disposed to extend from the first surface 311 of the first housing 310 to at least a part of the third surface 321 of the second housing 320 across a hinge module. For example, the flexible display 300 may include a first plane part 330a substantially corresponding to the first surface 311, a second plane part 330b corresponding to the third surface 321, and a bendable part 330c configured to connect the first plane part 330a and the second plane part 330b and correspond to a hinge module. According to an embodiment, the electronic device 101 may include a first protective cover 315 (e.g., a first protective frame or a first decoration member) coupled along the edge of the first housing 310. According to an embodiment, the electronic device 101 may include a second protective cover 325 (e.g., a second protective frame or a second decoration member) coupled along the edge of the second housing 320. According to an embodiment, the first protective cover 315 and/or the second protective cover 325 may be formed of a metal material or a polymer material. According to an embodiment, the first protective cover 315 and/or the second protective cover 325 may be used as a decoration member. According to an embodiment, the flexible display 300 may be positioned such that the edge of the first plane part 330a is interposed between the first housing 310 and the first protective cover 315. According to an embodiment, the flexible display 300 may be positioned such that the edge of the second plane part 330b is interposed between the second housing 320 and the second protective cover 325. According to an embodiment, the flexible display 300 may be positioned such that the edge of the flexible display 300, which corresponds to a protective cap (not shown), is protected through the protective cap disposed in an area corresponding to a hinge module. Accordingly, the edge of the flexible display 300 may be substantially protected from the outside. According to an embodiment, the electronic device 101 may include a hinge housing 341 (e.g., a hinge cover) which is configured to support the hinge module, exposed to the outside when the electronic device 101 is in a folded state, and disposed to be invisible from the outside by being withdrawn into a first space and a second space when in an unfolded state.

According to various embodiments, the electronic device 101 may include a sub-display 331 (or a first display) (e.g., the display 210 of FIG. 2) which is disposed separately from the flexible display 300. According to an embodiment, the sub-display 331 may be disposed in the second surface 312 of the first housing 310 to be at least partially exposed therefrom, thereby replacing a display function of the flexible display 300 when being in a folded state. For example, the sub-display 331 may be configured to display state information of the electronic device 101 in a folded state. According to an embodiment, the sub-display 331 may be disposed to be visible from the outside through at least a partial area of the first rear cover 314. In some embodiments, the sub-display 331 may be also disposed on the fourth surface 322 of the second housing 320. In this case, the sub-display 331 may be disposed to be visible from the outside through at least a partial area of the second rear cover 324.

According to various embodiments, the electronic device 101 may include at least one of an input device 303 (e.g., a microphone), sound output devices 301 and 302, a sensor module 304, camera devices 305 and 308, and a key input device 306, a connector port 307. In the illustrated embodiment, the input device 303 (e.g., a microphone), the sound output devices 301 and 302, the sensor module 304, the camera devices 305 and 308, the key input device 306, and/or the connector port 307 are illustrated as a hole or a shape formed in the first housing 310 or the second housing 320, but may be defined to include a substantial electronic component (e.g., an input device, a sound output device, a sensor module, or a camera device) disposed inside the electronic device 101 and configured to operate through a hole or a shape.

According to various embodiments, the input device 303 may include at least one microphone disposed in the second housing 320. In some embodiments, the input device 303 may include multiple microphones 303 arranged to be able to sense the direction of sound. In some embodiments, the multiple microphones 303 may be arranged at appropriate positions in the first housing 310 and/or second housing 320. According to an embodiment, the sound output devices 301 and 302 may include speakers 301 and 302. According to an embodiment, the speakers 301 and 302 may include a receiver 301 for a call, which is disposed in the first housing 310, and the speaker 302 disposed in the second housing 320. In some embodiments, the input device 303, the sound output devices 301 and 302, and the connector port 307 may be arranged in a space provided in the first housing 310 and/or the second housing 320 of the electronic device 101, and may be exposed to an external environment through at least one hole formed in the first housing 310 and/or the second housing 320. According to an embodiment, the at least one connector port 307 may be used to transmit or receive power and/or data to or from an external electronic device. In some embodiments, at least one connector port 307 (e.g., an ear jack hole) may be configured to also accommodate a connector (e.g., an ear jack) for transmitting or receiving an audio signal to or from an external electronic device. In some embodiments, a hole formed in the first housing 310 and/or the second housing 320 may be commonly used for the input device 303 and the sound output devices 301 and 302. In some embodiments, the sound output devices 301 and 302 may include a speaker (e.g., a piezo speaker) which operates without a hole formed in the first housing 310 and/or the second housing 320.

According to various embodiments, the sensor module 304 may be configured to generate electric signals or data values corresponding to an internal operation state of the electronic device 101 or an external environment state. For example, the sensor module 304 may be configured to sense an external environment through the first surface 311 of the first housing 310. In some embodiments, the electronic device 101 may further include at least one sensor module disposed to sense an external environment through the second surface 312 of the first housing 310. According to an embodiment, the sensor module 304 (e.g., an illuminance sensor and/or a proximity sensor) may be disposed to sense an external environment through the flexible display 300 (e.g., disposed as an under-display sensor or an in-display sensor), under (e.g., an under panel) the flexible display 300. According to an embodiment, the sensor module 304 may include at least one of a gesture sensor, a gyro sensor, a barometer sensor, a magnetic sensor, an acceleration sensor, and a grip sensor, a color sensor (e.g., an RGB (red, green, and blue) sensor), an infrared (IR) sensor, a biometric sensor, a temperature sensor, a humidity sensor, an illuminance sensor or an ambient light sensor (ALS), a proximity sensor, and/or an ultrasonic sensor.

According to various embodiments, the camera devices 305 and 308 may include a first camera device 305 (e.g., a front camera device) disposed on the first surface 311 of the first housing 310, and a second camera device 308 (e.g., a rear camera device) disposed on the second surface 312 of the first housing 310. The electronic device 101 may further include a flash 309 disposed near the second camera device 308. According to an embodiment, the camera devices 305 and 308 may include one lens or multiple lenses, an image sensor, and/or an image signal processor. For example, the flash 309 may include a luminous element such as a light emitting diode (LED), an IR LED, a semiconductor laser diode (LD), and/or a xenon lamp. According to an embodiment, the camera devices 305 and 308 may be arranged such that two or more lenses (e.g., a wide-angle lens, an ultra-wide-angle lens, and/or telephoto lens) and image sensors are positioned on one surface (e.g., the first surface 311, the second surface 312, the third surface 321, or the fourth surface 322) of the electronic device 101. In some embodiments, the camera devices 305 and 308 may include lenses and an image sensor for time of flight (TOF).

According to various embodiments, the key input device 306 (e.g., a key button) may be disposed on the third side surface 313c of the first side frame 313 of the first housing 310. In some embodiments, the key input device 306 may be disposed on at least one side surface of the other side surfaces 313a and 313b of the first housing 310 and/or the side surfaces 323a, 323a, and 323c of the second housing 320. In some embodiments, the electronic device 101 may not include a part or all of the key input device 306, and the key input device 306 not included therein may be implemented in another form such as a soft key, on the flexible display 300. In some embodiments, the key input device 306 may be implemented using a pressure sensor included in the flexible display 300.

According to various embodiments, a camera device 305 of the camera devices 305 and 308 and/or the sensor module 304 may be arranged to be exposed through the flexible display 300. As an example, in the inner space of the electronic device 101, the first camera device 305 and/or the sensor module 304 may be arranged to be in contact with an external environment through an opening (e.g., a through-hole) which is at least partially formed in the flexible display 300. As another example, in the inner space of the electronic device 101, a sensor module 304 may be disposed to perform the function thereof without being visually exposed through the flexible display 300. For example, in this case, in the flexible display 300, a corresponding area facing the sensor module 304 may not need to have an opening.

Referring to FIG. 4B, the electronic device 101 may operate to maintain an intermediate state through a hinge module. In this case, the electronic device 101 may be configured to control the flexible display 300 such that different contents are displayed on a display area corresponding to the first surface 311 and a display area corresponding to the third surface 321. According to an embodiment, the electronic device 101 may be configured to operate in a substantially unfolded state (e.g., the unfolded state of FIG. 3A) and/or in a substantially folded state (e.g., the folded state of FIG. 4A) with reference to a predetermined inflection angle (e.g., the angle between the first housing 310 and the second housing 320 when being in an intermediate state through a hinge module. For example, when a pressing force is provided in the unfolding direction (the direction B) in the state where the electronic device 101 is unfolded with a predetermined inflection angle through a hinge module, the electronic device 101 may operate to be changed to an unfolded state (e.g., the unfolded state of FIG. 3A). For example, when a pressing force is provided in the folding direction (the direction C) in the state where the electronic device 101 is unfolded with a predetermined inflection angle through a hinge module, the electronic device 101 may operate to be changed to a folded state (e.g., the folded state of FIG. 4A). In an embodiment, the electronic device 101 may be operated to maintain an unfolded state (not shown) at various angles through a hinge module.

Hereinafter, according to various embodiments, it will be described for a specific embodiment of controlling the camera devices 305 and 308 and an operation associated with photographing using the camera devices 305 and 308, based on physical properties in which the electronic device 101 is folded or unfolded.

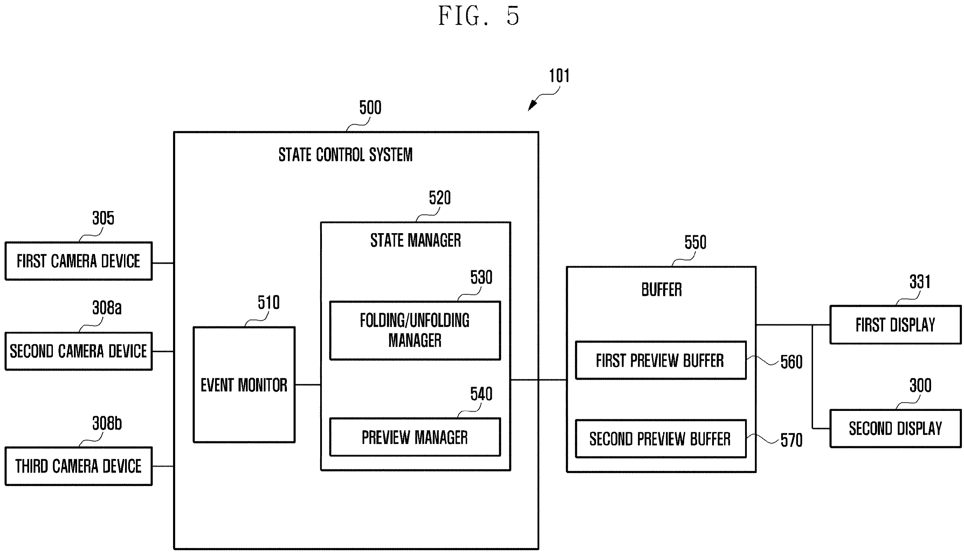

FIG. 5 is a view schematically showing a configuration of an electronic device according to various embodiments.

For example, FIG. 5 may illustrate an embodiment of a state control system 500 which executes (or processes) a function associated with controlling a camera device (e.g., the first camera device 305 (or a front camera device) or the second camera device 308 (or a rear camera device)) and/or the display 210 (e.g., the first display 331 (or a sub-display) or the second display 300 (or a main display or flexible display)), according to a state change of the display 210 in the electronic device 101 according to various embodiments.

In various embodiments, the state control system 500 may be included as a hardware module in at least one processor (e.g., the processor 120 of FIG. 1) including a processing circuitry, or may be include as a software module. According to an embodiment, the state control system 500 according to the embodiment illustrated in FIG. 5 may be driven as a part of the processor 120, or may be a separate hardware configuration operated independently from the processor 120. According to an embodiment, the state control system 500 according to the embodiment illustrated in FIG. 5 may be a software (e.g., the program 140 of FIG. 1). For example, the state control system 500 of the form of software may be stored in the form of instructions in a memory (e.g., the memory 130 of FIG. 1), and the operations of the state control system 500 may be executed by at least one processor (e.g., the processor 120 of FIG. 1).

Referring to FIG. 5, the electronic device 101 may include camera devices 305, 308a, and 308b, a state control system 500, a buffer 550, and displays 300 and 331.

According to an embodiment, the camera devices 305, 308a, and 308b may include a first camera device 305 (e.g., a front camera device), a second camera device 308a (e.g., a first rear camera device), and/or a third camera device 308b (e.g., a second rear camera device). According to some embodiments, the electronic device 101 may include N number of camera devices, which are at least three. The camera devices 305, 308a, 308b, for example, may be configured to have camera devices in which the second camera device 308a and/or the third camera device 308b has a specification higher than the first camera device 305 such that various preview angles of view and/or camera resolutions are expressed based on the screen size and/or the screen resolution of the displays 300 and 331 on which a preview is provided. According to an embodiment, the second camera device 308a and/or the third camera device 308b may be arranged such that a wide-angle lens, an ultra-wide-angle lens, and/or a telephoto lens thereof are positioned on one surface of the electronic device 101. For example, the second camera device 308a and/or the third camera device 308b may be configured to operate as a camera for the purpose of giving a specific effect such as Bokeh, out-focusing, wide-angle, and/or telephoto photographing. According to an embodiment, the electronic device 101 may have one or more additional cameras arranged on the rear surface thereof so as to provide various camera photographing experiences to a user.

According to an embodiment, the first display 331 may be configured to operate as a sub-display of the electronic device 101. According to an embodiment, the first display 331 may be configured to receive an image, which is obtained from the camera devices 305, 308a, and 308b and delivered through a designated buffer (e.g., the first preview buffer 560 (or a sub-preview buffer)), so as to display a preview. According to an embodiment, the first display 331 may be configured to replace the display function of the second display 300 when the electronic device 101 is in a folded state. According to some embodiments, when the electronic device 101 is in an unfolded state, the first display 331 may be configured to display an image in which at least a portion of a preview displayed through the second display 300 is cropped or an image in which a preview is resized (e.g., reduced), independently or simultaneously with the second display 300.

According to an embodiment, the second display 300 may be configured to operate as a main display of the electronic device 101. According to an embodiment, the second display 300 may be configured to receive an image, which is obtained from the camera devices 305, 308a, and 308b and delivered through a designated buffer (e.g., the second preview buffer 570 (or a main preview buffer)), so as to display a preview. According to an embodiment, the second display 300 may be configured to operate in an unfolded state, a folded state, or an intermediate state, based on a folding axis (e.g., axis A of FIG. 3A to FIG. 4B). According to an embodiment, the second display 300 may be configured to operate in an off-state when the electronic device 101 is in a folded state. According to an embodiment, when the electronic device 101 is in an unfolded state, the second display 300 may be configured to perform a display function corresponding the unfolded state. According to an embodiment, when the electronic device 101 is in an intermediate state, the second display 300 may be configured to perform a display function corresponding the intermediate state.

According to an embodiment, the buffer 550 may include a first preview buffer 560 which receives an image obtained from the camera device 305, 308a, and 308b so as to provide a preview for the first display 331, and a second preview buffer 570 which receives an image obtained from the camera devices 305, 308a, and 308b so as to provide a preview for the second display 300. According to some embodiments, the buffer 550 may include a shared buffer in which the first preview buffer 560 and the second preview buffer 570 are integrated with each other, in order to simultaneously output a multi-display and for quick mode conversion.

According to an embodiment, the state control system 500 may be configured to control the camera devices 305, 308a, and 308b, the displays 300 and 331, and/or operations associated with photographing using the camera devices 305, 308a, and 308b, based on physical properties in which the electronic device 101 is folded or unfolded. According to an embodiment, according to state changes such as a folded state, an unfolded state, or an intermediate state of the electronic device 101 (e.g., the second display 300), the state control system 500 may be configured to execute (or process) functions associated with controlling the camera devices 305, 308a, and 308b and/or the display 210 (e.g., the first display 331 or the second display 300).

According to an embodiment, the state control system 500 may include an event monitor 510 and/or a state manager 520.

According to an embodiment, the event monitor 510 may be configured to monitor a folded state, an unfolded state, or an intermediate state of the electronic device 101, based on at least one state detection sensor (e.g., the sensor module 176 of FIG. 1) of the electronic device 101. According to an embodiment, for example, the state detection sensor may include at least one of a proximity sensor, an illuminance sensor, a magnetic sensor, a hall sensor, a gesture sensor, a bending sensor, an infrared sensor, a touch sensor, a pressure sensor, a gyro sensor, an angle sensor, a grip sensor, and/ or an infrared camera, or a combination thereof. According to an embodiment, the state detection sensor may be positioned at a side (e.g., a folding axis, the end of a housing, the lower (e.g., under a panel) end of the display 210, and/or the bezel of the display 210) of the electronic device 101 so as to measure the unfolding (or folding) angle of the electronic device 101. The unfolding angle may indicate an angle in which two display surfaces (or a housing) divided by the folding axis (e.g., the axis A of FIG. 3A to FIG. 4B) of the electronic device 101 make with the folding axis.

According to an embodiment, the event monitor 510 may be configured to measure the unfolding angle so as to identify whether the electronic device 101 is a fully folded state (e.g., a folded state), a fully unfolded state (e.g., an unfolded state), or an unfolded (or folded) state at a predetermined angle (e.g., an intermediate state). For example, when the unfolding angle is about 180 degrees or an angle close thereto, the event monitor 510 may be configured to determine that the display 210 of the electronic device 101 is fully unfolded (e.g., an unfolded state). For another example, when the unfolding angle is about 0 degree or an angle close thereto, the event monitor 510 may be configured to determine that the display 210 of the electronic device 201 is fully folded (e.g., a folded state). For another example, when the unfolding angle is about 90 degrees or an angle (e.g., about 80 degrees - 100 degrees) close thereto, the event monitor 510 may be configured to determine that the display 210 of the electronic device 101 is unfolded (or folded) to an intermediate degree (e.g., an intermediate state).

According to various embodiments, based on data obtained from at least one sensor of state detection sensors, when the measured unfolding angle is within a predesignated angle range, the event monitor 510 may be configured to determine that the display 210 of the electronic device 101 is folded, bent, or unfolded to a predetermined degree. According to an embodiment, the event monitor 510 may be configured to provide the monitoring result (e.g., state information (or trigger) associated with an unfolded state, a folded state, or an intermediate state of the electronic device 101) to the state manager 520.

According to an embodiment, the event monitor 510 may be configured to monitor an event associated with the turn-on or turn-off of the first display 331 while the preview of an image obtained from the camera devices 305, 308a, and 308b, which are operating, is displayed through the second display 300. For example, the event monitor 510 may be configured to monitor an on-event of the first display 331 while a preview is displayed through a second display 300, or to monitor an off-event of the first display 331 while a preview is simultaneously displayed through the first display 331 and the second display 300. According to an embodiment, the event monitor 510 may be configured to provide the monitoring result (e.g., state information (or a trigger) associated with an on- or off-event) to the state manager 520.

According to an embodiment, the state manger 520 may be configured to control the camera devices 305, 308a, and 308b, the displays 300 and 331, and/or operations associated with photographing using the camera devices 305, 308a, and 308b, based on the trigger provided from the event monitor 510. According to an embodiment, the state manger 520 may include a folding/unfolding manager 530 and/or a preview manager 540.

According to an embodiment, the folding/unfolding manager 530 may be configured to treat the camera device 305, 308a, and 308b and/or the displays 300 and 331 of the electronic device 101 as an event corresponding to according to a state (e.g., an unfolded state, a folded state, or an intermediate state) or a state change of the electronic device 101, so as to provide a user with a seamless user experience for using the camera devices 305, 308a, and 308b through efficient camera mode conversion and error handling.

According to an embodiment, based on the trigger of the event monitor 510, the folding/unfolding manager 530 may be configured to control operations of the camera device 305, 308a, and 308b and/or operations of the displays 300 and 331, in an unfolded state, a folded state, or an intermediate state of the electronic device 101. According to an embodiment, the folding/unfolding manager 530 may be configured to identify a state change from an unfolded state to a folded state or an intermediate state, and/or a state change from a folded state to an unfolded state or an intermediate state of the electronic device 101, based on the trigger of the event monitor 510, and may be configured to control operations of the camera devices 305, 308a, and 308b and/or operations of the displays 300 and 331, based on the identified state change.

For example, when a state change of the electronic device 101, the folding/unfolding manager 530 may be configured to control the camera devices 305, 308a, and 308b in operation without restarting an application (e.g., an camera application) in operation so as to control preview interruption, preview loading entry time delay, errors of the camera devices 305, 308a, and 308b, and/or application error, which occurs in a state change of the electronic device 101, thereby providing continuity to the user in the experience of using the application. For another example, based on a state change of the electronic device 101, the folding/unfolding manager 530 may be configured such that the camera devices 305, 308a, and 308b in operation operate in a front camera mode (e.g., a selfie mode) or in a rear camera mode. As an example, the folding/unfolding manager 530 may be configured such that a rear camera device (e.g., the second camera device 308a and/or the third camera device 308b) operates in a front camera mode through a front camera configuration, or operates in a rear camera mode through a rear camera configuration. According to an embodiment, during the process of proceeding the execution of the camera devices 305, 308a, and 308b according to a user input in the electronic device 101 and/or while being executed, the folding/unfolding manager 530 may be configured to continuously monitor a Folded State change, and when the Folded State is changed and interrupt control is required, may be configured to output the Folded State through a call back.

According to an embodiment, the folding/unfolding manager 530 may be configured to receive parameters such as camera resolution, a camera identifier (ID), and/or configuration information from the event monitor 510 (or the camera devices 305, 308a, and 308b), and to receive information on the currently used (or currently connected) camera devices 305, 308a, and 308b. According to an embodiment, the folding/unfolding manager 530 may be configured to receive screen resolution from the event monitor 510 (or the displays 300 and 331) and/or information on the currently used (or currently connected) displays 300 and 331.

According to an embodiment, based on the state information (e.g., the trigger associated with an unfolded state, a folded state, or an intermediate state, or a state change trigger) received from the event monitor 510, the folding/unfolding manager 530 may be configured to set attributes (or options) of required camera device 305, 308a, or 308b and/or displays 300 and 331, and to process required tasks by using the camera connection information of currently connected camera devices 305, 308a, and 308b. For example, the folding/unfolding manager 530 may be configured to set the attributes of the currently connected camera device so as to respond to the state change thereof in a state of maintaining an application (e.g., a camera application) without restarting same, thereby providing a seamless camera control to a user.

<Table 1> below may show an example for explaining parameters for seamless control of the camera devices 305, 308a, and 308b in the folding/unfolding manager 520.

**[Table 1]**

| |
|---|
| ```
 Class CameraFoldStateManager{
     boolean mFoldStateEnabled // Folded State call back enable variable
     boolean mIsFolded // current folded state
     void enable()
     void setFoldStateEnabled(boolean enable) // folded state enable configuration
     void registerListener(FoldStateListener listener) // call back registration
     void notifyFoldStateChanged(boolean isFolded) // function to send call back
 ... }
 interface FoldStateListener {
     void onFoldStateChanged(boolean isFolded) // function for call back
 }
 Class HardwareCameraConnection {
     int mConnectionState //current connection information (ex. Prepareing,
     starting, previewing ...)
     void onFoldStateChanged(boolean isFolded) // processing according to
``` |
| ```
     Folded State and connection state
 }
 Class CameraPreviewConnection{
     int mCaptureState // current capture state information (ex. capturing, start,
     stop, pause, recording ...)
     void onFoldStateChanged(boolean isFolded) //processing according to
     Folded State and capture state }
 Class ParameterControl {
     int mCameraId; // camera information in use
     int mDisplayId // screen information in use
     int mResolution // camera resolution in use
     void onFoldStateChanged(boolean isFolded) // set parameters according to
     Folded State
 }
``` |

As shown in <Table 1>, the folding/unfolding manager 530 may inform a required portion of each portion of a current Folded State in the form of a call back. It may be to inform a required portion of each portion of a current Folded State in the form of a call back. For example, the portion, in which the Folded State is required, may be a connection control (e.g., the HardwareCameraConnection control in <Table 1>) portion of the camera device 305, 308a, and 308b, a preview control (e.g., the CameraPreviewConnection control in <Table 1>) portion of the camera devices 305, 308a, and 308b, and a parameter control (e.g., the ParameterControl in <Table 1>) portion of the camera devices 305, 308a, and 308b, and the folding/unfolding manager 530 may be configured to receive the Folded State and apply same to a required portion in the form of a call back. According to an embodiment, when the Folded State change is sensed in a registered call back, the folding/unfolding manager 530 may be configured to inform the corresponding control portion of a call back. After checking the current Folded State, the folding/unfolding manager 530 may be configured to apply at least one of required parameters (e.g., a camera parameters), a camera identifier (e.g., a Camera ID), and/or a display identifier (e.g., a display ID) so as to accord to the current Folded State.

According to an embodiment, when a state change of the electronic device 101 is identified by the event monitor 510, the folding/unfolding manager 530 may be configured to identify attributes (e.g., camera resolution, standard, wide angle, telephoto, and/or a special photographing effect) of the connected camera devices 305, 308a, and 308b, and/or attributes (e.g., a screen size and/or screen resolution) of the connected displays 300 and 331. For example, the folding/unfolding manager 530 may be configured to check the camera connection state of the currently connected camera devices 305, 308a, and 308b and/or a preview state so as to control a preview through the attribute of a corresponding camera device 305, 308a, or 308b and/or associated displays 300 and 331.

According to an embodiment, based on the intermediate state of the electronic device 101, the folding/unfolding manager 530 may be configured to control the camera devices 305, 308a, and 308b of the electronic device 101, a position of a preview displayed on the second display 300, and/or a layout, thereby providing an optimized user experience according to the intermediate state.

According to an embodiment, while the camera devices 305, 308a, and 308b operates, based on the trigger associated with an intermediate state (e.g., a flex mode or a table mode) from the event monitor 510, the folding/unfolding manager 530 may be configured to divide the area of the second display 300 into two areas having a first area and a second area, based on a folding axis (e.g., the axis A of FIG. 3A to FIG. 4B). According to an embodiment, the folding/unfolding manager 530 may be configured to set the first area as a preview area for a preview, and to set the second area different from the first area as a sub-area (e.g., a control area, a review area, a sub preview area, or a rear preview area) associated with a preview.

According to an embodiment, the folding/unfolding manager 530 may be configured to reset and provide a layout optimized for each area at the time of a state change from an unfolded state to an intermediate state of the electronic device 101. For example, when state information according to the change to an intermediate state is delivered from the event monitor 510, based on a preview change of the camera devices 305, 308a, and 308b according to the state change, the folding/unfolding manager 530 may be configured to automatically provide attribute changes of the camera devices 305, 308a, and 308b, thereby providing an optimized user experience even in the status of the state change to the intermediate state. According to an embodiment, for example, the attribute change of the camera devices 305, 308a, and 308b may include the size and position of attributes such as a preview, a focus (or focusing area) positioned on a preview, a tracking object, an ROI (e.g., a touch input position), and/or an effect application area.

For example, <Table 2> below may show an example of explaining parameters for controlling the camera devices 305, 308a, and 308b and/or a display (e.g., the second display 300) according to an intermediate state of the electronic device 101 in the folding/unfolding manager 520.

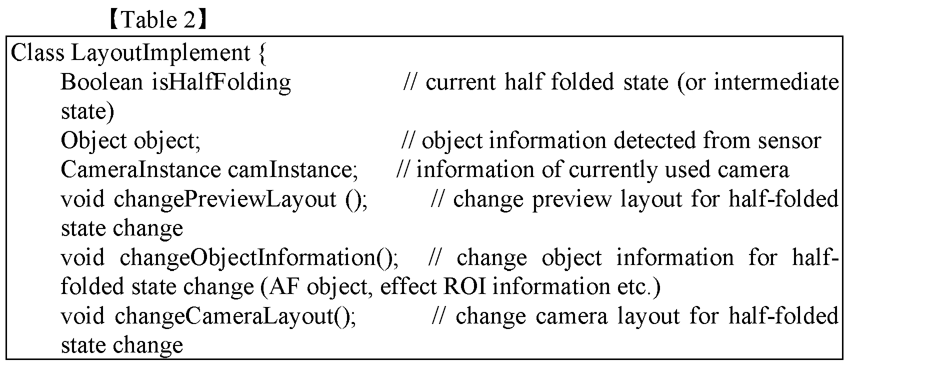

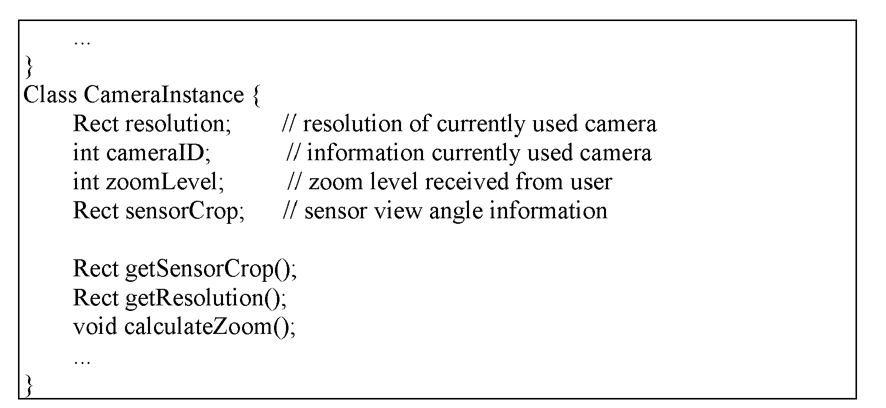

As shown in <Table 2>, <Table 2> may show an example for explaining parameters for providing a user experience according to an intermediate state (or a half-folded state) of the electronic device 101. Referring to <Table 2>, a LayoutImplement class for preview control may receive and process required parameters through information of the camera devices 305, 308a, and 308b and/or object information sensed from a sensor (e.g., the camera devices 305, 308a, and 308b). For example, the parameters of each class may include camera resolution, a camera identifier, and/or position information on a recognized object.

According to an embodiment, while a camera function is executed in an unfolded state, the folding/unfolding manager 530 may be configured to identify a state change to an intermediate state, based on the trigger of the event monitor 510. The folding/unfolding manager 530 may be configured to maintain the attributes (e.g., the position of focus positioned on a preview, a zoom in/out level input by a user, a zoom position input by a user, preview resolution, and/or ratio information) of the connected camera devices 305, 308a, and 308b, based on a state change, and to adjust a preview and a layout so as to respond to a new user experience according to the intermediate state, thereby providing the preview as it is in an existing configuration state to a user.

According to an embodiment, the folding/unfolding manager 530 may be configured to divide (separate) a display (e.g., the second display 300) into two areas (e.g., a first area and a second area) with reference to a folding portion (e.g., a folding axis) in an intermediate state, and to provide the two divided areas as separate areas according to a predetermined purpose. For example, the folding/unfolding manager 530 may be configured to provide the first area and the second area as a preview area and a control area, a preview area and a review area, a preview area and a sub-preview area, or a preview area and a rear preview area. According to an embodiment, the folding/unfolding manager 530 may be configured to newly calculate the attributes (e.g., a Focus ROI, a tracking object ROI, an effect, a recognition area, and/or information associated with the position and size of a user input) of the camera devices 305, 308a, and 308b in use, so as to correspond to the changed preview, and configured to update related configuration information.

According to an embodiment, the folding/unfolding manager 530 may be configured to provide a preview as it is in the existing configuration state (e.g., the configuration state in an unfolded state) through the divided first area (or the second area) by using the updated configuration information. The folding/unfolding manager 530 may be configured to set and provide a layout (e.g., a layout according to a designated sub-area associated with a preview) required for use of the camera devices 305, 308a, and 308b through the divided second area (or first area). According to an embodiment, when a state change from an intermediate state to an unfolded state, the folding/unfolding manager 530 may be configured to set a display (e.g., the second display 300) one area back so as to configure a preview and a layout, to update the configuration information in the same method as when the change to the intermediate state, and to provide a preview as it is in the existing configuration state by using the updated configuration information.

According to an embodiment, the preview manager 540 may be configured to execute (or process) the function associated with controlling such that a preview of a currently connected camera device (e.g., 305, 308a, or 308b) is individually displayed on the first display 331 or the second display 300, or is simultaneously displayed on the first display 331 and the second display 300. According to an embodiment, when the first display 331 and the second display 300 are simultaneously controlled while the camera devices 305, 308a are 308b are executed, the preview manager 540 may be configured to provide a seamless preview of the second display 300. According to an embodiment, while the camera device 305, 308a, and 308b is executed, the preview manager 540 may be configured to provide, to the first display 331, preview display, sub-preview display associated with a preview of the second display 300, and/or operation information (e.g., timer count, the presence or absence of palm detection, and/or video recording time) associated with the camera devices 305, 308a, and 308b.

According to an embodiment, when the preview of an image obtained from the camera devices 305, 308a, and 308b is displayed, the preview manager 540 may be configured to display a preview through the currently connected (or activated) displays 300 and 331, based on a folded state, an unfolded state, or an intermediate state of the electronic device 101. For example, the preview manager 540 may be configured such that a preview of a camera device (e.g., the first rear camera device 308a and/or the second rear camera device 308b) is displayed through the first display 331 in a folded state of the electronic device 101, and may be configured such that a preview of a camera device (e.g., the front camera device 305, the first rear camera device 308a, and/or the second rear camera device 308b) is displayed through the second display 300 in an unfolded state or an intermediate state of the electronic device 101.

According to an embodiment, the preview manager 540 may be configured to simultaneously displaying a preview of the camera devices 305, 308a, and 308b on the first display 331 and the second display 300, based on the trigger of the event monitor 510 in an unfolded state of the electronic device 101. According to an embodiment, in an unfolded state of the electronic device 101, the preview manager 540 may be configured to deliver the image, which is obtained from the camera devices 305, 308a, and 308b, to the second display 300 through the second preview buffer 570, and to display a preview through the second display 300.

According to an embodiment, while a preview is displayed through the second display 300, the preview manager 540 may be configured to deliver the image, which is obtained from the camera devices 305, 308a, and 308b, to the first display 331 through the first preview buffer 560, and to display a preview through the first display 331. According to an embodiment, the preview manager 540 may be configured to display an image in which at least a portion of a preview displayed through the second display 300 is cropped or an image in which a preview is resized (e.g., reduced), simultaneously with a preview of the second display 300 through the first display 331.

According to an embodiment, while a preview is displayed through the second display 300 in an unfolded state of the electronic device 101, the preview manager 540 may be configured to provide an interface (or object) (e.g., a software button or a toggle button) capable of generating an on/off event of the first display 331. According to an embodiment, the preview manager 540 may be configured to receive a trigger according to the on/off event of the first display 331, based on the interface, from the event monitor 510 so as to control the on/off of the first display 331. According to some embodiments, an interface capable of generating an on/off event of the first display 331 may be provided as a physical button (e.g., a hardware key (e.g., the key input device 306)).

According to an embodiment, when an on-event of the first display 331 is delivered from the event monitor 510 while a preview is displayed through the second display 300 according to the execution of the camera devices 305, 308a, and 308b, the preview manager 540 may be configured to perform turn-on-control on the first display 331 (e.g., to supply power to the first display 331) and thus to display a preview on the first display 331 at the same time. According to an embodiment, when an off-event of the first display 331 is delivered from the event monitor 510 while a preview is simultaneously displayed on the first display 331 and the second display 300, the preview manager 540 may be configured to perform turn-off-control on the first display 331 (e.g., to cut off power to the first display 331) and thus to display a preview only on the second display 300 without displaying the preview on the first display 331. According to an embodiment, when a preview is displayed on the first display 331, the preview manager 540 may be configured to also control the display of operation information (e.g., information such as timer count, presence or absence of palm detection, and/or video recording time) associated with operations of the camera devices 305, 308a, and 308b, which may can be displayed on the first display 331.

An electronic device 101 according to various embodiments of the disclosure may include a camera device 305 or 308, a first display 331, a second display 300, and a processor 120, wherein the processor 120 may be configured to identify a state of the electronic device 101, based on the execution of the camera device, identify a display operating in response to an operation mode of the camera device and the execution of the camera device, based on a state of the electronic device 101, update a configuration of the camera device, at least based on an operation mode of the camera device and the identified display, and display, through the identified display, a preview obtained based on the updated configuration from the camera device.

According to various embodiments, the processor 120 may be configured to determine the camera device as a first operation mode in a first state of the electronic device 101, establish a connection of the first display, based on the determination as the first operation mode, update a configuration of the camera device, at least based on the first operation mode and an attribute of the first display, and deliver, to the first display, preview data obtained based on the updated configuration from the camera device so as to display a preview through the first display.

According to various embodiments, the processor 120 may be configured to monitor a state change of the electronic device 101, and perform a correction for each process of the camera device, based on the state change of the electronic device.

According to various embodiments, the processor 120 may be configured to sense a state change of the electronic device 101 in at least one proceeding process of a process of connecting the camera device, a preview loading process in the connection state of the camera device, and an image photographing process, perform at least one of a disconnection of the camera device, a configuration refresh of the camera device, and/or a connection operation of the camera device, based on the process in which a change is sensed, and display, through a corresponding display, a preview corrected according to a new configuration corresponding to a state change from the camera device after reconnection of the camera device.

According to various embodiments, the processor 120 may be configured to determine the camera device as a second operation mode in a second state of the electronic device 101, establish a connection of the second display, based on the determination as the second operation mode, update a configuration of the camera device, at least based on the second operation mode and an attribute of the second display, and deliver, to the second display, preview data obtained based on the updated configuration from the camera device so as to display a preview through the second display.

According to various embodiments, the processor 120 may be configured to determine the camera device as a third operation mode in a third state of the electronic device 101, based on the determination as the third operation mode, update a configuration of the camera device, at least based on the third operation mode and an attribute of the second display connected in the third operation mode, and deliver, to the second display, preview data obtained based on the updated configuration from the camera device so as to display a preview through a designated partial area of the second display.

According to various embodiments, the processor 120 may be configured to divide the second display into a first area and a second area with reference to a folding axis, based on the determination as the third operation mode, provide the first area as a preview area for a preview of the camera device, and provide the second area as a sub-area associated with the preview.

According to various embodiments, the sub-area may be changed to have another layout, based on an operation of the camera device.

According to various embodiments, the processor 120 may be configured to update a configuration of the camera device so as to correspond to an attribute of the first area of the second display.

According to various embodiments, the processor 120 may be configured to provide a layout associated with an interface, which non-interacts with a user, to the first area, and provide a layout associated with an interface, which interacts with a user, to the second area.

According to various embodiments, the processor 120 may be configured to identify a layout associated with a sub-area configured in the second area, based on a preview state of the first area or a user configuration state, provide a first user interface including the preview through the first area, and provide a second user interface including operation information corresponding to a sub-area designated through the second area.

According to various embodiments, the processor 120 may be configured to establish a connection of another display while a preview is displayed through the identified display, based on a trigger for a multi-preview display, and simultaneously display a preview through the display and said another display.

According to various embodiments, the processor 120 may be configured to sense a trigger for a multi-preview display while a main preview is displayed through the second display in a second state of the electronic device 101, obtain a sub-preview for the first display from the main preview of the second display, and display the main preview through the second display and simultaneously display the sub-preview through the first display.

According to various embodiments, the processor 120 may be configured to generate the sub-preview, at least based on an image in which at least a portion of the main preview displayed through the second display is cropped, or an image in which the main preview displayed through the second display is resized.

According to various embodiments, the processor 120 may be configured to sense a trigger for displaying the multi-preview, based on a user input using a software interface, a physical interface, a voice interface, and/or a gesture interface capable of generating an on/off event of the first display.

According to various embodiments including the processor 120, the first display may be disposed on the rear surface of the electronic device, configured to display a preview of the camera device in a folded state of the electronic device, and configured to selectively display a preview according to an operation mode of the camera device in an unfolded state or an intermediate state of the electronic device, the second display may include a flexible display disposed on the front surface the electronic device and folded, bent, or unfolded around a designated folding axis, and may be configured to display a preview of the camera device in an unfolded state or an intermediate state of the electronic device, and the first display and the second display may be configured to operate with screen sizes and/or screen resolutions different from each other.

Hereinafter, an operation method of the electronic device 101 of various embodiments will be described in detail. According to various embodiments, the operations performed in the electronic device 101 to be described below may be executed by at least one processor (e.g., the processor 120 of FIG. 1 and/or the state manager 520 of FIG. 5) (hereinafter, referred to as the 'processor 120') including at least one processing circuit of the electronic device 101. According to an embodiment, the operations performed in the electronic device 101 may be stored in a memory (e.g., the memory 130 of FIG. 1), and, when executed, may be executed by instructions which cause the processor 120 to operate.

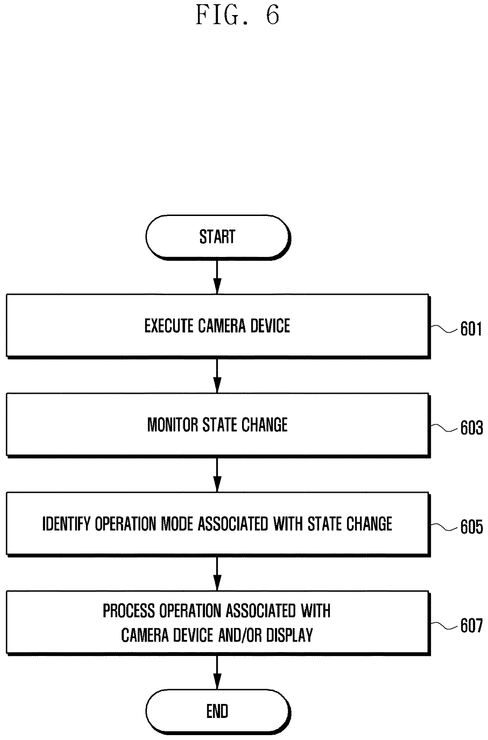

FIG. 6 is a flowchart illustrating an operation method of an electronic device according to various embodiments.

Referring to FIG. 6, in operation 601, the processor 120 of the electronic device 101 may be configured to execute a camera device (e.g., the front camera device 305 (or a first camera device 305)) or the rear camera device 308 (or the second camera device 308). According to an embodiment, in a folded state, an unfolded state, or an intermediate state of the electronic device 101, the processor 120 may be configured to execute the camera devices 305 and 308, based on a user input to execute the camera devices 305 and 308 of a user. For example, the processor 120 may be configured to identify the camera devices 305 and 308 corresponding to a user input, and to perform a camera connection of a corresponding camera device 305 or 308.

In operation 603, the processor 120 may be configured to monitor a state change of the electronic device 101, based on the execution of the camera devices 305 and 308. For example, the processor 120 may be configured to monitor whether the electronic device 101 is a folded state, an unfolded state, or an intermediate state, and to monitor a state change from any one state to another one state (e.g., a state change from a folded state to an unfolded state, a state change from an unfolded state to a folded state, or a state change from a folded or unfolded state to an intermediate state). According to an embodiment, the processor 120 may be configured to monitor a folded state, an unfolded state, or an intermediate state of the electronic device 101, based on at least one state detection sensor (e.g., the sensor module 176 of FIG. 1) of the electronic device 101. According to an embodiment, the processor 120 may be configured to measure, based on sensor data of the state detection sensor, an unfolding (folding) angle of the electronic device 101 so as to identify whether the electronic device 101 is in a fully folded state (e.g., a folded state), a fully unfolded state (e.g., an unfolded state), or an unfolded (or folded) state at a predetermined angle (e.g., an intermediate state). According to various embodiments, based on data obtained from at least one state detection sensor, when the measured unfolding angle is within a predesignated angle range, the processor 120 may be configured to determine that the display 210 (e.g., the second display 300) of the electronic device 101 is folded, bent, or unfolded to a predetermined degree.

In operation 605, the processor 120 may be configured to identify an operation mode associated with a state change. According to an embodiment, based on the state information or the state change information according to the monitoring result, the processor 120 may be configured to identify an operation mode associated with a control of the camera devices 305 and 308 and/or the displays 300 and 331. For example, the processor 120 may be configured to determine a first operation mode (e.g., a front camera mode or a selfie mode) of the camera device 308, based on a folded state of the electronic device 101, determine a second operation mode (e.g., a front or a rear camera mode, or a front and rear camera simultaneous mode) of the camera devices 305 and 308, based on an unfolded state of the electronic device 101, and determine a third operation mode (e.g., a camera mode based on a flex mode or a table mode) of the camera devices 305 and 308, based on an intermediate state of the electronic device 101.

In operation 607, the processor 120 may be configured to process an operation associated with the camera devices 305 and 308 and/or the displays 300 and 331, based on the identified operation mode. According to an embodiment, the processor 120 may be configured to update (or reset or reconfigure) the attribute of the camera devices 305 and 308 and/or the attribute of the displays 300 and 331 so as to correspond to the identified operation mode. According to various embodiments, a specific embodiment of processing operations associated with the camera devices 305 and 308 and/or the displays 300 and 331, based on a state or a state change of the electronic device 101, will be described with reference to the drawings to be described later.

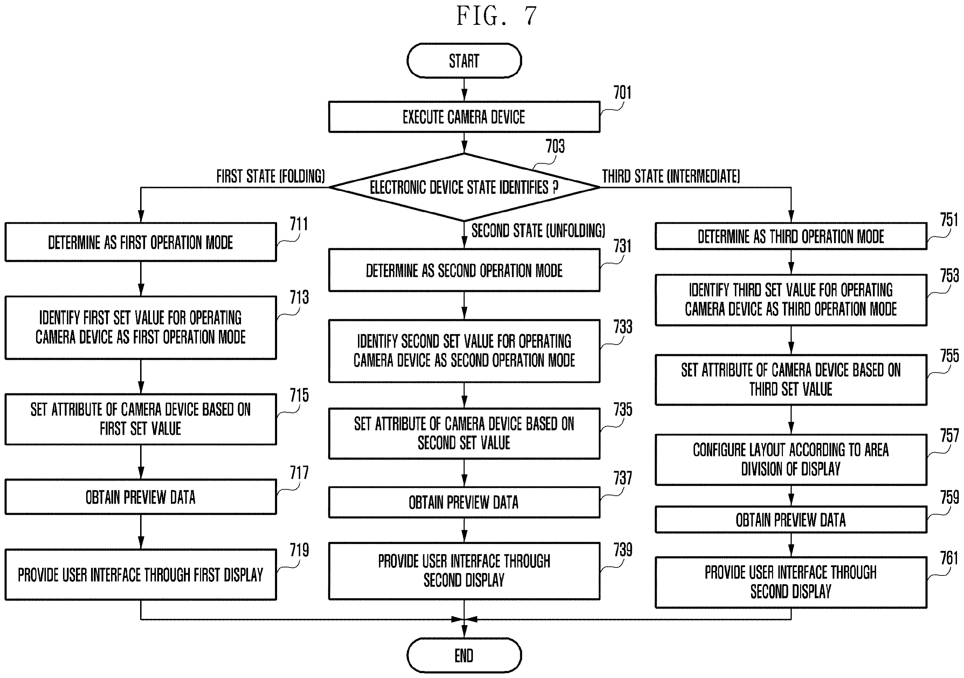

FIG. 7 is a flowchart illustrating an operation method of an electronic device according to various embodiments.

Referring to FIG. 7, in operation 701, the processor 120 of the electronic device 101 may be configured to execute a camera device (e.g., the rear camera device 308 or the second camera device 308). According to an embodiment, in a folded state, an unfolded state, or an intermediate state of the electronic device 101, the processor 120 may be configured to execute the camera device 308, based on a user input to execute the camera device 308 of a user. For example, the processor 120 may be configured to identify the camera device 308 corresponding to a user input, and to perform a camera connection of a corresponding camera device 308.

In operation 703, based on the execution of the camera device 308, the processor 120 may be configured to identify a state of the electronic device 101 (or the second display 300 of the electronic device 101). According to an embodiment, based on sensor data of a state detection sensor, the processor 120 may be configured to determine whether the electronic device 101 is a first state (e.g., a folded state), a second state (e.g., an unfolded state), or a third state (e.g., an intermediate state).

In operation 703, when a first state (e.g., a folded state) of the electronic device 101 is identified, the processor 120 may be configured to determine, in operation 711, a first operation mode designated as a mode for executing the camera device 308. According to an embodiment, for example, the first operation mode may include a state using the camera device 308 as a front camera mode (or a selfie mode). According to an embodiment, the processor 120 may be configured to execute the first display 331, based on the determination as the first operation mode of the camera device 308. For example, the processor 120 may be configured to perform a connection of the first display 331.

In operation 713, based on the determination as the first operation mode, the processor 120 may be configured to identify a first set value designated for configuring (or operating) such that the configuration of the camera device 308 corresponds to the first operation mode. For example, the first set value may include information (or parameters) (e.g., a camera resolution, standard, wide angle, telephoto, and/or a special effect) which is designated to output a preview optimized for the attribute (e.g., a screen size and/or a screen resolution) of a display (e.g., the first display 331) to which the camera device 308 is currently connected in the first operation mode. For example, the first set value may include a set value for operating the camera device 308 in a front camera mode (or a selfie mode).

In operation 715, the processor 120 may be configured to set an attribution (or option) of the camera device 308, based on the first set value. For example, the processor 120 may be configured to update an attribute (e.g., a camera resolution, standard, wide-angle, telephoto, and/or a special effect) of the currently connected camera device 308 into the first set value designated to operate in the first operation mode.

In operation 717, the processor 120 may be configured to obtain preview data from the camera device 308. According to an embodiment, the processor 120 may be configured to deliver the image, which is obtained from the camera device 308, to a designated buffer (e.g., the first preview buffer 560).

In operation 719, the processor 120 may be configured to provide a user interface through the currently connected first display 331. According to an embodiment, the processor 120 may be configured to display a preview generated in the first preview buffer 560 through the first display 331, and to provide related operation information (e.g., timer count, presence or absence of palm detection, and/or video recording time). For example, the first display 331 may be configured to receive preview data obtained from the camera device 308 through the first preview buffer 560 and then to display the preview.

In operation 703, when identifying the second state (e.g., an unfolded state) of the electronic device 101, the processor 120 may be configured to determine, in operation 731, a second operation mode designated as a mode for executing the camera device 308. According to an embodiment, for example, the second operation mode may include a state using the camera device 308 as a rear camera mode. According to an embodiment, the processor 120 may be configured to execute the second display 300, based on the determination as the second operation mode of the camera device 308. For example, the processor 120 may be configured to perform a connection of the second display 300.

In operation 733, based on the determination as the second operation mode, the processor 120 may be configured to identify a second set value designated for configuring (or operating) such that the configuration of the camera device 308 corresponds to the second operation mode. For example, the second set value may include information (or parameters) (e.g., a camera resolution, standard, wide angle, telephoto, and/or a special effect) which is designated to output a preview optimized for the attribute (e.g., a screen size and/or a screen resolution) of a display (e.g., the second display 300) to which the camera device 308 is currently connected in the second operation mode. For example, the second set value may include a set value for operating the camera device 308 in a rear camera mode.

In operation 735, the processor 120 may be configured to set an attribution (or option) of the camera device 308, based on the second set value. For example, the processor 120 may be configured to update an attribute (e.g., a camera resolution, standard, wide-angle, telephoto, and/or a special effect) of the currently connected camera device 308 into the second set value designated to operate in the second operation mode.

In operation 737, the processor 120 may be configured to obtain preview data from the camera device 308. According to an embodiment, the processor 120 may be configured to deliver the image, which is obtained from the camera device 308, to a designated buffer (e.g., the second preview buffer 570).

In operation 739, the processor 120 may be configured to provide a user interface through the currently connected second display 300. According to an embodiment, the processor 120 may be configured to display the preview generated in the second preview buffer 570 through the second display 300, and to provide related operation information (e.g., timer count, presence or absence of palm detection, option configuration information, menu object, photographing object, and/or video recording time). For example, the second display 300 may be configured to receive preview data obtained from the camera device 308 through the second preview buffer 570 and then to display the preview.

In operation 703, when identifying the third state (e.g., an intermediate state) of the electronic device 101, the processor 120 may be configured to determine, in operation 751, a third operation mode designated as a mode for executing the camera device 308. According to an embodiment, for example, the third operation mode may include a state in which the camera device 308 operates in a rear camera mode (or a front camera mode by the front camera device 305 according to a user configuration of the electronic device 101) and the electronic device 101 is used in a table mode (or a flex mode). According to an embodiment, the processor 120 may be configured to execute the second display 300, based on the determination as the third operation mode of the camera device 308. For example, the processor 120 may be configured to perform a connection of the second display 300. According to some embodiments, in an intermediate state, the second display 300 may be an already connected state (e.g., a state in use).

According to some embodiments, based on that a state of the electronic device 101 is changed from a first state (e.g., a folded state) to a third state (e.g., an intermediate state) or from a second state (e.g., an unfolded state) to a third state (e.g., an intermediate state), the currently connected camera devices 305 and 308 and displays 300 and 331 may be different. For example, when the state change from a first state to a third state, the currently connected (or used) device may be the second camera device 308 (e.g., a rear camera device) and the first display 331. For another example, when the state change from the second state to the third state, the device currently connected (or used) may be the first camera device 305 (e.g., a front camera device) or the second camera device 308 (e.g., a rear camera device) and the second display 300 according to a camera device used by the user.

In operation 753, based on the determination as the third operation mode, the processor 120 may be configured to identify a third set value designated for configuring (or operating) such that the configuration of the camera device 308 corresponds to the third operation mode. For example, the third set value may include information (or parameters) (e.g., a camera resolution, standard, wide angle, telephoto, and/or s special effect) which is designated to output a preview optimized for the attribute (e.g., a screen size and/or a screen resolution) of a display (e.g., the second display 300) to which the camera device 308 is currently connected in the third operation mode. For example, the third set value may include a set value for operating the camera device 308 in a rear camera mode, and may include a configuration which is the same as or similar to the second set value. According to some embodiments, the third set value may include a set value (e.g., a fourth set value) different depending on whether the currently connected camera device is the first camera device 305 (e.g., a front camera device) or the second camera device 308 (e.g., a rear camera device).

In operation 755, the processor 120 may be configured to set an attribution (or option) of the camera device 308, based on the third set value. For example, the processor 120 may be configured to update an attribute (e.g., a camera resolution, standard, wide-angle, telephoto, and/or a special effect) of the currently connected camera device 308 into the third set value designated to operate in the third operation mode.

In operation 757, the processor 120 may be configured to configure a layout according to an area division of the second display 300. According to an embodiment, the processor 120 may be configured to divide (or separate) the area of the second display 300 into a first area and a second area with reference to a folding axis (e.g., the axis A of FIG. 3A to FIG. 4B), provide the first area (or the second area) as a preview area for a preview, and provide the second area (or the first area) as a sub-area (e.g., a control area, a review area, a sub-preview area, or a rear preview area) associated with a preview. For example, the processor 120 may be configured to provide the first area and the second area as a preview area and a control area, a preview area and a review area, a preview area and a sub-preview area, or a preview area and a rear preview area. According to an embodiment, the processor 120 may be configured to calculate attributes (e.g., Focus ROI, tracking object ROI, effect, a recognition area, and/or information related to the position and size of a user input) of the camera devices 308, 308a, and 308b so as to correspond to the changed preview, and to update related configuration information also. For example, the processor 120 may be configured to provide a preview as it is in the existing configuration state (e.g., the configuration state in an unfolded state) through the divided first area by using the updated configuration information.

In operation 759, the processor 120 may be configured to obtain preview data from the camera device 308. According to an embodiment, the processor 120 may be configured to deliver the image, which is obtained from the camera device 308, to a designated buffer (e.g., the second preview buffer 570).

In operation 761, the processor 120 may be configured to provide a user interface through the currently connected second display 300. According to an embodiment, the processor 120 may be configured to display the preview generated in the second preview buffer 570 through a preview area (e.g., the first area or the second area) of the second display 300, and to display related operation information through a sub-area (e.g., the second area or the first area) of the second display 300. For example, the second display 300 may be configured to receive preview data obtained from the camera device 308 through the second preview buffer 570, and then to display as a preview through the first area or the second area.

According to various embodiments, while a preview is displayed through the connected second display 300 in the unfolded state or the intermediate state of the electronic device 101, the processor 120 may be configured to connect the first display 331, and to perform an operation in which a preview is simultaneously displayed through the first display 331 and the second display 300.

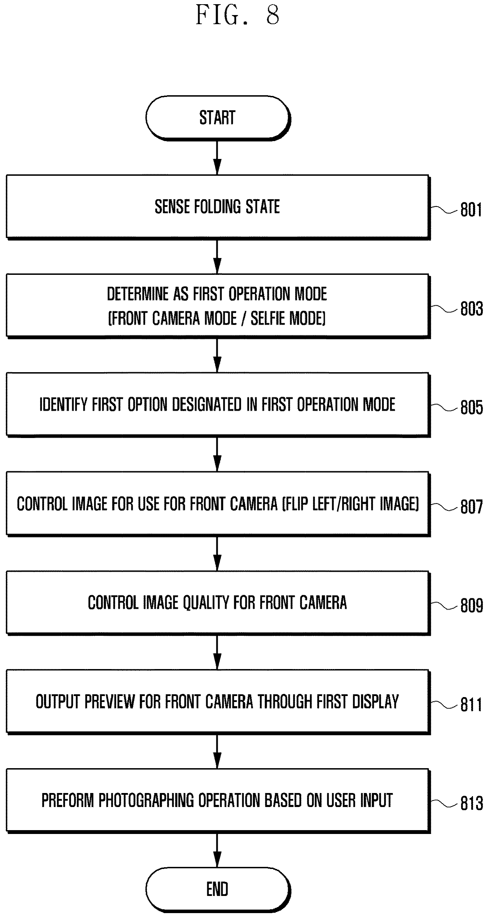

FIG. 8 is a flowchart illustrating an operation method of an electronic device according to various embodiments.

According to an embodiment, FIG. 8 may illustrate an example in which the electronic device 101 operates in a front camera mode (or a selfie mode) through a configuration used for the front camera, by using the rear camera device 308 (e.g., the second camera device 308) in the folded state.

Referring to FIG. 8, in operation 801, the processor 120 of the electronic device 101 may be configured to sense a folded state of the electronic device 101. For example, the processor 120 may configured to identify a state of the electronic device 101, based on a trigger for executing the camera device 308, and to determine the folded state of the electronic device 101, based on the identification result.

In operation 803, the processor 120 may be configured to determine a first operation mode designated as a mode for executing the camera device 308, based on the detection of the folded state. According to an embodiment, for example, the first operation mode may include a state using the camera device 308 as the front camera mode (or the selfie mode). According to an embodiment, the processor 120 may be configured to connect the first display 331, based on the determination as the first operation mode of the camera device 308.

In operation 805, the processor 120 may be configured to identify a first option designated in the first operation mode. For example, the processor 120 may be configured to identify the first option designated for using the camera device 308 as the use of the front camera. For example, the first option may include various set values (e.g., a timer, flash, flip, beauty, brightness, focusing(AF), effect, and/or quality) for the use for a front camera of the camera device 308.

In operation 807, the processor 120 may be configured to perform an image control for the use for a front camera, based on the identified first option. For example, the processor 120 may be configured to control (e.g., an image sensor control) the camera device 308 such that the camera device 308 operates according to the first operation mode so as to flip the left and right sides (or to flip left/right 180 degrees) of an image.

In operation 809, the processor 120 may be configured to perform an image quality control for a front camera, based on the identified first option. For example, the processor 120 may be configured to perform at least one image quality control such as a beauty level, a brightness level, AF, front image quality tuning, a photographing effect, and/or face distortion correction according to a set value set to correspond to the first operation mode. According to various embodiments, operation 807 and operation 809 may not be limited to the illustrated order, and operation 807 and operation 809 may be performed sequentially, in parallel, in reverse order, or heuristically.

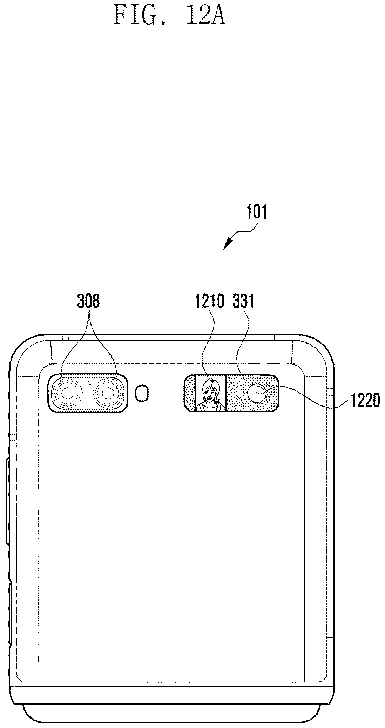

In operation 811, the processor 120 may be configured to output a preview for a front camera through the first display 331. According to an embodiment, the processor 120 may be configured to provide a preview in which the preview data obtained from the camera device 308 is controlled to have an image and quality corresponding to a front camera, through the first display 331. The example thereof is illustrated in FIG. 12A to be described later.

In operation 813, the processor 120 may be configured to perform a photographing operation, based on a user input. For example, the processor 120 may be configured to, based on a user input associated with image or moving image photographing, perform a photographing operation, based on the controlled image and image quality.

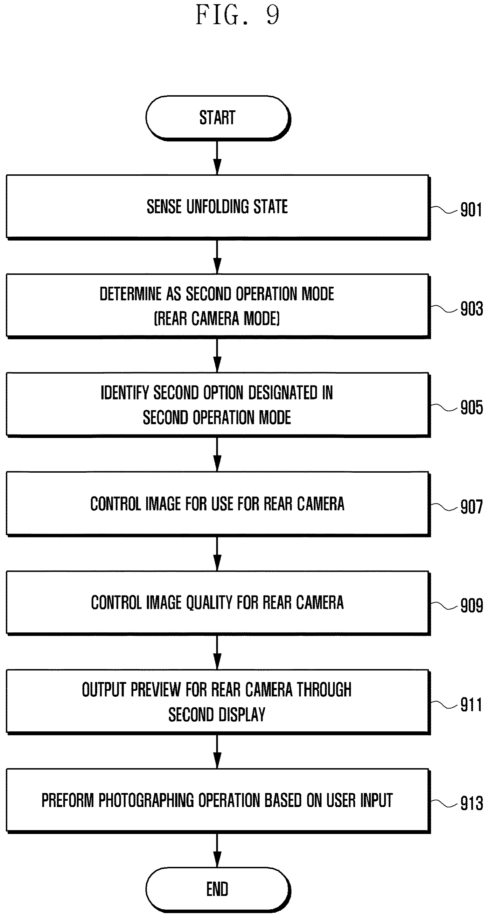

FIG. 9 is a flowchart illustrating an operation method of an electronic device according to various embodiments.

According to an embodiment, FIG. 9 may illustrate an example in which the electronic device 101 operates in a rear camera mode through a configuration used for the rear camera, by using the rear camera device 308 (e.g., the second camera device 308) in the unfolded state.

Referring to FIG. 9, in operation 901, the processor 120 of the electronic device 101 may be configured to sense an unfolded state of the electronic device 101. For example, the processor 120 may configured to identify a state of the electronic device 101, based on a trigger for executing the camera device 308, and to determine the unfolded state of the electronic device 101, based on the identification result.

In operation 903, the processor 120 may be configured to determine the second operation mode designated as a mode for executing the camera device 308, based on the detection of the unfolded state. According to an embodiment, for example, the second operation mode may include a state using the camera device 308 as a rear camera mode. According to an embodiment, the processor 120 may be configured to connect the second display 300, based on the determination as the second operation mode of the camera device 308.

In operation 905, the processor 120 may be configured to identify a second option designated in the second operation mode. For example, the processor 120 may be configured to identify the second option designated for using the camera device 308 as the use of a rear camera. For example, the second option may include various set values (e.g., a timer, flash, beauty, brightness, focusing(AF), effect, and/or quality) for used for the rear camera of the camera device 308.

In operation 907, the processor 120 may be configured to perform an image control for the use for the rear camera, based on the identified second option. For example, the processor 120 may be configured to control (e.g., an image sensor control) the camera device 308 such that the camera device 308 operates according to the second operation mode, so as to control an image control without left/right flip (or left/right 180 degrees flip).

In operation 909, the processor 120 may be configured to perform an image quality control for a rear camera, based on the identified second option. For example, the processor 120 may be configured to perform at least one image quality control such as a beauty level, a brightness level, AF, front image quality tuning, a photographing effect, and/or face distortion correction according to a set value set to correspond to the second operation mode. According to various embodiments, operation 907 and operation 909 may not be limited to the illustrated order, and operation 907 and operation 909 may be performed sequentially, in parallel, in reverse order, or heuristically.

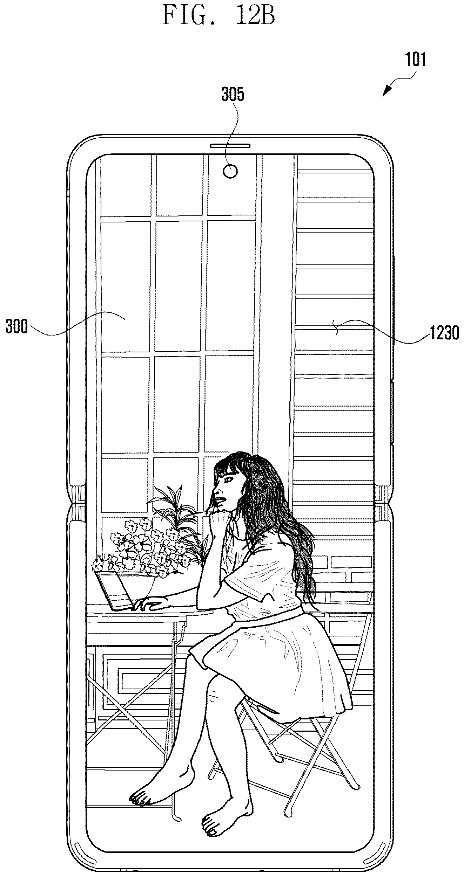

In operation 911, the processor 120 may be configured to output a preview for a rear camera through the second display 300. According to an embodiment, the processor 120 may be configured to provide a preview in which the preview data obtained from the camera device 308 is controlled to have an image and quality corresponding to a rear camera, through the second display 300. The example thereof is illustrated in FIG. 12B to be described later.

In operation 913, the processor 120 may be configured to perform a photographing operation, based on a user input. For example, the processor 120 may be configured to, based on a user input associated with image or moving image photographing, perform a photographing operation, based on the controlled image and image quality.

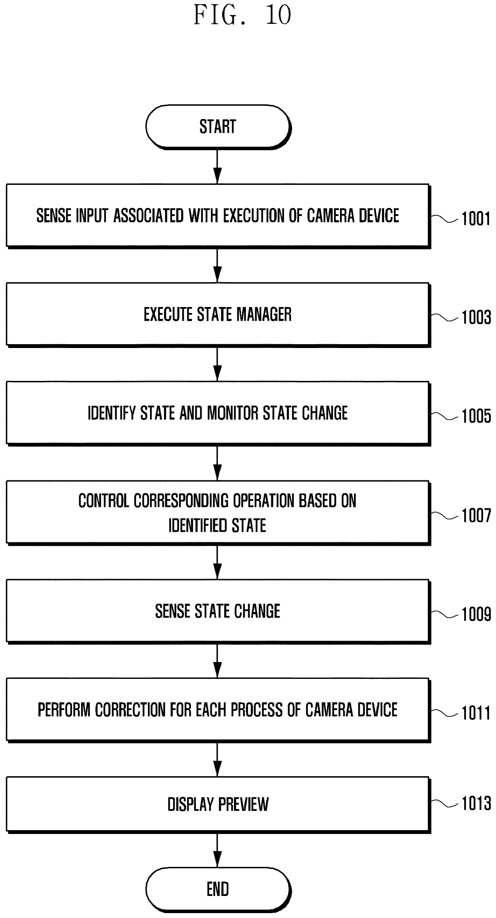

FIG. 10 is a flowchart illustrating an operation method of an electronic device according to various embodiments.

According to an embodiment, FIG. 10 may illustrate an example in which the configuration of the camera device 308 is corrected according to a state change of the electronic device 101 while the camera device 308 (e.g., a rear camera device) is executed in the folded or unfolded state of the electronic device 101.

Referring to FIG. 10, in operation 1001, the processor 120 of the electronic device 101 may be configured to sense a user input associated with the camera device 308.

In operation 1003, the processor 120 may be configured to execute the state manager 520, based on a user input for executing the camera device 308. According to an embodiment, the state manager 520 may be configured to monitor a state and a state change of the electronic device 101, and to control the camera devices 305 and 308, the displays 300 and 331, and/or operations associated with photographing using camera devices 305 and 308, based on a state or a state change of the electronic device 101. According to an embodiment, the camera device 308, in operation 1003, may be in a state before being connected, and after operation 1003, it may mean a process until the camera device 308 is actually connected (or activated).

In operation 1005, the processor 120 may be configured to identify a state and/or monitor a state change of the electronic device 101, based on the state manager 520.

In operation 1007, the processor 120 may be configured to control a corresponding operation, based on the identified state of the electronic device 101. According to an embodiment, the processor 120 may be configured to start the operation of the above-described FIG. 8, based on the folded state, or to start the operation of the above-described FIG. 9, based on the unfolded state. For example, the processor 120, by using the camera device 308, may be configured to operate in the front camera mode through a front camera configuration, or to operate in the rear camera mode through the rear camera configuration. According to various embodiments, the processor 120 may be configured to start operations corresponding to a state of the electronic device 101, and while the processes corresponding to the corresponding operations is sequentially proceeded, based on the state manager 520, may be configured to continuously monitor a state change of the electronic device 101.

In operation 1009, while operations corresponding to a state of the electronic device 101 are controlled, based on the monitoring of the state manager 520, the processor 120 may be configured to sense a state change of the electronic device 101. For example, the processor 120 may be configured to sense a state change from the first state (e.g., the folded state) to the second state (e.g., the unfolded state), a state change from the first state (e.g., the folded state) to the third state (e.g., the intermediate state), or a state change from the second state (e.g., the unfolded state) or the third state (e.g., the intermediate state) to the first state (e.g., the folded state) of the electronic device 101.

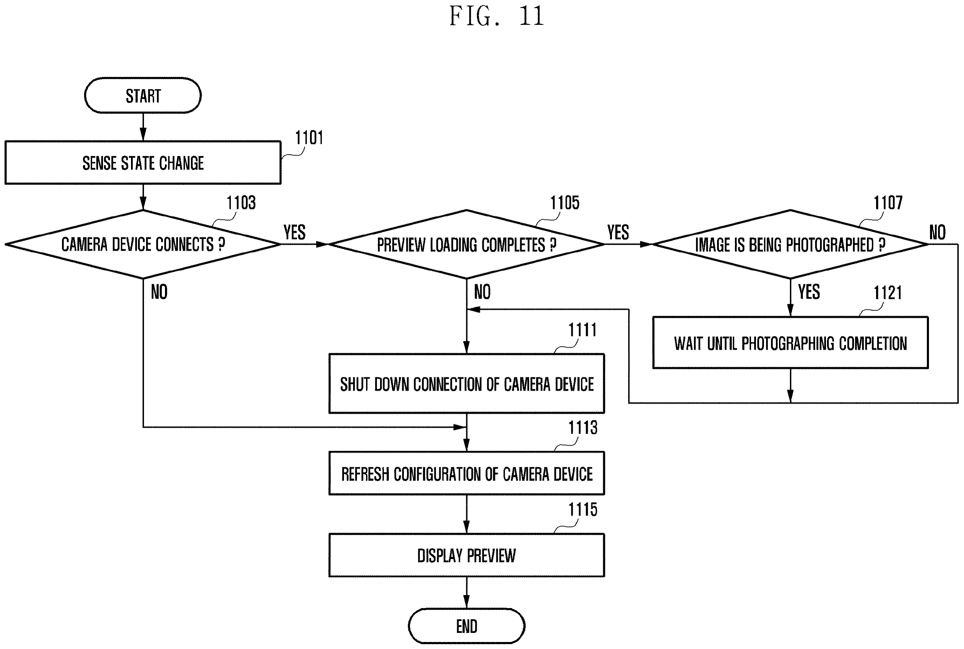

In operation 1011, the processor 120 may be configured to perform a correction for each process of the camera device 308, based on the detection of a state change of the electronic device 101. According to an embodiment, the processor 120 may be configured to continuously monitor a state change through the state manager 520 during the process of proceeding the execution of the camera device 308 and/or while being executed, and may be configured to inform a required portion of a current state change through a call back when an interrupt control is required according to a state change. For example, the portion, in which a call back is required, may be a connection control (e.g., the HardwareCameraConnection control in <Table 1>) portion of the camera device 308, a preview control (e.g., the CameraPreviewConnection control in <Table 1>) portion of the camera device 308, and a parameter control (e.g., the ParameterControl in <Table 1>) portion of the camera device 308, and the processor 120 may be configured to inform a required portion of a state change in the form of a call back. According to an embodiment, the processor 120, through a correction for each process, may be configured to set (update) a configuration (e.g., at least one of parameters (e.g., camera parameters), a camera identifier (e.g., a Camera ID), and/or a display identifier (e.g., a display ID)) of the camera device 308 so as to correspond to the changed current state. According to an embodiment, after the camera device 308 is corrected to a configuration corresponding to a state change, the processor 120 may be configured to provide a corresponding preview through an image and/or an image quality control, based on the configuration according to the correction. According to an embodiment, in connection with the correction for each process, it will be described with reference to FIG. 11 described later.

In operation 1013, the processor 120 may be configured to control such that a preview is displayed through a designated display. According to an embodiment, the processor 120 may be configured to display a preview individually on the first display 331 or the second display 300, or simultaneously on the first display 331 and the second display 300. According to an embodiment, the processor 120 may be configured to disconnect the connection of the first display 331 and connect the second display 300 when a state of the electronic device 101 is changed from the first state to the second state or the third state, so as to control such that a preview is displayed through the second display 300. According to another embodiment, the processor 120 may be configured to maintain the connection of the first display 331 and connect the second display 300 when a state change from the first state to the second state or the third state, so as to control such that a preview is simultaneously displayed through the first display 331 and the second display 300.

According to another embodiment, the processor 120 may be configured to disconnect the connection of the first display 300 and connect the first display 331 when a state of the electronic device 101 is changed from the second state to the first, so as to control such that a preview is displayed through the first display 331. According to another embodiment, the processor 120 may be configured to maintain the connection of the second display 300 when a state change from the second state to the third state, so as to control such that a preview is displayed through the second display 300. According to another embodiment, the processor 120 may be configured to maintain the connection of the second display 300 and connect the first display 331 when a state change from the second state to the third state, so as to control such that a preview is simultaneously displayed through the first display 331 and the second display 300.

FIG. 11 is a flowchart illustrating an operation method of an electronic device according to various embodiments.

According to an embodiment, FIG. 11 may illustrate an example in which a correction for each process of the camera device 308 is performed in the process of proceeding the execution of the camera device 308, based on the detection of a state change.

Referring to FIG. 11, in operation 1101, the processor 120 of the electronic device 101 may be configured to sense a state change of the electronic device 101.

In operation 1103, the processor 120 may be configured to determine whether the camera device 308 is connected, based on the detection of a state change. For example, based on a user input, when a state change is sensed in the process of proceeding the execution of the camera device 308, the processor 120 may be configured to identify whether the camera device 308 is in a substantially connected (or activated) state.

In operation 1103, when the camera device 308 is in a disconnected state (e.g., 'NO' in operation 1103), the processor 120, in operation 1113, may be configured to refresh the configuration (to reset the parameters) of the camera device 308. For example, when a state change occurs while the camera device 308 is connected (or before being connected), the processor 120 may be configured to perform a connection (e.g., the hardware camera connection) of the camera device 308 by using a new configuration corresponding to the state change.

In operation 1103, when the camera device 308 is in the connected state (e.g., 'YES' in operation 1103), the processor 120 may be determined whether preview loading is complete, in operation 1105. For example, when a state change occurs in the state in which the camera device 308 is connected, the processor 120 may be configured to identify whether the preview loading by the currently connected camera device 308 has been completed.

In operation 1105, when the loading of a preview is not completed (e.g., 'NO' in operation 1105), the processor 120 may be configured to shut down (or disconnect) the connection of the camera device 308, in operation 1111. According to an embodiment, when a state change occurs during preview loading, the processor 120 may be configured to disconnect (e.g., a hardware camera disconnection) the connection of the currently connected camera device 308.

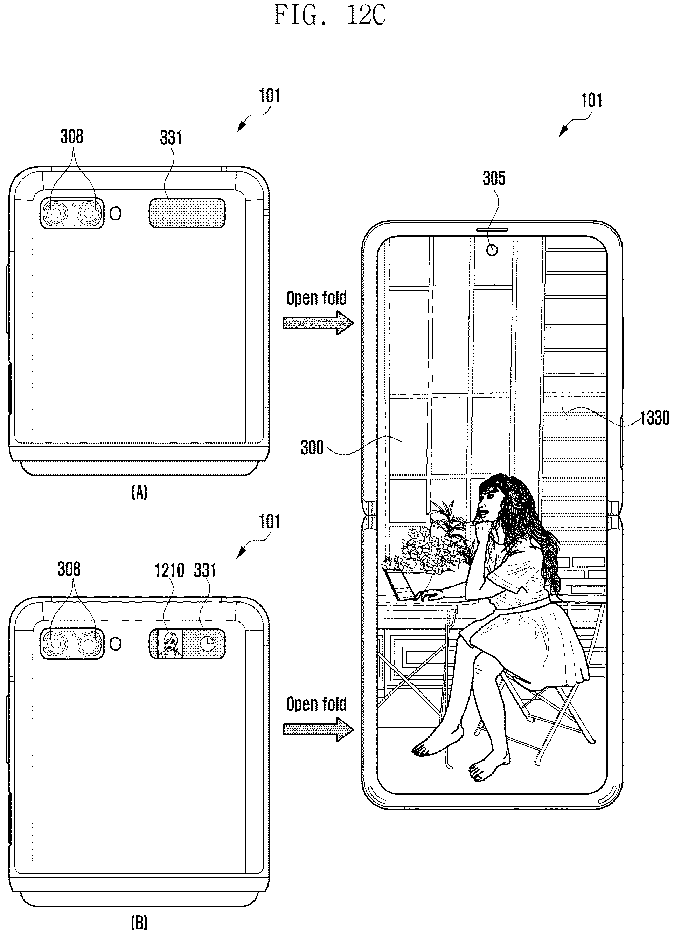

In operation 1113, the processor 120 may be configured to refresh the configuration (or to reset the parameters) of the camera device 308. For example, when a state change occurs during preview loading, the processor 120 may be configured to perform a connection (e.g., the hardware camera connection) of the camera device 308 by using a new configuration corresponding to the state change after disconnecting the camera device 308. The example thereof is illustrated in Example A of FIG. 12C to be described later.

In operation 1105, when preview loading is completed (e.g., 'YES' in operation 1105), the processor 120 may be configured to determine whether image photographing is being performed, in operation 1107. For example, when a state change occurs in a state in which preview loading is completed, the processor 120 may be configured to identify whether image photographing is being performed by the currently connected camera device 308.

In operation 1107, when image photographing is not being performed (e.g., 'NO' in operation 1107), the processor 120 may be configured to proceed to operation 1111, and then to perform the operations following operation 1111.

In operation 1107, when image photographing is being performed (e.g., 'YES' in operation 1107), the processor 120 may be configured to wait until the photographing is completed, in operation 1121. According to an embodiment, when an image (e.g., picture or moving image) is being photographed by the currently connected camera device 308, the processor 120 may be configured to wait until the photographing is completed without immediately shutting down the connection of the camera device 308, and then to store the photographed photographing data in a memory (e.g., the memory 130 of FIG. 1).

In operation 1111, the processor 120 may be configured to shut down (or disconnect) the connection of the camera device 308. According to an embodiment, when a state change occurs during image photographing, the processor 120 may be configured to store the photographing data taken so far (or until now) without immediately shutting down the connection of the camera device 308, and then to perform disconnection (e.g., the hardware camera disconnection) of the camera device 308. According to an embodiment, the processor 120 may be configured to proceed to operation 1113 after the disconnection of the camera device 308, and then to perform the operations following operation 1113. The example thereof is illustrated in Example B of FIG. 12C to be described later.

In operation 1115, after operation 1113, the processor 120 may be configured to display a preview, based on preview data obtained according to a new configuration corresponding to a state change from the camera device 308.

FIG. 12A, FIG. 12B, and FIG. 12C are views for explaining examples in which a camera device and a display operate in an electronic device according to various embodiments.

Referring to FIG. 12A, FIG. 12A may illustrate an example in which the electronic device 101 operates in the front camera mode (or a selfie mode) used for the front camera by using the camera device 308 (e.g., at least one of the rear camera devices) in the folded state.

As illustrated in FIG. 12A, the electronic device 101 may be configured to output a preview 1210 for the front camera through the first display 331. According to an embodiment, the processor 120 may be configured to provide the preview 1210 in which the preview data obtained from the camera device 308 is controlled to have an image and quality corresponding to a front camera, through the first display 331. According to an embodiment, when the preview 1210 is displayed on the first display 331, the electronic device 101 may be configured to also provide operation information 1220 (e.g., information such as timer count, presence or absence of palm detection, and/or video recording time) associated with operations of the camera device 308, which can be displayed on the first display 331.

Referring to FIG. 12B, FIG. 12B may illustrate an example in which the electronic device 101 operates in the rear camera mode used for the rear camera by using the camera device 308 (e.g., at least one of the rear camera devices) in the unfolded state.

As illustrated in FIG. 12B, the electronic device 101 may be configured to output a preview 1230 for the rear camera through the second display 300. According to an embodiment, the electronic device 101 may be configured to provide the preview 1230 in which the preview data obtained from the camera device 308 is controlled to have an image and quality corresponding to a rear camera, through the second display 300. In FIG. 12B, the front camera device 305 (e.g., the first camera device 305) may be in a disconnected (or inactive) state.

Referring to FIG. 12C, FIG. 12C may illustrate an example of operating according to a state change from a folded state to an unfolded state of the electronic device 101 while the camera device 308 (e.g., at least one of the rear camera device) is loaded (e.g., loaded a preview) (e.g., Example A), or while photographing (e.g., selfie photographing) using the camera device 308 in a state where the camera device 308 (e.g., at least one of the rear camera devices) is connected (e.g., Example B). In FIG. 12C, the front camera device 305 (e.g., the first camera device 305) may be in a disconnected (or inactive) state.

Referring to Example A of FIG. 12C, Example A may be a state in which a preview is not displayed on the first display 331. For example, the electronic device 101 may be in a state of loading a preview in a state where the camera device 308 is connected, based on a user input (e.g., selfie photographing execution) in the folded state. According to an embodiment, when a state change to the unfolded state is sensed while loading a preview, the electronic device 101 may be configured to forcibly shut down the connection (e.g., the hardware camera connection) of the camera device 308. According to an embodiment, when a state change occurs during preview loading, the electronic device 101 may be configured to disconnect the connection (e.g., hardware camera disconnection) of the currently connected camera device 308, refresh the configuration (or to reset the parameters) of the camera device 308, and perform the connection (e.g., the hardware camera connection) of the camera device 308 by using a new configuration corresponding to the state change.

Referring to Example B of FIG. 12C, Example B may be a state in which a preview 1210 is being displayed on the first display 331. For example, the electronic device 101 may be a state where preview loading is completed after connecting the camera device 308 in the folded state, and image photographing is performed in response to a user input. According to an embodiment, when a state change to an unfolded state is sensed while photographing an image (e.g., a picture photo or a moving image) by the currently connected camera device 308, the electronic device 101 may be configured to perform disconnection (e.g., the hardware camera disconnection) of the camera device 308 after photographing is completed without immediately shutting down the connection of the camera device 308. Thereafter, the electronic device 101 may be configured to refresh the configuration (or to reset the parameters) of the camera device 308, and then to perform a connection (e.g., the hardware camera connection) of the camera device 308 by using a new configuration corresponding to the state change.

After the operation according to an Example A or Example B, the electronic device 101 may be configured to provide preview data obtained according to the new configuration corresponding to the state change from the camera device 308 as a preview 1330 through the second display 300.

According to various embodiments, the electronic device 101 may be configured to process the camera device 308 as an event according to a state or a state change of the electronic device 101, thereby providing an efficient camera mode-switching experience. According to an embodiment, when a state change from a folded state to an unfolded state occurs due to a user during the operation of the camera device 308, the electronic device 101 may be configured provide a user with a seamless camera use experience. For example, the electronic device 101 may be configured to control in advance an error which may occur according to a state change, thereby preventing an unexpected camera error and/or an application (e.g., a camera application) failure.

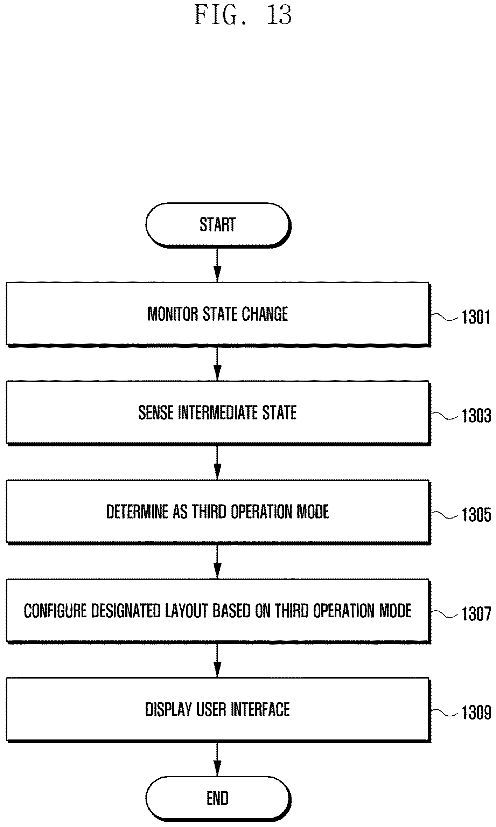

FIG. 13 is a flowchart illustrating an operation method of an electronic device according to various embodiments.

According to an embodiment, FIG. 13 may illustrate an example in which a user interface is provided according to the intermediate state of the electronic device 101 while the camera device 308 (e.g., the rear camera device) of the electronic device 101 is executed.

Referring to FIG. 13, in operation 1301, the processor 120 of the electronic device 101 may be configured to monitor a state change of the electronic device 101.

In operation 1303, the processor 120 may be configured to sense the intermediate state of the electronic device 101, based on the monitoring result.

In operation 1305, the processor 120 may be configured to determine the third operation mode designated as a mode for executing the camera device 308, based on the detection of the intermediate state. According to an embodiment, for example, the third operation mode may include a state in which the camera device 308 operates in a rear camera mode (or a front camera mode by the front camera device 305 according to a user configuration of the electronic device 101) and the electronic device 101 is used in a table mode (or a flex mode). According to an embodiment, the processor 120 may be configured to execute the second display 300, based on the determination as the third operation mode of the camera device 308. For example, the processor 120 may be configured to perform a connection of the second display 300. According to some embodiments, in an intermediate state, the second display 300 may be an already connected state (e.g., a state in use).

In operation 1307, the processor 120 may be configured to set a designated layout, based on the third operation mode. According to an embodiment, the processor 120 may be configured to configure a layout according to an area division of the second display 300. For example, the processor 120 may be configured to divide (or separate) the area of the second display 300 into a first area and a second area with reference to a folding axis (e.g., the axis A of FIG. 3A to FIG. 4B), provide one area (e.g., the first area or the second area) as a preview area for a preview, and provide the other area (or the second area or the first area) as a sub-area (e.g., a control area, a review area, a sub-preview area, or a rear preview area) associated with a preview.

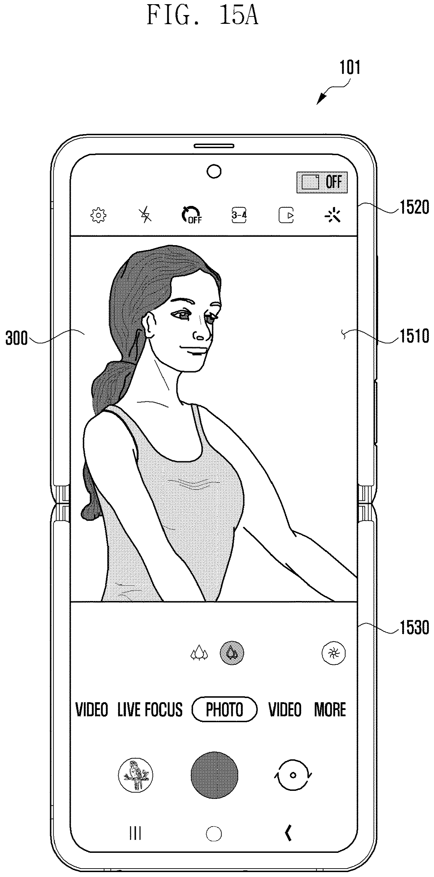

In operation 1309, the processor 120 may be configured to display a user interface. According to an embodiment, the processor 120 may be configured to provide the first area and the second area divided by the second display 300 as a preview area and a control area, a preview area and a review area, a preview area and a sub-preview area, or a preview area and a rear preview area. The example thereof is illustrated FIG. 15 A to FIG. 16E.

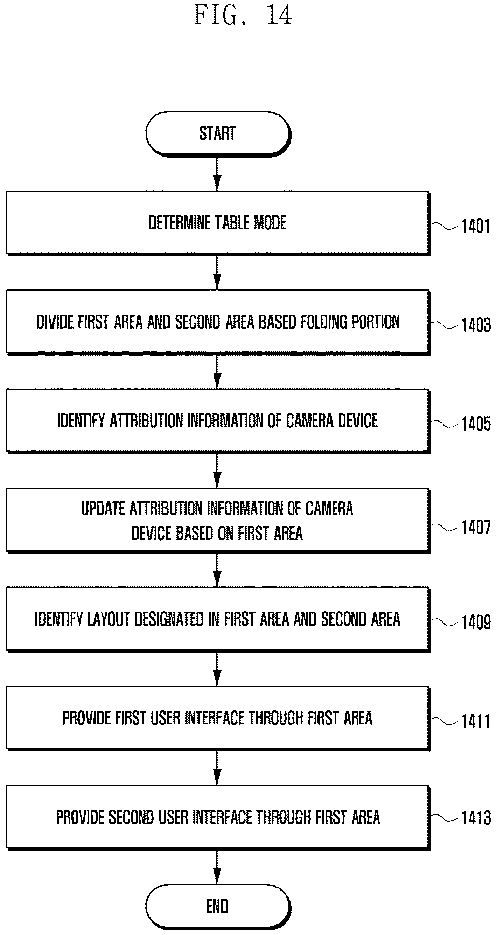

FIG. 14 is a flowchart illustrating an operation method of an electronic device according to various embodiments.

According to an embodiment, FIG. 14 may illustrate an example in which while the camera device 308 (e.g., the rear camera device) of the electronic device 101 is executed, the configuration associated with the execution of the camera device 308 is corrected and the layout of the display 300 is configured according to a state change (e.g., the intermediate state) of the electronic device 101.

Referring to FIG. 14, in operation 1401, the processor 120 of the electronic device 101 may be configured to determine a table mode (e.g., the third operation mode). According to an embodiment, while the camera device 308 is executed in the folded state or unfolded state of the electronic device 101, the processor 120 may be configured to identify a state change to the intermediate state of the electronic device 101, based on the state manager 520.

According to an embodiment, the processor 120 may be configured to execute the second display 300, based on the determination as the table mode of the camera device 308. For example, the processor 120 may be configured to perform a connection of the second display 300. According to some embodiments, in an intermediate state, the second display 300 may be an already connected state (e.g., a state in use). According to some embodiments, based on that a state of the electronic device 101 is changed from a first state (e.g., a folded state) to a third state (e.g., an intermediate state), or from a second state (e.g., an unfolded state) to a third state (e.g., an intermediate state), the currently connected camera device and display may be different. For example, when the state change from a first state to a third state, the currently connected (or used) device may be the second camera device 308 (e.g., a rear camera device) and the first display 331. For another example, when the state change from the second state to the third state, a currently connected (or used) device may be the first camera device 305 (e.g., a front camera device), or the second camera device 308 (e.g., a rear camera device) and the second display 300 according to the camera device used by the user.

In operation 1403, the processor 120 may be configured to divide the area of the second display 300 into a first area and a second area, based on a portion folded according to the intermediate state. According to an embodiment, the processor 120 may be configured to divide (separate) the second display 300 into two areas (e.g., the first area and the second area) with reference to a portion (e.g., a folding axis) folded in an intermediate state, and to provide same as separate areas according to a predetermined purpose. For example, the processor 120 may be configured to provide the first area and the second area as a preview area and a control area, a preview area and a review area, a preview area and a sub-preview area, or a preview area and a rear preview area.

In operation 1405, the processor 120 may be configured to identify attribute information of the camera device 308, based on the determination as the table mode of the electronic device 101. According to an embodiment, based on the determination as the table mode, the processor 120 may be configured to identify a designated set value for setting the configuration of the camera device 308 to correspond to the table mode, and an attribute (e.g., a screen size and/or a screen resolution) of a display (e.g., the second display 300), which can be used in the table mode.

In operation 1407, the processor 120 may be configured to update attribute (or option) information of the camera device 308, based on the first area for a preview. For example, the processor 120 may be configured to update attribute information so as to operate in a state where the attribute (e.g., a camera resolution, standard, wide-angle, telephoto, and/or a special effect) of the currently connected camera device 308 is optimized to the first area in the table mode. For example, the processor 120 may be configured to newly calculate the attributes (e.g., Focus ROI, tracking object ROI, effect, a recognition area, and/or information related to the position and size of a user input) of the camera devices 308 so as to correspond to a preview changed according to the first area, and then to update related configuration information.

According to an embodiment, the processor 120 may be configured to provide a preview as it is in the existing configuration state (e.g., the configuration state in the unfolded state) through the divided first area by using the updated configuration information. For example, the processor 120 may be configured to maintain the attributes (e.g., the position of focus positioned on a preview, a zoom in/out level input by a user, a zoom position input by a user, a preview resolution, and/or ratio information) of the camera device 308, and to adjust a preview and a layout so as to respond to a new user experience according to the intermediate state, thereby providing a preview as it is in an existing configuration state to a user.

In operation 1409, the processor 120 may be configured to identify a layout designated in the first area and the second area. According to an embodiment, it may be possible to identify a layout designated for the use of the camera device 308 through the first area and the second area. For example, based on a preview state of the first area (e.g., whether the effect is applied, or whether flipping) or a user configuration state, the processor 120 may be configured to identify a layout associated with a sub-area (e.g., a control area, a review area, a sub-preview area, or a rear preview area) configured in the second area. According to an embodiment, the processor 120 may be configured identify a designated layout, based on an interface (or an object) designated to be provided to the first area together with a preview and an interface (or an object) associated with the sub-area allocated to the second area.

In operation 1411, the processor 120 may be configured to provide a first user interface through the first area. According to an embodiment, the processor 120 may be configured to provide preview data, which is obtained from the camera device 308, through the first area of the second display 300.

In operation 1413, the processor 120 may be configured to provide a second user interface through the second area. According to an embodiment, the processor 120 may be configured to provide a user interface corresponding to the sub-area designated in the second area. According to an embodiment, the processor 120, according to the designated sub-area, may be configured to provide various operation information which are associated with the camera device 308 and/or a preview and included in a user interface. According to various embodiments, operation 1411 and operation 1413 may not be limited to the illustrated order, and operation 1411 and operation 1413 may be performed sequentially, in parallel, in reverse order, or heuristically.

According to various embodiments, while a preview is displayed through the connected second display 300 in the intermediate state of the electronic device 101, the processor 120 may be configured to connect the first display 331, and also perform an operation in which a preview is simultaneously displayed through the first display 331 and the second display 300.

According to various embodiments, when a state change from an intermediate state to an unfolded state, the processor 120 may be configured to set a display (e.g., the second display 300) to one area again so as to configure a preview and a layout, to update the configuration information in the same method as when the change to the intermediate state, and to provide a preview as it is in the existing configuration state by using the updated configuration information.

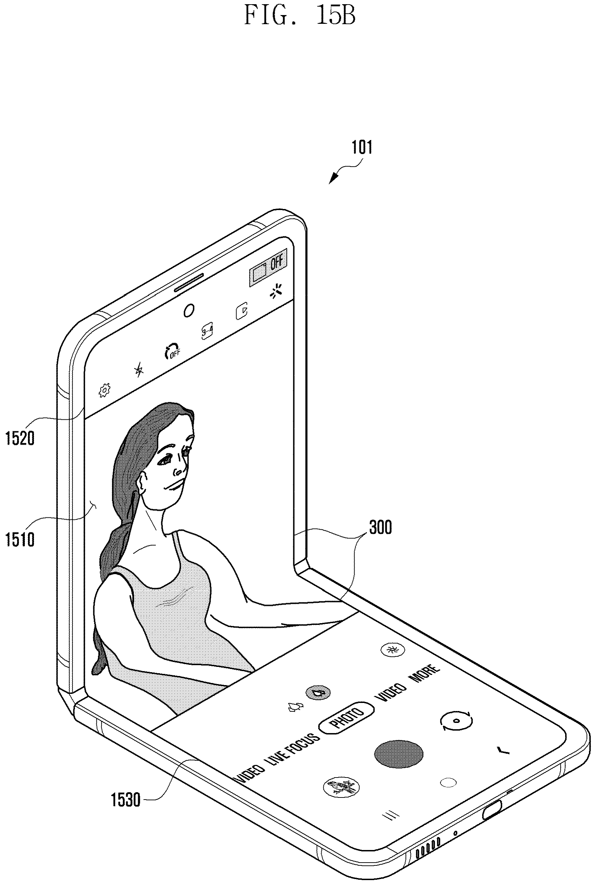

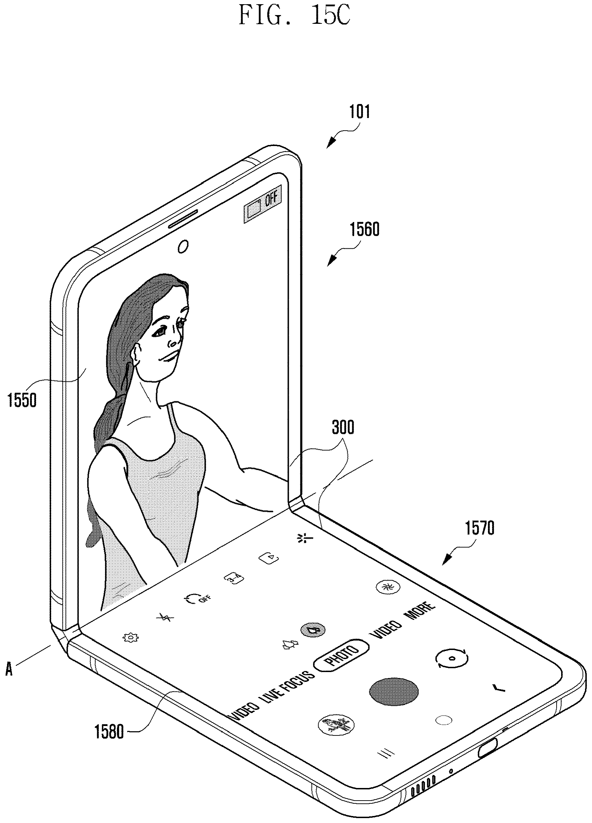

FIG. 15A, FIG. 15B, and FIG. 15C are views for explaining examples of operating in an intermediate state of an electronic device according to various embodiments.

Referring to FIG. 15A, FIG. 15A may illustrate an example of a state where a preview 1510 of preview data obtained through a camera device (the rear camera device 308 or the front camera device 305) in the unfolded state of the electronic device 101 is displayed through the display 300 (e.g., a main or flexible display).

As illustrated in FIG. 15A, the electronic device 101 may be configured to display a preview 1510 through a designated area (e.g., an area for a preview, which is set as a partial screen or a full screen of the display 300) of the display 300. According to an embodiment, the electronic device 101 may be configured to provide layouts 1520 and 1530 for various operation information (e.g., a timer count, presence or absence of palm detection, option setting information, menu object, photographing object, and/or video recording time) associated with the camera device 305 and 308 and/or the preview 1510 along with the preview 1510 through at least one designated area. According to an embodiment, the layouts 1520 and 1530 may be provided to be overlaid (or overlapped) on the preview 1510.

Referring to FIG. 15B, FIG. 15B may illustrate an example of providing the preview 1510 and the layouts 1520 and 1530 in the intermediate state when a state of the electronic device 101 is changed from the unfolded state to the intermediate state.

As illustrated in FIG. 15B, in the scheme of FIG. 15B, regardless of a state change to the intermediate state of the electronic device 101, the existing layout (e.g., the layout in the unfolded state of FIG. 15A) may be maintained as it is and provided. Accordingly, as in the example of FIG. 15B, a portion, in which at least a part of the screen of the preview 1510 is folded, may occur due to the maintenance of the existing layout. In addition, as in the example of FIG. 15B, as the layout 1520 associated with the manipulation of the camera devices 305 and 308 is provided to a non-fixed portion, according to a user input for configuring an option or function of the camera devices 305 and 308, it may occur shaking and/or movement of the electronic device 101. In this case, a user has inconvenience in forming a new composition such as fixing the electronic device 101 to the original position thereof.

Referring to FIG. 15C, FIG. 15C may illustrate an example of providing a preview 1550 and the layouts 1580 in the intermediate state when a state of the electronic device 101 according to various embodiments is changed from the unfolded state to the intermediate state.

As illustrated in FIG. 15C, according to various embodiments, the electronic device 101 may be configured to divide (or separate) the display 300 into a first area 1560 and a second area 1570 with reference to a portion (e.g., the folding axis A) folded in the intermediate state so as to provide as a preview area 1560 and a sub-area 1570, respectively. According to an embodiment, the electronic device 101 may be configured to control a position and/or a layout 1580 in which the preview 1550 of the camera devices 305 and 308 is displayed on the first area 1560 according to the division of the first area (or the preview area) 1560 and the second area (or the sub-area) 1570, thereby providing an optimized user experience in the intermediate state. According to an embodiment, the electronic device 101 may be configured to change the attribute of the camera devices 305 and 308 so as to correspond to the first area 1560. For example, the attribute change of the camera devices 305 and 308 may include the size and position of attributes such as a focus (or focusing area) positioned on a preview, tracking object, ROI (e.g., a touch input position), and/or an effect application area.

According to an embodiment, the electronic device 101 may be configured to provide the preview 1550 controlled according to the attribute change of the camera devices 305 and 308 through the first area 1560. For example, comparing the FIG. 15B and FIG. 15C, the preview 1550 may be adjusted and provided as a preview 1550 corresponding to the screen size of the first area 1560. According to an embodiment, the electronic device 101 may further include and provide a layout associated with an interface (e.g., information) which non-interacts (or does not interact with or requires no user input) with a user through the first area 1560. According to some embodiments, the first area 1560 and the second area 1570 may be configured to mutually switch (e.g., a position change) and provide displayed information (e.g., a preview and a layout) according to the use or purpose of a user of the electronic device 101.

According to an embodiment, the electronic device 101 may be configured to reconfigure the layout 1580 associated with the camera devices 305 and 308 and/or the preview 1550 and provide same through the second area 1570. For example, comparing FIG. 15B and FIG. 15C, by moving and disposing the layout 1520 of the FIG. 15B to the second area 1570, as in the example of the FIG. 15C, the layouts 1520 and 1530 may be provided as a layout 1580 in a form in which the layouts 1520 and 1530 are combined into one layout. According to an embodiment, the electronic device 101 may be configured to provide a layout associated with an interface (e.g., a software button) which interacts with a user (or requires a user input) through the second area 1570.

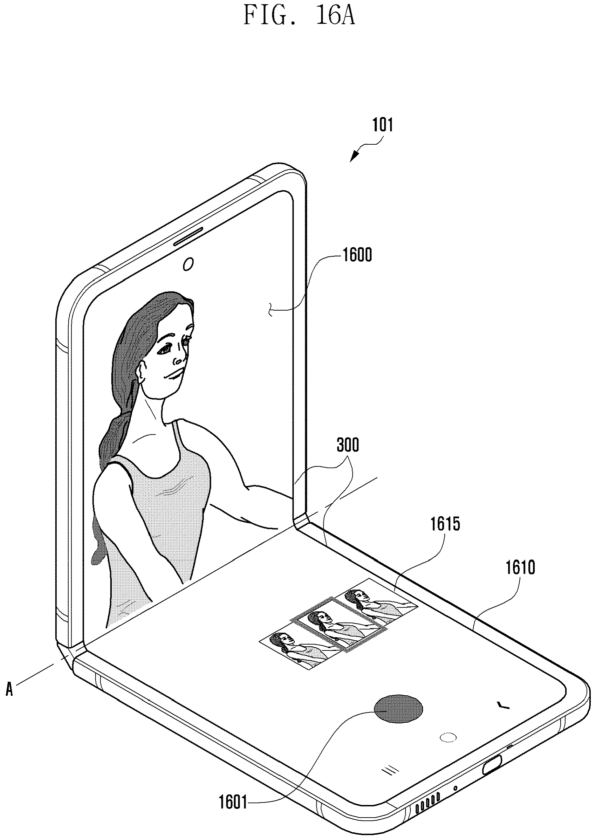

According to various embodiments, the electronic device 101 may be configured to provide the first area 1560 and the second area 1570 in the intermediate state as separate areas according to a predetermined purpose. For example, the processor 120 may be configured to provide the first area 1560 and the second area 1570 as a preview area and a control area, a preview area and a review area, a preview area and a sub-preview area, or a preview area and a rear preview area. According to various embodiments, an example of designating and using the second area 1570 as various sub-areas are illustrated in FIG. 16A to FIG. 16E to be described later.

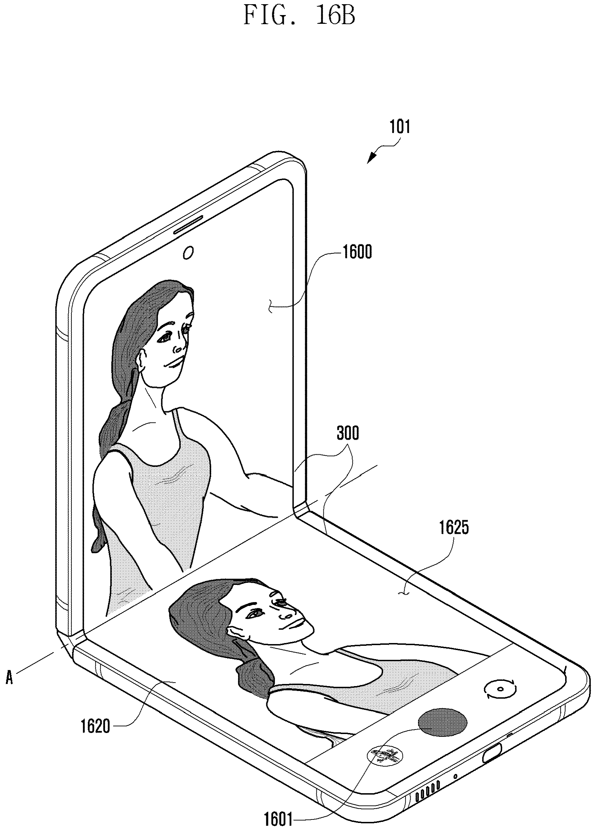

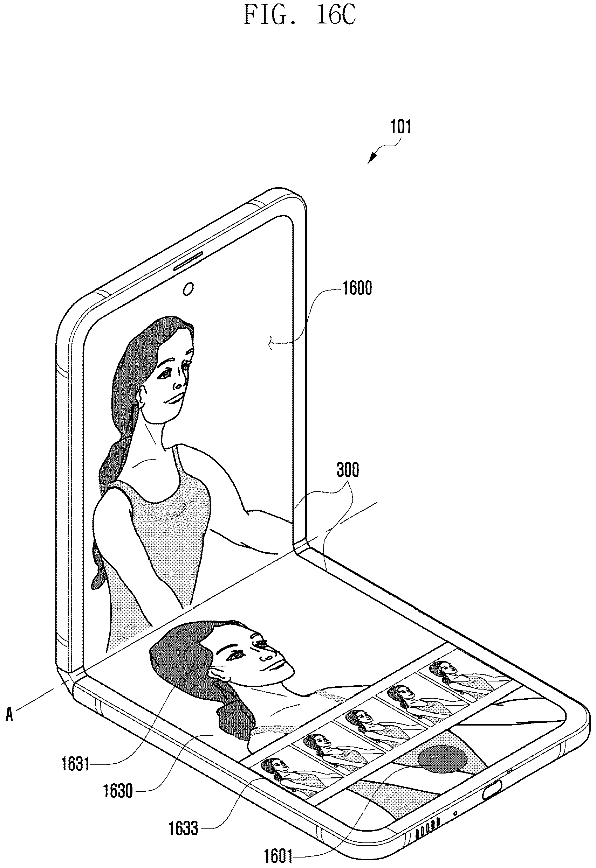

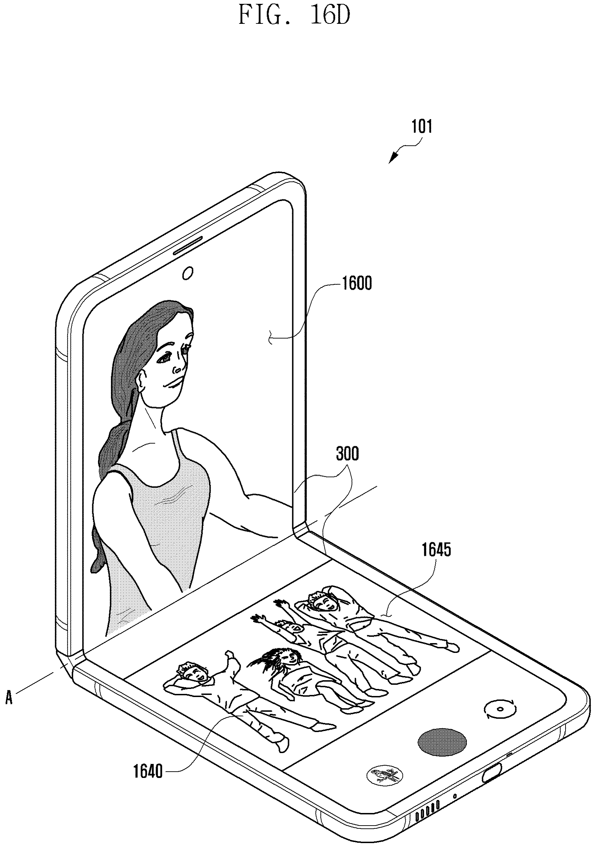

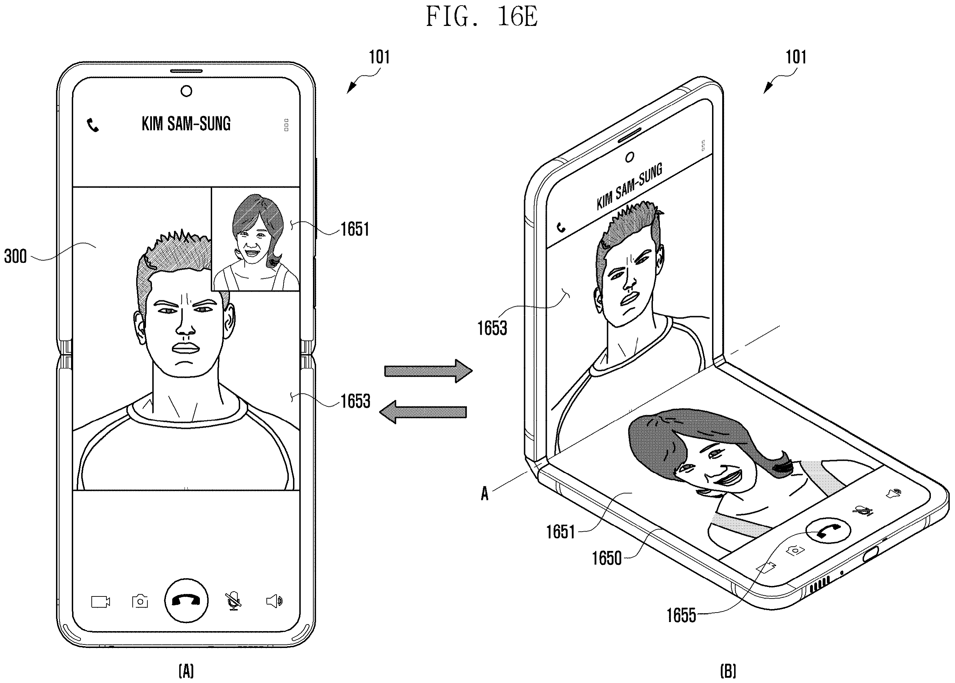

FIG. 16A, FIG. 16B, FIG. 16C, FIG. 16D, and FIG. 16E are views for explaining examples of providing a sub-area in an intermediate state of an electronic device according to various embodiments.

As illustrated in FIG. 16A to FIG. 16E, according to various embodiments, the electronic device 101 may be configured to divide (or separate) the display 300 into two areas with reference to a portion (e.g., the folding axis A) folded in the intermediate state so as to provide as a preview area and a sub-area, respectively.

Referring to FIG. 16A, FIG. 16A may an illustrate example of providing a sub-area as a control area 1610. For example, the electronic device 101 may be configured to separately provide the two divided areas (e.g., the first area 1560 and the second area 1570 of FIG. 15C) of the display 300 to a preview area and a control area 1610, respectively. According to an embodiment, the control area 1610 may be configured and provided as a layout including at least one effect object 1615 capable of selecting and configuring a photographing effect (e.g., Auto, Warm, Calm, Black and White, Vivid, and/or Cartoon-like effects) in a preview 1600 of the first area 1560, and a photographing object 1601 (e.g., a photographing button). According to an embodiment, an effect corresponding to the effect object 1615 selected in the control area 1610 may be applied to and displayed on the preview 1600.

Referring to FIG. 16B, FIG. 16B may illustrate an example of providing a sub-area as a review-area 1620. For example, the electronic device 101 may be configured to separately provide the two divided areas (e.g., the first area 1560 and the second area 1570 of FIG. 15C) of the display 300 to a preview area and a review area 1620, respectively. According to an embodiment, when actually photographing is performed based on the preview 1600 of the preview area, the review area 1620 may be used (or changed) as an area which provides a photographing result (e.g., the photographing image 1625). According to an embodiment, when photographing is performed based on the selection of the photographing object 1601 provided through a sub-area, the sub-area may be changed into the review area 1620.

Referring to FIG. 16C, FIG. 16C may illustrate an example of providing a sub-area as a sub-preview area 1630. For example, the electronic device 101 may be configured to separately provide the two divided areas (e.g., the first area 1560 and the second area 1570 of FIG. 15C) of the display 300 to a preview area and a sub-preview area 1630, respectively. According to an embodiment, the sub-preview area 1630 may be configured and provided as a layout including a preview (e.g., the original preview 1631) corresponding to the preview 1600 of the first area 1560, at least one effect object 1633 capable of selecting and configuring a photographing effect to be superimposed on the original preview 1631, and/or the photographing object 1601. According to an embodiment, an effect corresponding to the effect object 1633 selected in the sub-preview area 1630 may be applied to be displayed thereon, and the original preview 1631 may be displayed through the sub-preview area 1630. Through this, a user can easily recognize the difference between before the effect is applied and after the effect is applied.

Referring to FIG. 16D, FIG. 16D may illustrate an example of providing a sub-area as a rear preview area 1640. For example, the electronic device 101 may be configured to separately provide the two divided areas (e.g., the first area 1560 and the second area 1570 of FIG. 15C) of the display 300 to a preview area and a rear preview area 1640, respectively. According to an embodiment, the electronic device 101 may be configured to connect each of the front camera device 305 and the rear camera device 308, based on a user input. According to an embodiment, when the front camera device 305 and the rear camera device 308 are used at the same time, the electronic device 101 may be configured to provide the first area 1560 as a preview area (e.g., the front preview area) of the front camera device 305, and provide the second area 1570 as a preview area (e.g., the rear preview area 1640) of the rear camera device 308.

According to an embodiment, while the preview 1600 of the preview data obtained from the front camera device 305 is displayed through the first area 1560, the electronic device 101 may be configured to connect the rear camera device 308, based on a user input, such that a preview 1645 of preview data obtained from the rear camera device 308 is displayed through the rear preview area 1640. For example, the electronic device 101 may be configured to simultaneously provide the preview 1600 of the front camera device 305 and the preview 1645 of the rear camera device 308, through the first area 1560 and second area 1570.

According to some embodiments, the electronic device 101 may be configured to switch roles of the first area 1560 and the second area 1570, based on a user input. For example, the electronic device 101 may be configured to provide the preview 1600 of the preview data, which is obtained from the front camera device 305, through the second area 1570, and provide the preview 1645 of preview data, which is obtained from the rear camera device 308, through the first area 1560.

Referring to FIG. 16E, FIG. 16E may illustrate an example of providing, of the two divided areas (e.g., the first area 1560 and the second area 1570 in FIG. 15C) of the display 300, the second area 1570 as the preview area 1650 of a camera device (e.g., the front camera device 305 or the rear camera device 308) of the electronic device 101, and providing the first area 1560 as a preview area of the camera device (not shown) of an external electronic device (not shown). According to some embodiments, according to the configuration of the electronic device 101, the first area 1560 may be provided as a preview area of the camera devices 305 and 308 of the electronic device 101, and the second area 1570 may be provided as the preview area 1650 of a camera device of an external electronic device.

According to an embodiment, the electronic device 101 may be configured to execute a video call function, based on a user input, and may be configured to simultaneously provide the first preview 1651 of a camera device (e.g., the front camera device 305), which is connected when a video call function is executed, and the second preview 1653 of a camera device of an external electronic device, which is received from an external electronic device of the other party. In the case of Example A, it may illustrate an example of providing each of the first preview 1651 and the second preview 1653 in the unfolded state of the electronic device 101. In the case of Example B, it may illustrate, in the intermediate state of the electronic device 101, an example of providing the first preview 1651 and the second preview 1653 through the first area 1560 and the second area 1570 divided with reference to the folding portion (e.g., the folding axis A), respectively. According to an embodiment, the electronic device 101 may be configured such that a layout including a control object 1655 associated with a video call function through a sub-area (that is, the second area 1570) is configured and provided.

According to various embodiments, the electronic device 101 may be configured to provide a layout associated with an interface (e.g., information) which non-interacts (or does not interact or requires no user input) with a user in the first area 1560, and to provide a layout associated with an interface (e.g., a software button) which interacts with a user (or requires a user input) in the second area 1570.

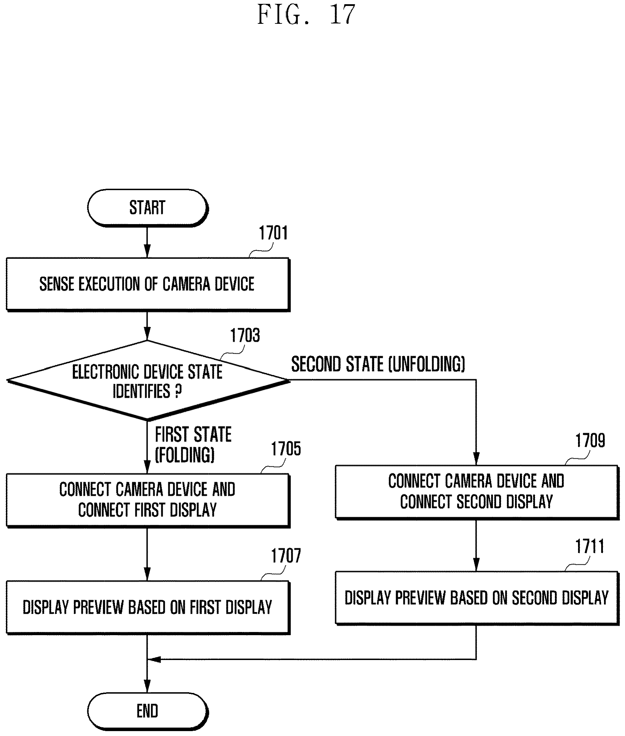

FIG. 17 is a flowchart illustrating an operation method of an electronic device according to various embodiments.

Referring to FIG. 17, in operation 1701, the processor 120 of the electronic device 101 may be configured to sense the execution of a camera device (e.g., the rear camera device 308). According to an embodiment, in a folded state, an unfolded state, or an intermediate state of the electronic device 101, the processor 120 may be configured to execute the camera device 308, based on a user input to execute the camera device 308 of a user.

In operation 1703, the processor 120 may be configured to identify a state of the electronic device 101 (or the second display 300 of the electronic device 101), based on the sense of execution of the camera device 308. According to an embodiment, based on sensor data of a state detection sensor, the processor 120 may be configured to determine whether the electronic device 101 is a first state (e.g., a folded state), a second state (e.g., an unfolded state), or a third state (e.g., an intermediate state).

In operation 1703, when a first state (e.g., the folded state) of the electronic device 101 is identified, the processor 120, in operation 1705, may be configured to perform a camera connection (or activation) of the camera device 308 and a display connection of the first display 331.

In operation 1707, the processor 120 may be configured to display a preview (e.g., a first preview) through the currently connected first display 331. According to an embodiment, the processor 120 may be configured to deliver, through the first preview buffer 560, the preview data, which is obtained from the camera device 308, to the first display 331 and to display the preview through the first display 331.

In operation 1703, when a second state (e.g., the unfolded state) (or a third state (e.g., the intermediate state)) of the electronic device 101 is identified, the processor 120, in operation 1709, may be configured to perform a camera connection of the camera device 308 and a display connection of the second display 300.

In operation 1711, the processor 120 may be configured to display a preview (e.g., the second preview) through the currently connected second display 300. According to an embodiment, the processor 120 may be configured to deliver the preview data, which is obtained from the camera device 308, to the second display 300 through the second preview buffer 570 and to display the preview through the second display 300.

According to an embodiment, the first preview and the second preview may be provided as previews of different attributes according to the attribute of (e.g., a camera resolution, standard, wide angle, telephoto, and/or a special effect) of the camera device 308 obtaining preview data as different set values according to the attribute (e.g., a screen size and/or a screen resolution) of the connected first display 331.

According to various embodiments, as the camera device 308 is executed, a preview of the camera device 308 may be displayed at the same time through another unconnected display while a preview is displayed through the first display 331 or the second display 300 as operation 1707 or operation 1711. According to an embodiment, the processor 120 may be configured to control such that a preview of the currently connected camera device 308 is displayed individually on the first display 331 or second display 300, or displayed simultaneously on the first display 331 and second display 300. The example thereof is described with reference to the drawings to be described later.

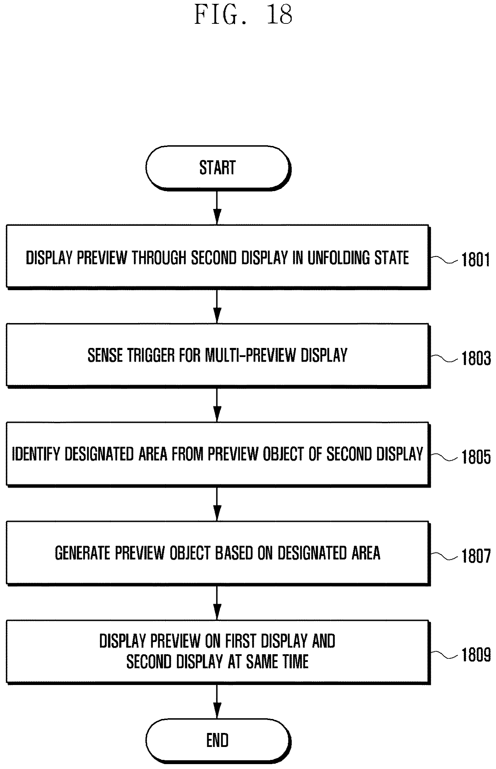

FIG. 18 is a flowchart illustrating an operation method of an electronic device according to various embodiments.

Referring to FIG. 18, in operation 1801, the processor 120 of the electronic device 101 may be configured to display a preview (e.g., the second preview) through the second display 300 in the unfolded state of the electronic device 101.

In operation 1803, the processor 120 may be configured to sense a trigger for multi-preview display. According to an embodiment, while a preview is displayed through the second display 300 in the unfolded state of the electronic device 101, the processor 120 may be configured to sense a trigger for multi-preview display, based on a user input through a designated interface such as a software interface (e.g., a software button or a toggle button) capable of generating an on/off event of the first display 331, a physical interface (e.g., a hardware key), a voice interface (e.g., a voice command), and/or a gesture interface (e.g., a palm detection).

In operation 1805, the processor 120 may be configured to identify a designated area from a preview object (e.g., subject) of the second display 300. According to an embodiment, the processor 120 may be configured to extract a key point (or feature) from the preview object of the second display 300, based on various image extraction algorithms, and to identify a designated area (e.g., a face image), based on the extracted key point. According to an embodiment, for example, the image extraction algorithm may include various algorithms such as edge detection, Corner extraction (e.g., Harris corner extraction, Shi & Tomasi corner extraction, features from accelerated segment test (FAST), Hough line transformation, image histogram, scale-invariant feature transform (SIFT), speeded-up robust features (SURF), and/or oriented FAST and rotated BRIEF (ORB)). According to some embodiments, the designated area may be a predetermined area (e.g., a part or all of the screen area) which is previously designated in the second display 300.

In operation 1807, the processor 120 may be configured to generate a preview object for the first display 331, based on the designated area. According to an embodiment, the processor 120 may be configured to crop at least a portion (e.g., a designated area) of the preview displayed through the second display 300, and to generate the cropped image as a preview object. According to some embodiments, the preview object may include an image in which the preview displayed through the second display 300 is resized (e.g., reduced).

In operation 1809, the processor 120 may be configured to simultaneously display a preview on the first display 331 and the second display 300. According to an embodiment, the processor 120 may be configured to provide a preview through the first display 331 and the second display 300 at the same time, based on the preview data obtained from one camera device 308 which is currently connected. According to an embodiment, the processor 120 may be configured to display a first preview (e.g., a main preview) on the second display 300, and to display a second preview (e.g., a sub-preview associated with the main preview), which is generated based on the first preview, on the first display 331. According to some embodiments, when the second preview is displayed on the first display 331, the processor 120 may be configured to provide operation information (e.g., timer count, presence or absence of palm detection, and/or video recording time) associated with the camera device 308.

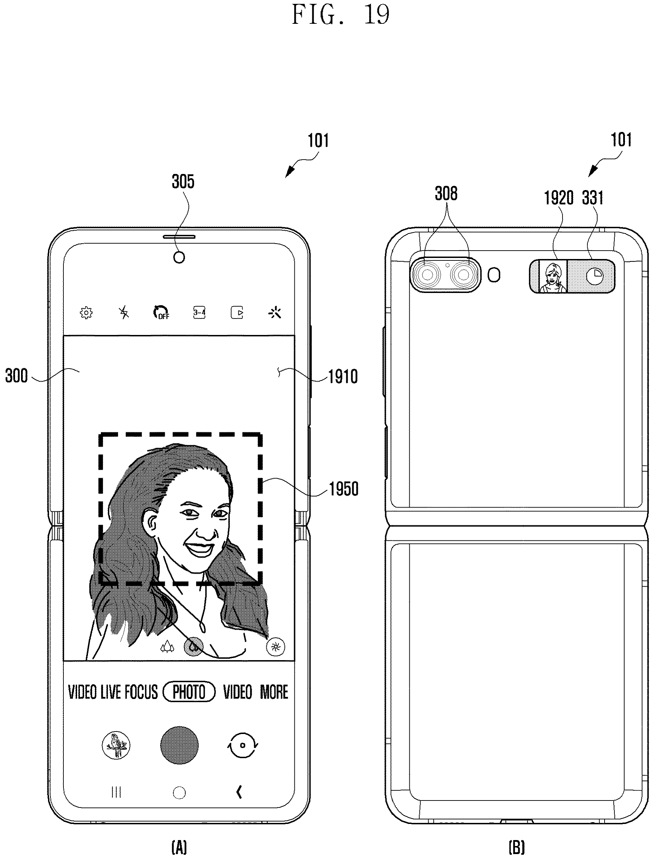

FIG. 19 is a view for explaining an example of operating in an unfolded state of an electronic device according to various embodiments.

According to an embodiment, FIG. 19 may illustrate an example in which a preview is simultaneously displayed on the first display 331 and the second display 300 in the unfolded state of the electronic device 101.

Referring to FIG. 19, as shown in Example A, the electronic device 101 may be configured to display a preview 1910 (e.g., a main preview) of an image photographed by a camera device (e.g., the front camera device 305 or the rear camera device 308) in the unfolded state through the currently connected second display 300.

According to an embodiment, as in Example A, when a trigger for a multi-preview display occurs while the preview 1910 is displayed through the second display 300, the electronic device 101 may be configured to connect (e.g., activates) the first display 331, and to generate a preview 1920 (e.g., the sub-preview) for the first display 331, based on the preview 1910 displayed on the second display 300. According to an embodiment, based on the key point extraction from the preview displayed through the second display 300, the electronic device 101 may be configured to crop at least a portion 1950 (e.g., a designated area or a feature (e.g., face) area), and to generate the cropped image as the preview 1920 of the first display 331. According to some embodiments, the preview 1920 of the first display 331 may include an image in which the preview 1910 displayed through the second display 300 is resized (e.g., reduced).

According to an embodiment, in response to the trigger for the multi-preview display, as shown in Example A and Example B, the electronic device 101 may be configured to simultaneously display previews 1910 and 1920 on the first display 331 and the second display 300. According to an embodiment, the electronic device 101 may be configured to display a first preview 1910 on the second display 300, and to display the second preview 1920 (e.g., the sub-preview associated with the first preview 1910), which is generated based on first preview 1910, on the first display 331.

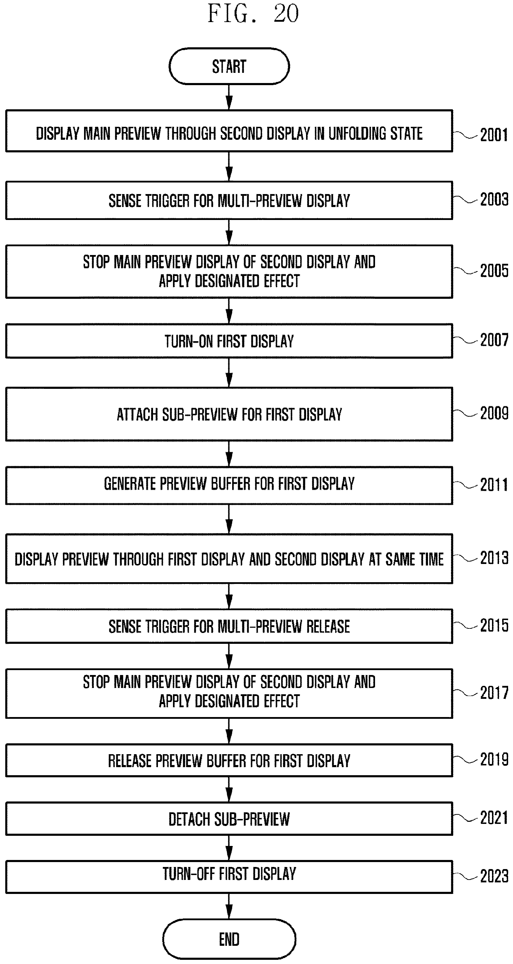

FIG. 20 is a flowchart illustrating an operation method of an electronic device according to various embodiments.

Referring to FIG. 20, in operation 2001, the processor 120 of the electronic device 101 may be configured to display a main preview through the second display 300 in the unfolded state of the electronic device 101.

In operation 2003, the processor 120 may be configured to sense a trigger for multi-preview display. According to an embodiment, while a preview is displayed through the second display 300 in the unfolded state of the electronic device 101, the processor 120 may be configured to sense a trigger for multi-preview display, based on a user input through a designated interface such as a software interface (e.g., a software button or a toggle button) capable of generating an on/off event of the first display 331, a physical interface (e.g., a hardware key), a voice interface (e.g., a voice command), and/or a gesture interface (e.g., a palm detection).

In operation 2005, the processor 120 may be configured to stop the main preview display of the second display 300 and to apply a designated effect, based on trigger sense for multi-preview display. According to an embodiment, when an on-event of the first display 331 occurs while the second display 300 is connected (or activated) and the main preview is displayed, a preview interruption phenomenon may occur since the preview is not drawn on the second display 300. Due to this, a user may feel the preview interruption phenomenon. In various embodiments, in order to solve a visual inconvenience caused by the preview interruption phenomenon, when the on-event of the first display 331 occurs while the second display 300 is connected and the main preview is displayed, the processor 120 may be configured to apply a designated effect (e.g., a blur effect) to the main preview, which is being displayed on the second display 300, and then to stop the display.

In operation 2007, the processor 120 may be configured to turn on the first display 331, based on the trigger sense for the multi-preview display. According to an embodiment, when the on-event of the first display 331 occurs while the second display 300 is connected (or activated) and the main preview is displayed, the processor 120 may be configured to perform turn-on-control on the first display 331 (e.g., to supply power to the first display 331) so as to connect (or activate) the first display 331.

In operation 2009, the processor 120 may be configured to attach a sub-preview for the first display 331. According to an embodiment, the processor 120 may be configured to attach a sub-preview for the first display 331, based on the turn-on of the first display 331. For example, the processor 120 may be configured to crop at least a portion of the main preview displayed through the second display 300, and to attach the cropped image as a sub-preview. According to some embodiments, the sub-preview may include an image in which a main preview displayed through the second display 300 is resized (e.g., reduced). According to an embodiment, when a sub-preview for the first display 331 is attached, the processor 120 may be configured to identify operation information (e.g., information such as timer count, presence or absence of palm detection, and/or video recording time) associated with an operation of the camera devices 305 and 308, which can be displayed on the first display 331.

In operation 2011, the processor 120 may be configured to generate a preview buffer (e.g., the first preview buffer 560) for the first display 331. According to an embodiment, while the main preview is displayed through the second display 300, the processor 120 may be configured to deliver the image, which is obtained from the camera devices 305 and 308, to the first preview buffer 560. According to an embodiment, the processor 120 may be configured to reconnect the second display 300, based on the generation of the first preview buffer 560. According to various embodiments, operation 2005, operation 2007, operation 2009, and operation 2011 may not be limited to the illustrated order, and operation 2005, operation 2007, operation 2009, and operation 2011 are performed sequentially, in parallel, in reverse sequential order, or heuristically.

In operation 2013, the processor 120 may be configured to simultaneously display a preview through the first display 331 and the second display 300. According to an embodiment, the processor 120 may be configured to deliver a sub-preview to the first display 331 through the first preview buffer 560 and to deliver a main preview to the second display 300 through the second preview buffer 570, so as to display the sub-preview through the first display 331 and display the main preview through the second display 300. According to an embodiment, when the display of the main preview is resumed through the second display 300, the processor 120 may be configured to release and provide the designated effect. According to an embodiment, when a sub-preview is displayed on the first display 331, the processor 120 may be configured to also control the display of operation information (e.g., information such as timer count, presence or absence of palm detection, and/or video recording time) associated with operations of the camera devices 305 and 308, which can be displayed on the first display 331.

In operation 2015, while previews are simultaneously displayed through the first display 331 and the second display 300, the processor 120 may be configured to sense a trigger for releasing the multi-preview display. According to an embodiment, while previews are displayed through the first display 331and the second display 300, the processor 120 may be configured to sense a trigger for releasing multi-preview display, based on a user input through a designated interface such as a software interface (e.g., a software button or a toggle button) capable of generating an on/off event of the first display 331, a physical interface (e.g., a hardware key), a voice interface (e.g., a voice command), and/or a gesture interface (e.g., a palm detection).

In operation 2017, the processor 120 may be configured to stop the main preview display of the second display 300 and to apply a designated effect, based on trigger sense for releasing the multi-preview display. According to an embodiment, when an off-event of the first display 331 occurs while a preview is displayed through the first display 331 and the second display 300, a preview interruption phenomenon may occur since the preview is not drawn on the second display 300. In various embodiments, in order to solve a user's visual inconvenience caused by the preview interruption phenomenon, when an on-event of the first display 331 occurs while the second display 300 is connected and a main preview is displayed, the processor 120 may be configured to apply a designated effect (e.g., a blur effect) to the main preview, which is being displayed on the second display 300, and to stop the display.

In operation 2019, the processor 120 may be configured to release a preview buffer (e.g., the first preview buffer 560) for the first display 331. According to an embodiment, while a preview is displayed through the first display 331 and second display 300, the processor 120 may be configured to release a first preview buffer 560 for delivering the image, which is obtained from the camera devices 305 and 308, to the first display 331. According to an embodiment, the processor 120 may be configured to reconnect the second display 300, based on the release of the first preview buffer 560.

In operation 2021, the processor 120 may be configured to detach a sub-preview for the first display 331. According to an embodiment, the processor 120 may be configured to detach a sub-preview for the first display 331. For example, the processor 120 may be configured to stop the process of generating a sub-preview from a main preview displayed through the second display 300.

In operation 2023, the processor 120 may be configured to turn off the first display 331. According to an embodiment, when an off-event of the first display 331 occurs, the processor 120 may be configured to perform turn-off-control on the first display 331 (e.g., to cut off power to the first display 331) so as to disconnect (or inactivate) the first display 331. According to an embodiment, it may be possible to display the main preview only on the second display 300 without displaying a sub-preview on the first display 331. According to an embodiment, when the display of the main preview is resumed through the second display 300, the processor 120 may be configured to release and provide the designated effect. According to various embodiments, operation 2017, operation 2019, operation 2021, and operation 2023 may not be limited to the illustrated order, and operation 2017, operation 2019, operation 2021, and operation 2023 are performed sequentially, in parallel, in reverse sequential order, or heuristically.

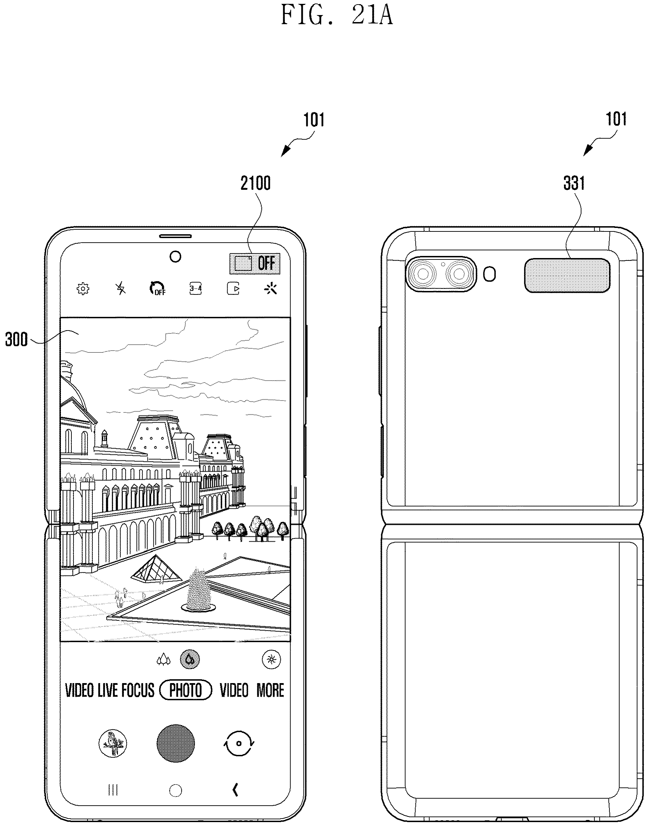

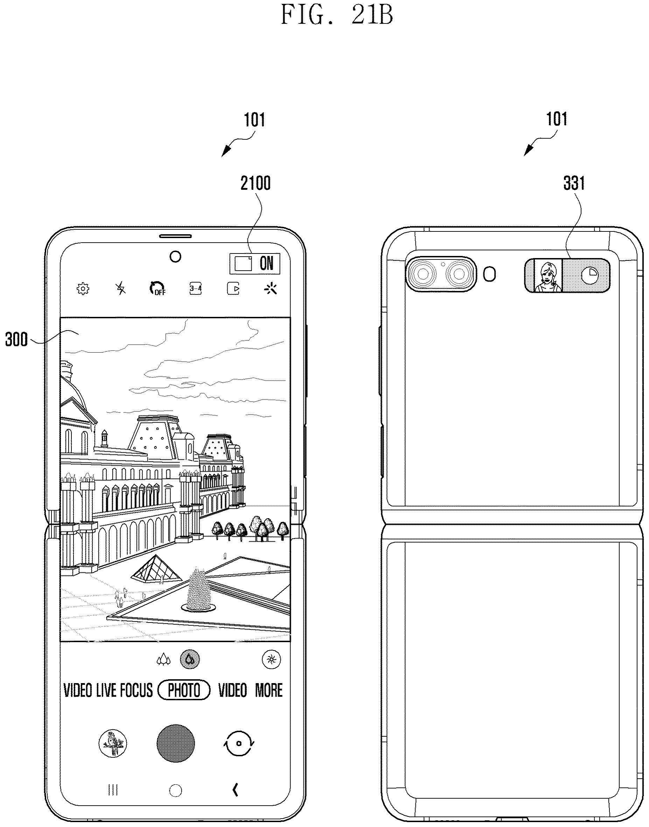

FIG. 21A and FIG. 21B are views for explaining examples of an interface provided for a multi-preview display in an electronic device according to various embodiments.

According to an embodiment, FIG. 21A and FIG. 21B may illustrate examples in which a software interface (e.g., the software button 2100) is provided as an interface generating an on/off event of the first display 331 while a main preview is displayed through the second display 300 in the unfolded state of the electronic device 101. According to some embodiments, an interface capable of generating an on/off event of the first display 331 may be provided based on various interfaces such as a physical interface (e.g., a hardware key), a voice interface (e.g., a voice command), and/or a gesture interface (e.g., palm detection).

Referring to FIG. 21A, FIG. 21A may illustrate an example in which the first display 331 is in an off state while a preview is displayed through the second display 300. As illustrated in FIG. 21A, a software button 2100 for an on/off event may be in an inactive state, the first display 331 may be in an off state, and a sub-preview may not be provided.

Referring to FIG. 21B, FIG. 21B may illustrate an example in which the first display 331 is in an on state while a preview is displayed through the second display 300. As illustrated in FIG. 21B, the software button 2100 for an on/off event may be in an active state, the first display 331 may be turned on, and a sub-preview may be provided.

According to an embodiment, the software button 2100 for an on/off event of a multi-preview display may be provided on the preview of the second display 300, and may be provided at a designated position so as not to block a user view (or not affect a user visibility). In some embodiments, the software button 2100 may be provided as a floating button on a preview.

According to an embodiment, the software button 2100 may be provided as an off-state by default through the second display 300, and may be changed to an on-state, based on a user input (e.g., touch). According to another embodiment, the software button 2100 may be changed from the on-state to the off-state, based on a user input (e.g., touch).

According to an embodiment, based on a user input of the software button 2100, the electronic device 101 may be configured to turn on the software button 2100 and turn on the first display 331, so as to simultaneously provide a preview through the first display 331 and the second display 300. According to another embodiment, based on a user input of the software button 2100, the electronic device 101 may be configured to turn off the software button 2100 and turn off the first display 331, so as to provide a preview through the second display 300.

According to an embodiment, in order that a user easily recognizes the on- or off-state of the first display 331, for example, the software button 2100 may be configured to provide a related object (e.g., an image and/or a text) together and also the software button 2100 may be configured to be provided in different colors, according to an on- or off-state.

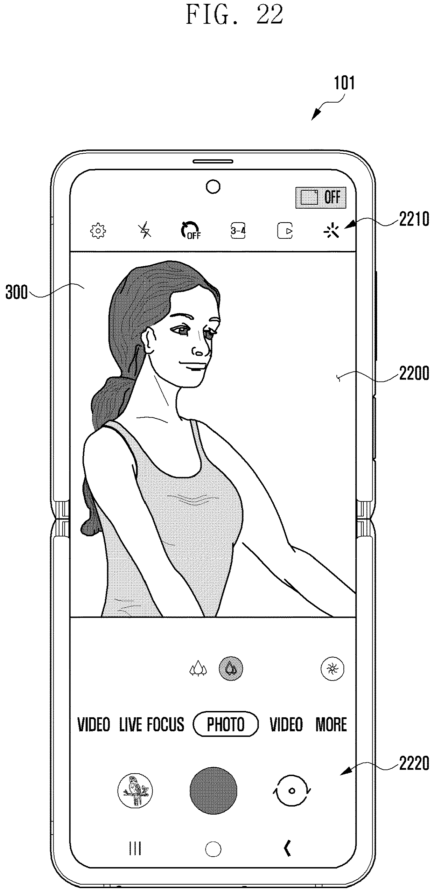

FIG. 22, FIG. 23 and FIG. 24 are views for explaining examples of changing an electronic device according to various embodiments from an unfolded state to an intermediate state.

According to an embodiment, FIG. 22, FIG. 23 and FIG. 24 may illustrate examples of an operation in which the electronic device 101 is changed from the unfolded state to the intermediate state (e.g., a table mode or a flex mode).

Referring to FIG. 22, FIG. 22 may illustrate an example of a state where a preview 2200 of preview data obtained through a camera device (e.g., the rear camera device 308 or the front camera device 305) in the unfolded state of the electronic device 101 is displayed through the display 300 (e.g., a main or flexible display).

As illustrated in FIG. 22, the electronic device 101 may be configured to display a preview 2200 through a designated area (e.g., an area for a preview in the unfolded state, which is set as a partial screen or a full screen of the display 300) of the display 300. According to an embodiment, the electronic device 101 may be configured to provide layouts 2210 and 2220 for various operation information (e.g., a timer count, presence or absence of palm detection, option setting information, menu object, photographing object, and/or video recording time) associated with the camera device 305 and 308 and/or the preview 2200 along with the preview 2200 through at least one designated area.

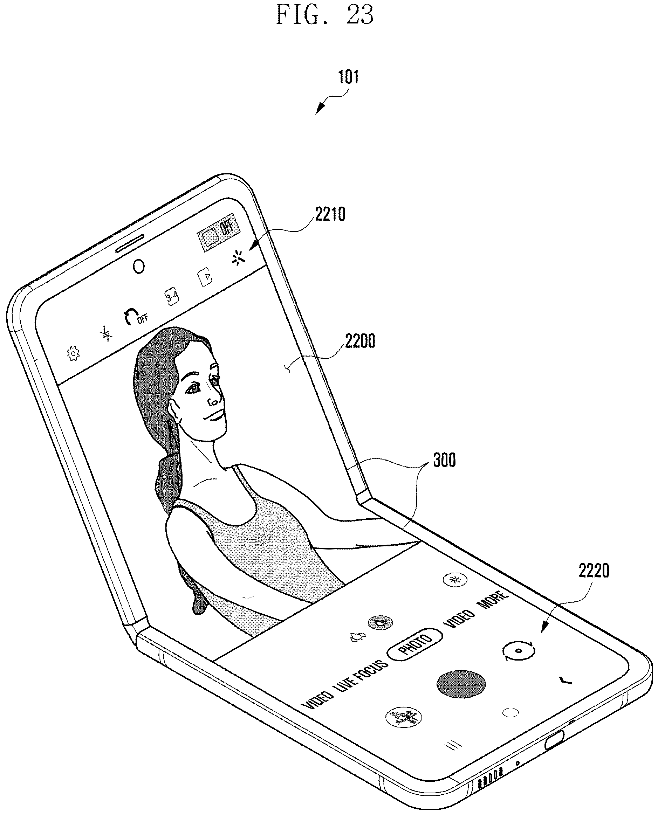

Referring to FIG. 23, FIG. 23 may illustrate an example of a part during the operation in which a state of the electronic device 101 is changed from the unfolded state to the intermediate state. According to an embodiment, it may show an operation in which the electronic device 101 changes to the intermediate state, based on a predetermined inflection angle (e.g., the angle between the first housing 310 and the second housing 320) through a hinge module. For example, it may show an example in which the electronic device 101 is unfolded with the unfolding angle of about 135 degrees (e.g., about 130 degrees - about 140 degrees).

As illustrated in FIG. 23, according to a state change to the intermediate state, the electronic device 101 may be configured to adjust and provide the preview 2200 and a layout (e.g., the layouts 2210 and 2220 in the unfolded state of FIG. 22) in the unfolded state. For example, the electronic device 101 may be configured to provide a graphic effect in which a preview area (or the preview 2200 of a preview area) is moved (e.g., reduced) in the upper end direction of the display 300 in a sliding manner. According to an embodiment, the electronic device 101 may be configured to provide a graphic effect in which the size (or ratio) of the sub-area is adjusted and expanded in response to a sliding movement (e.g., a reduced graphic effect) in the upper end direction of the preview area.

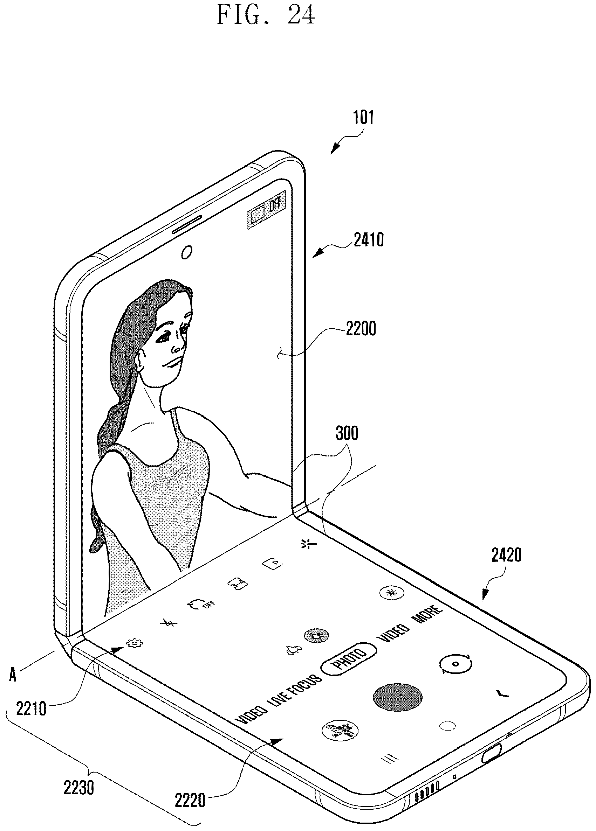

Referring to FIG. 24, FIG. 24 may illustrate an example of providing a preview 2200 (e.g., a preview area) and layouts 2210 and 2210 (e.g., a sub-area) in the intermediate state when a state of the electronic device 101 according to various embodiments is changed from the unfolded state to the intermediate state.

As illustrated in FIG. 24, according to various embodiments, the electronic device 101 may be configured to divide the display 300 into two areas with reference to a portion (e.g., the folding axis A) folded in the intermediate state so as to provide as a preview area 2410 and a sub-area 2420, respectively. According to an embodiment, the electronic device 101 may be configured to provide the preview 2200 controlled according to the attribute change of the camera devices 305 and 308 through the preview area 2410. For example, as illustrated in FIG. 24, the electronic device 101 may be configured to adjust the preview 2200 to a size corresponding to the screen size of the preview area 2410 and then to provide same.

According to an embodiment, the electronic device 101 may be configured to reconfigure the layouts 2210 and 2220 associated with the camera devices 305 and 308 and/or the preview and then to provide same through the sub-area 2420. For example, in FIG. 22 or FIG. 23, a first layout 2210 (e.g., an object associated with a camera option configuration) of the top of the display 300 may be moved and disposed to the sub-area 2420 as illustrated in FIG. 24, and a layout 2230, in which the first layout 2210 and a second layout 2220 (e.g., an object associated with to a photographing option configuration, a photographing object, a gallery entry object, and/or a camera conversion object) are combined into one layout, may be provided.

According to various embodiments, the electronic device 101 may be configured to provide the preview area 2410 and the sub-area 2420 in the intermediate state as separate areas according to a predetermined purpose. For example, the electronic device 101 may be configured to provide two divided areas of the display 300 to the preview area 2410 and the sub-area 2420, respectively, and to provide the sub-area 2420 as one area (e.g., a control area) among various designable areas. Various embodiments may not be limited thereto, and as illustrated in FIG. 16A to FIG. 16E, the sub-area 2420 may be variously changed according to a predetermined purpose or the progress of a photographing operation.

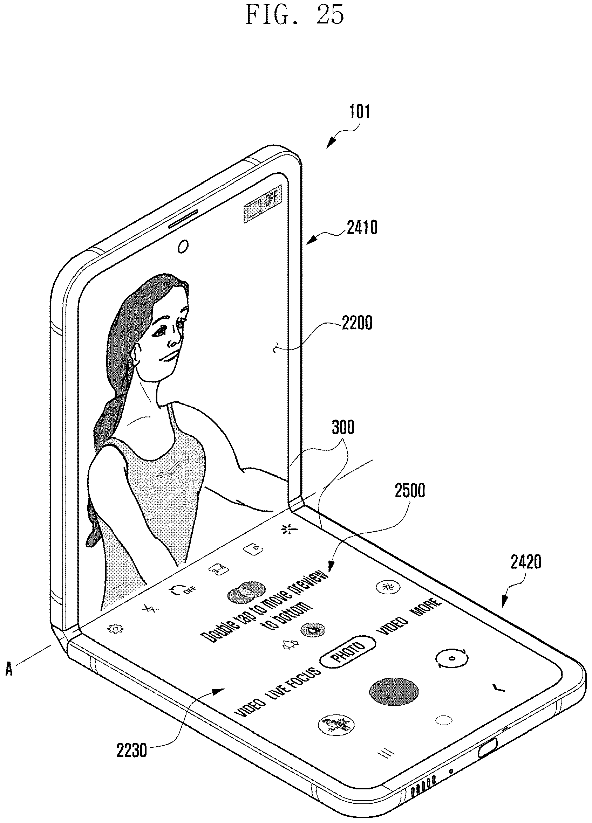

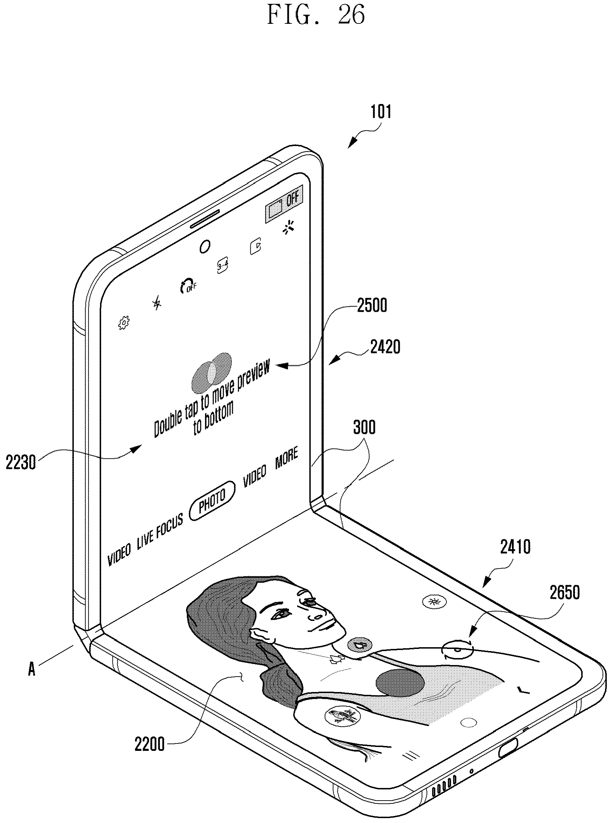

FIG. 25 and FIG. 26 are views for explaining use examples in an intermediate state of an electronic device according to various embodiments.

According to an embodiment, FIG. 25 and FIG. 26 may illustrate examples of an operation in which the positions between the preview area 2410 and the sub-area 2420 are changed to each other by using a designated area (e.g., a change area or an empty area), in an intermediate state (e.g., see FIG. 24).

According to various embodiments, a function of changing the preview area 2410 provided at the top of the display 300 and the sub-area 2420 (e.g., a control area) provided the bottom of the display 300 may be provided, in an intermediate state (e.g., a table mode or a flex mode) of the electronic device 101. For example, the position, in which the preview 2200 is displayed, may be changed between the top and the bottom (e.g., a first area and a second area) of the display 300.

Referring to FIG. 25, when the electronic device 101 is changed to an intermediate state, at least a part of the sub-area 2420 (e.g., an empty area of the layout 2230) may be activated as a change area 2500 for a user input (e.g., a change trigger input) capable of changing an area on which the preview 2200 is displayed. According to an embodiment, the activation of the change area 2500 may include an operation of activating a touch sense function such that a user input (e.g., touch, tap, double tap, swipe, or flick) is received through the change area 2500.

According to an embodiment, as the embodiment of FIG. 22 and FIG. 23, before being changed to an intermediate state, the electronic device 101 may be configured to inactivate the change area 2500 so as to prevent a malfunction due to a touch input, and configured to enable only a touch input by a designated object. According to an embodiment, as the embodiment of FIG. 24 and FIG. 25, when a change to an intermediate state, the electronic device 101 may be configured to inactivate the change area 2500 so as to sense a touch input through the change area 2500. For example, the electronic device 101 may be configured to sense a touch through the change area 2500.

According to various embodiments, the electronic device 101 may be configured to provide a function of changing an area for displaying the preview 2200 to the top or the bottom of the display 300, based on the change area 2500 in an intermediate state (e.g., a table mode or a flex mode). According to an embodiment, as the embodiment of FIG. 24 and FIG. 25, a function of changing the positions of the preview area 2410 disposed at the top of the display 300 and the sub-area 2420 (e.g., a control area) disposed at bottom of the display 300 each other, may be provided.

According to an embodiment, through the change area 2500 in an intermediate state of the electronic device 101, the change between the preview area 2410 and the sub-area 2420 may be performed through a designated user input (e.g., touch, tap, double tap, swipe, or flick) by a user. According to an embodiment, the electronic device 101 may be configured to sense a user input (e.g., a change trigger input) by a user through the change area 2500, and to change the preview area 2410 and the sub-area 2420 and then to provide same, based on the user input. For example, when a double tap by a user is detected through the change area 2500, the electronic device 101 may be configured to change the preview area 2410 and the sub-area 2420 and then to display same, based on the double tap detection in the change area 2500. The example thereof is illustrated in FIG. 26.

As illustrated in FIG. 26, according to various embodiments, the electronic device 101 may be configured to change the preview area 2410 and the sub-area 2420 of the display 300 each other with reference to a portion (e.g., the folding axis A) folded in the intermediate state and then to provide same. For example, referring to FIG. 25 and FIG. 26, the preview area 2410 may be moved and provided from the top to the bottom of the display 300, and the sub-area 2420 may be moved and provided from the bottom to the top of the display 300. According to an embodiment, based on the position change between the preview area 2410 and the sub-area 2420, the electronic device 101 may be configured to display each of the preview 2200 and the layout 2230, based on the changed positions.

According to various embodiments, in an intermediate state of the electronic device 101, a user input (e.g., a change trigger) for changing between the preview area 2410 and the sub-area 2420 may not be limited to the trigger for the designated area 2500, and may be provided in various types. According to an embodiment, a user input may be used as a change trigger, based on the voice of a user and/or based on a designated motion (e.g., additional folding of the electronic device 101, or left and right shaking of the electronic device 101). According to an embodiment, a user input may be used as a change trigger, based on an angle change (e.g., the change in being folded from a first angle in an intermediate state to a designated second angle (e.g., the second angle is an angle smaller than the first angle)) in an intermediate state of the electronic device 101. For example, when being further folded at a predetermined inflection angle (e.g., the angle between the first housing 310 and the second housing 320) through a hinge module (e.g., when being folded from about 90 degrees to about 85 degrees (e.g., about 85 degrees to about 80 degrees)) in the intermediate state (e.g., the angel of about 90 degrees) as illustrated in FIG. 25, the electronic device 101 may be configured to identify as a change trigger for changing the display position of the preview 2200.

According to an embodiment, when the change between the preview area 2410 and the sub-area 2420, the electronic device 101 may be configured to change the preview area 2410 and the sub-area 2420 through a manner of exchanging the preview area 2410 and the sub-area 2420 each other as it is. For example, all objects of the preview 2200 and the layout 2230 respectively constituting the preview area 2410 and the sub-area 2420 may be changed. According to some embodiments, when the change between the preview area 2410 and the sub-area 2420, the electronic device 101 may be configured such that at least some object of the preview 2200 and/or the layout 2230 respectively constituting the preview area 2410 and the sub-area 2420 is maintained without the change.

According to an embodiment, as illustrated in FIG. 26, in the changed preview area 2410, some layout (e.g., the object 2650 (e.g., a photographing object, a gallery entry object, and/or a camera conversion object) associated with photographing as a part of the second layout 2220) previously existing in the sub-area 2420 may be maintained in the changed preview area 2410 and may be provided to be overlapped (or allocated to a separate area) in the preview 2200 state of the changed preview area 2410.

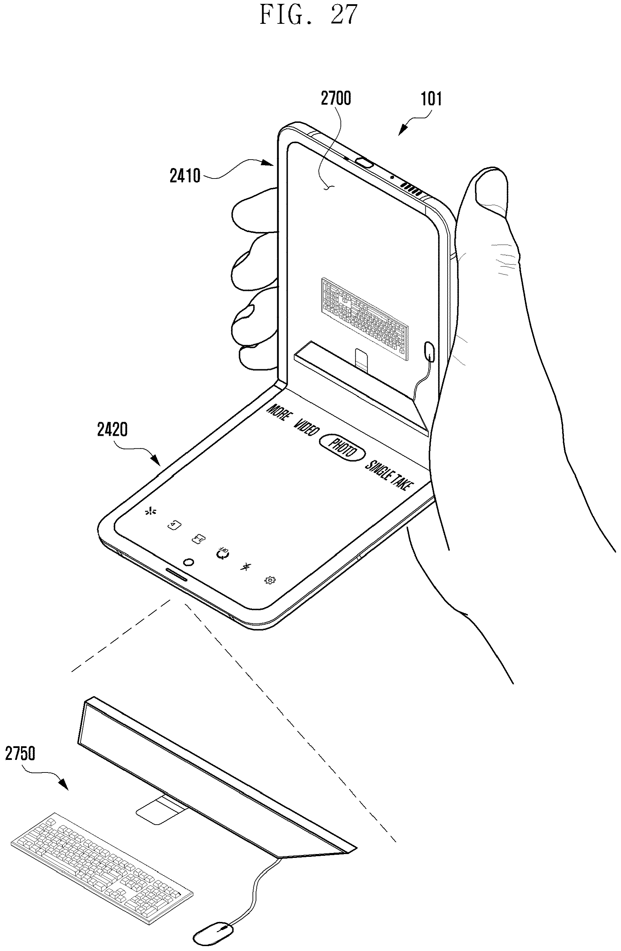

FIG. 27 is a view for explaining an example of a photographing operation using an electronic device in an intermediate state of the electronic device according to various embodiments.

According to an embodiment, as illustrated in FIG. 26, FIG. 27 may illustrate an example of a scenario in which, in an intermediate state (e.g., a table mode or a flex mode) of the electronic device 101, the preview area 2410 and the sub-area 2420 are changed (e.g., a camera preview top/bottom change) and actual photographing is performed using the electronic device 101 in the state.

For example, in an intermediate state of the electronic device 101, a user may change the preview area 2410 for a preview 2700 to the bottom of the display 300, and may easily photograph with various camera angles (e.g., a high angle or a low angle) by using a camera (e.g., the rear camera device 308) disposed at the top rear of the display 300 while checking the preview 2700 through the preview area 2410 of the bottom. For example, a user may variously change a camera angle (e.g., a high angle or a low angle), and may easily photograph images with various camera angles.

According to an embodiment, as illustrated in FIG. 27, a user may change to a high angle. For example, a user may hold the electronic device 101 such that a camera (e.g., the rear camera device 308) of the electronic device 101 is directed to the lower side (or the floor), and may easily perform photographing while checking, through the change preview area 2410, the preview 2700 of an external object 2750 (e.g., a subject) positioned below the electronic device 101 even in the case where a photographing direction faces the floor.

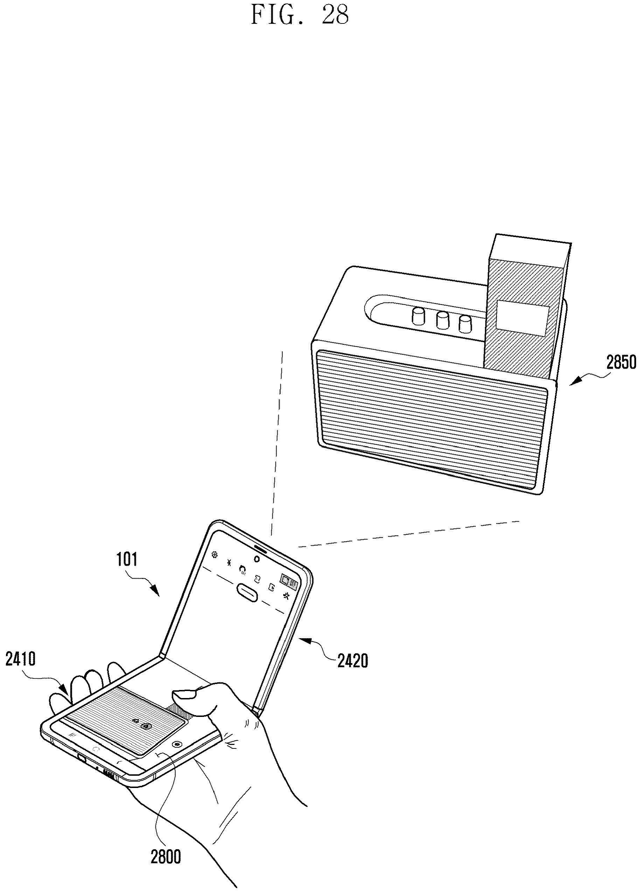

FIG. 28 is a view for explaining another example of a photographing operation using an electronic device in an intermediate state of the electronic device according to various embodiments.

According to an embodiment, as illustrated in FIG. 26, FIG. 28 may illustrate another example of a scenario in which in an intermediate state (e.g., a table mode or a flex mode) of the electronic device 101, the preview area 2410 and the sub-area 2420 are changed (e.g., a camera preview top/bottom change) and actual photographing is performed using the electronic device 101 in the state.

For example, in an intermediate state of the electronic device 101, a user may change the preview area 2410 for a preview 2800 to the bottom of the display 300, and may easily photograph with various camera angles (e.g., a high angle or a low angle) by using a camera (e.g., the rear camera device 308) disposed on the top rear of the display 300 while checking the preview 2800 through the preview area 2410 of the bottom. For example, a user may variously change the camera angle (e.g., a high angle or a low angle), and may easily photograph images with various camera angles.

According to an embodiment, as illustrated in FIG. 28, a user may change to a low angle. For example, with respect to an object 2850 positioned under the gaze of a user, the user may hold the electronic device 101 such that a camera device (e.g., the rear camera device 308) of the electronic device 101 faces the front (e.g., the user's gaze direction), at a position where the user gazes at the electronic device 101 from top to bottom, and then may perform photographing. For another example, a user may perform photographing in a state where the electronic device 101 is positioned in a designated area (e.g., a desk, a floor) corresponding to the height which allows the object 2850 to be photographed. For example, a user may hold such that the camera device 308 of the electronic device 101 faces the front, or may move the electronic device 101 left or right and/or up or down such that the object 2850 is displayed in the preview 2800 while checking the preview 2800, in a state where the electronic device 101 is positioned in a designated area. For example, a user may easily perform photographing with respect to the photographing direction facing the front while checking the preview 2800 through the change preview area 2410 (e.g., the state of FIG. 26) or the previous preview area 2410 (e.g., the state of FIG. 25).

For example, a user may more easily photograph an image (e.g., a picture and/or a video) of a viewpoint (or a blind spot) that makes difficult to photograph with an electronic device having a conventional limited photographing range through the change of a position in which the preview 2800 is displayed, in an intermediate state of the electronic device 101.

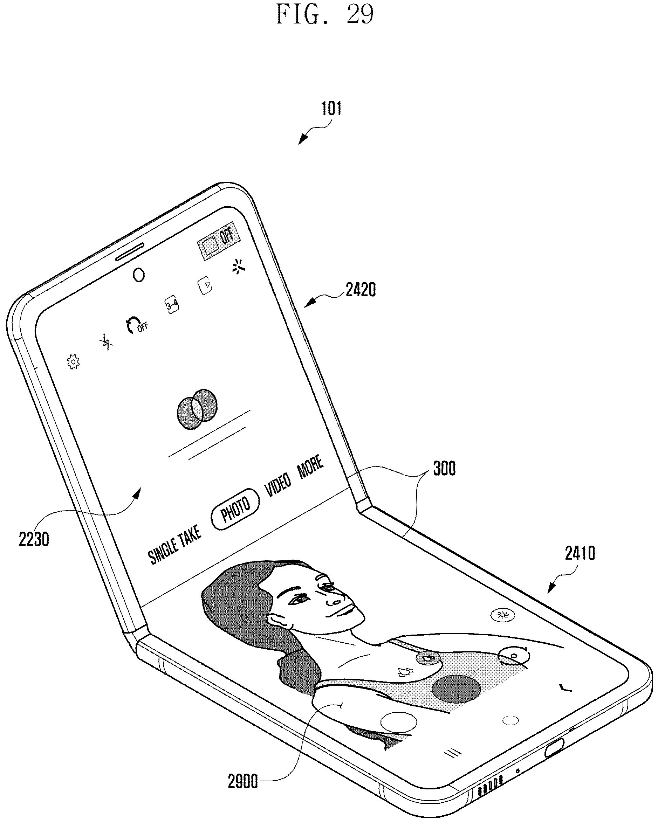

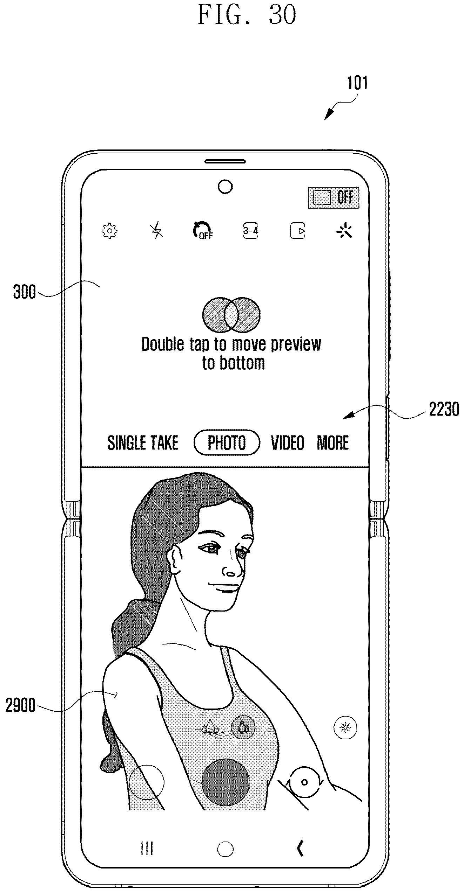

FIG. 29 and FIG. 30 are views for explaining examples of changing, from an intermediate state to an unfolded state, an electronic device according to various embodiments.

According to an embodiment, FIG. 29 and FIG. 30 may illustrate examples of an operation in which the electronic device 101 is changed from an unfolded to an intermediate state (e.g., a table mode or a flex mode).

Referring to FIG. 29, FIG. 29 may illustrate an example of a part of the operation in which a state of the electronic device 101 is changed from an intermediate state (e.g., a table mode or a flex mode) to an unfolded state. According to an embodiment, it may show an operation in which the electronic device 101 changes to an unfolded state, based on a predetermined inflection angle (e.g., the angle between the first housing 310 and the second housing 320) through a hinge module. For example, it may show an example in which the electronic device 101 is unfolded with an unfolding angle of about 135 degrees (e.g., about 130 degrees - about 140 degrees).

As illustrated in FIG. 29, according to a state change to an unfolded state, the electronic device 101 may be configured to adjust a preview 2900 and the layout 2230 (e.g., the layout in the intermediate state of FIG. 26) in the intermediate state and then provide same. For example, the electronic device 101 may be configured to provide a graphic effect in which the preview area 2410 (or the preview 2900 of a preview area) is moved (e.g., expanded) in the top direction of the display 300 in a sliding manner. According to an embodiment, the electronic device 101 may be configured to provide a graphic effect in which the size (or ratio) of the sub-area 2420 is adjusted and reduced in response to a sliding movement (e.g., an expanded graphic effect) in the top direction of the preview area 2410.

Referring to FIG. 30, FIG. 30 may illustrate an example in which a state of the electronic device 101 according to various embodiments is changed from an intermediate state to an unfolded state, and the preview 2900 (e.g., a preview area) and the layout 2230 (e.g., a sub-area) are provided in an unfolded state.

For example, as the example of FIG. 26, FIG. 30 may illustrate an example of a state in which the preview 2900 is displayed through the display 300 when a state of the electronic device 101 is changed from a state, in which the preview area 2410 is changed to and displayed on the bottom of the display 300 (e.g., a main or a flexible display), to an unfolded state.

As illustrated in FIG. 30, the electronic device 101 may be configured to display the preview 2900 so as to correspond to the bottom direction of the display 300, through a designated area (e.g., an area for the preview 2900 in an unfolded state, which is set as a partial screen or a full screen of the display 300) of the display 300. According to an embodiment, the electronic device 101 may be configured to provide a layout 2230 for various operation information (e.g., a timer count, presence or absence of palm detection, option setting information, menu object, photographing object, and/or video recording time) associated with the camera device 305 and 308 and/or the preview 2900 along with the preview 2900, through at least one designated area (e.g., the top direction of the display 300).

According to an embodiment, comparing and referring to FIG. 22. and FIG. 30, the directions, in which preview areas are arranged, may face each other. For example, when the electronic device 101 is in an intermediate state, and the preview area is changed from the changed state (e.g., the state displayed in the bottom direction of the display 300) to an unfolded state, the changed state of the preview area may be applied (or maintained) to provide a corresponding user interface. According to some embodiments, when the preview area is changed from the changed state to the unfolded state, the electronic device 101 may be configured to be provided in the same default manner as the form of FIG. 22 according to a configuration of the electronic device 101.

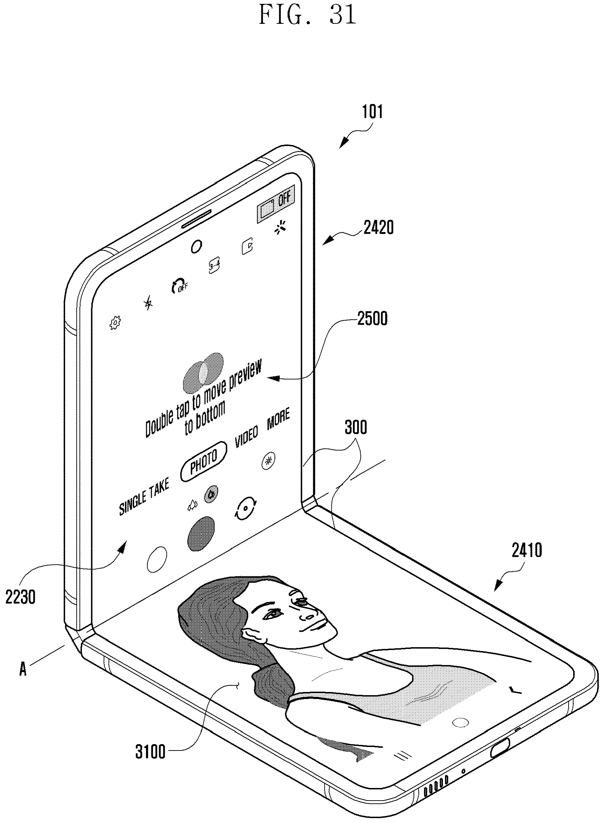

FIG. 31 is a view for explaining another example of a preview area and a sub-area in an intermediate state of an electronic device according to various embodiments.

As illustrated in FIG. 31, according to various embodiments, the electronic device 101 may be configured to divide the display 300 into two areas with reference to a portion (e.g., the folding axis A) folded in the intermediate state so as to provide as the preview area 2410 and the sub-area 2420, respectively, and so as to change the preview area 2410 and the sub-area 2420 each other and then provide same. For example, as illustrated in FIG. 31, the preview area 2410 may be moved from the top to the bottom of the display 300 and then displayed, and the sub-area 2420 may be moved from the bottom to the top of the display 300 and then displayed.

Referring to FIG. 31, the electronic device 101 may be configured to change the preview area 2410 and the sub-area 2420 through a manner of exchanging the preview area 2410 and the sub-area 2420 each other as it is when the change between the preview area 2410 and the sub-area 2420. For example, all objects of the preview 3100 and the layout 2230 respectively constituting the preview area 2410 and the sub-area 2420 may be changed. For example, comparing and referring to of FIG. 26 and FIG. 31, FIG. 26 may illustrate an example in which, when the change between the preview area 2410 and sub-area the 2420, at least some object 2650 (e.g., an object associated with photographing) of the preview 2200 and/or the layout 2230 respectively constituting the preview area 2410 and the sub-area 2420 may be maintained without changing, and FIG. 30 may illustrate an example in which all objects of the preview 3100 and the layout 2230 respectively constituting the preview area 2410 and the sub-area 2420 are changed. For example, FIG. 30 may illustrate a form in which only the preview 3100 is provided without including another layout through the preview area 2410.

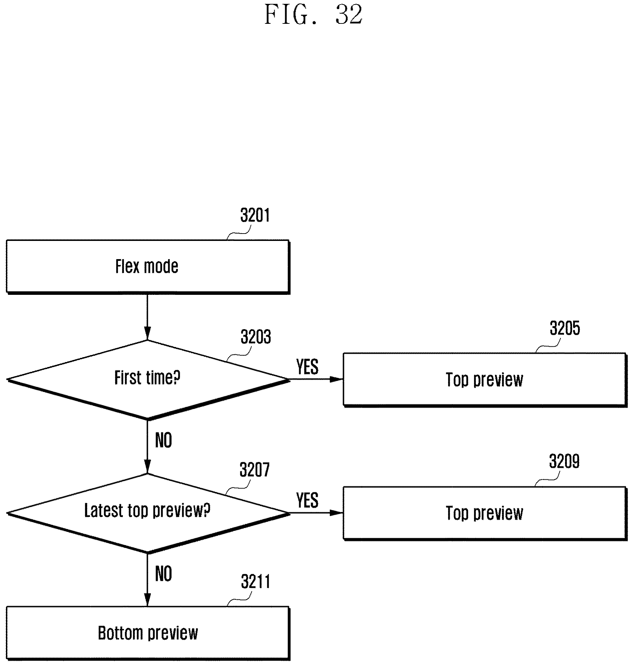

FIG. 32 is a view for explaining an example of a screen configuration in an intermediate state of an electronic device according to various embodiments.

According to an embodiment, FIG. 32 may illustrate an example in which in order to configure a camera preview in an intermediate state (e.g., a table mode or a flex mode) of the electronic device 101, for example, the position (e.g., the top or the bottom) of the preview area, in which a preview is to be displayed, is determined using the latest position of a preview.

Referring to FIG. 32, in operation 3201, the processor 120 of the electronic device 101 may be configured to sense the entry to a flex mode. For example, the processor 101 may be configured identify a state change from a folded state or an unfolded state to an intermediate state.

In operation 3203, the processor 120 may be configured to determine whether the entry to the flex mode is the first (e.g., a first time), based on sensing the entry to the flex mode. According to an embodiment, the processor 120 may be configured to record and count the entry to the flex mode performed during a designated period (e.g., during the execution of a camera application, or during a predetermined period according to use of the electronic device 101), and may be configured to determine whether the entry to the flex mode is the first, based on the record and the count for the entry to the flex mode.

In operation 3203, when it is determined that the entry to the flex mode is the first (e.g., 'YES' in operation 3203), the processor 120, in operation 3205, may be configured to determine such that the position of a preview area for a preview is placed at the top (or the upper side) of the display 300 (e.g., Top preview).

In operation 3203, when it is determined that the entry to the flex mode is not the first (e.g., 'NO' in operation 3203), the processor 120, in operation 3207, may be configured to determine whether the latest position of a preview is placed at the top thereof (Latest top preview). According to an embodiment, when the entry to the flex mode is not the first, the processor 120 may be configured to identify the position of a preview (e.g., the latest preview) used in the just previous flex mode, and may be configured to determine whether the position of the latest preview is placed at the top of the display 300 (e.g., Top preview) or is placed at the bottom of the display 300 (e.g., Bottom preview).

In operation 3207, when it is determined that the latest position of a preview is placed at the top (e.g., 'YES' in operation 3207), the processor 120, in operation 3209, may be configured to determine such that the position of a preview area for a preview is placed at the top (or the upper side) of the display 300 (e.g., Top preview).

In operation 3207, when it is determined that the latest position of a preview is placed at the bottom (e.g., 'NO' in operation 3207), the processor 120, in operation 3211, may be configured to determine such that the position of a preview area for a preview is placed at the bottom (or the lower side) of the display 300 (e.g., Bottom preview).

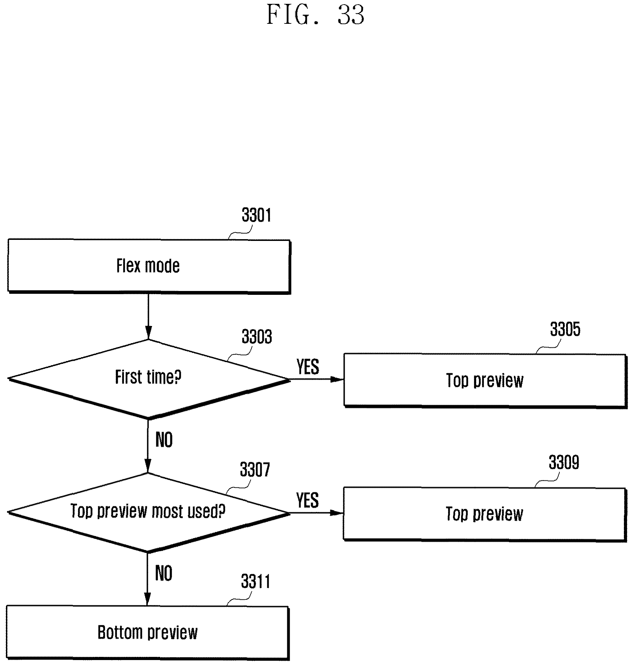

FIG. 33 is a view for explaining an example of a screen configuration in an intermediate state of an electronic device according to various embodiments.

According to an embodiment, FIG. 33 may illustrate an example in which in order to configure a camera preview in an intermediate state (e.g., a table mode or a flex mode) of the electronic device 101, for example, the position (e.g., the top or the bottom) of a preview area, in which a preview is to be displayed, is determined using the most used position of a preview.

Referring to FIG. 33, in operation 3301, the processor 120 of the electronic device 101 may be configured to sense the entry to a flex mode. For example, the processor 120 may be configured identify a state change from a folded state or an unfolded state to an intermediate state.

In operation 3303, the processor 120 may be configured to determine whether the entry to a flex mode is the first (e.g., a first time), based on sensing the entry to the flex mode. According to an embodiment, the processor 120 may be configured to record and count the entry to the flex mode performed during a designated period (e.g., during the execution of the camera application, or during a predetermined period according to use of the electronic device 101), and may be configured to determine whether the entry to the flex mode is the first, based on the record and the count for the entry to the flex mode.

In operation 3303, when it is determined that the entry to a flex mode is the first (e.g., 'YES' in operation 3303), the processor 120, in operation 3305, may be configured to determine such that the position of a preview area for a preview is placed at the top (or the upper side) of the display 300 (e.g., Top preview).

In operation 3303, when it is determined that the entry to a flex mode is not the first (e.g., 'NO' in operation 3303), the processor 120, in operation 3307, may be configured to determine whether the position of a preview, which is based on user preference, is placed at the top (Top preview most used). According to an embodiment, the processor 120 may be configured to determine whether the position, which is used as a preview area for a preview by a user in the flex mode, is placed at the top of the display 300 (e.g., Top preview) or is placed at the bottom of the display 300 (e.g., Bottom preview). For example, the processor 120 may be configured to identify user preference for a position that a user often uses as the position of a preview.

In operation 3307, when it is determined that the position of a preview according to user preference is placed at the top (e.g., 'YES' in operation 3307), the processor 120, in operation 3309, may be configured to determine such that the position of a preview area for a preview is placed at the top (or the upper side) of the display 300 (e.g., Top preview).

In operation 3307, when it is determined that the position of a preview according to user preference is placed at the bottom (e.g., 'NO' in operation 3307), the processor 120, in operation 3311, may be configured to determine such that the position of a preview area for a preview is placed at the bottom (or the lower side) of the display 300 (e.g., Bottom preview).

As described above with reference to FIG. 32 and FIG. 33, FIG. 32 and FIG. 33 may illustrate examples in which a camera preview is configured (e.g., the position determination of a preview area in which a preview is to be displayed) in an intermediate state (e.g., a table mode or a flex mode).

According to an embodiment, in an intermediate state of the electronic device 101, a preview position is moved (changed) to the upper side (e.g., the top of the display 300) or the lower side (e.g., the bottom of the display 300) with reference to a folding portion (e.g., the axis A FIG. 3A to FIG. 4B) according to the user's intention, and a camera application screen having different configurations may be provided according to the position of a preview. According to an embodiment of the disclosure, although separately illustrated in FIG. 32 and FIG. 33, various embodiments may be not limited thereto. In addition, according to a configuration of the electronic device 101, the operations of the FIG. 32 or FIG. 33 may be individually performed, or according to the weight for the two conditions (e.g., based on the latest use preview and based on a preview (e.g., based on history and/or user preference) having a high use frequency (or high-priority) by a user) according to the operations of the FIG. 32 and FIG. 33, the operations of the FIG. 32 or FIG. 33 may be performed sequentially, in parallel, or heuristically.

According to an embodiment, for example, by a method of determining a position of a camera preview in the intermediate state of the electronic device 101, when the electronic device enters an intermediate state (e.g., a flex mode) for the first time (e.g., a first time) since the electronic device 101 is folded in half by a user, the position of a preview may be moved (or changed) according to the user's intention in a state of positioning (disposing) a preview to the upper side according to a default configuration. Thereafter, a method of selecting (or determining) the position of a preview when entering an intermediate state may be performed as those in FIG. 32 and/or FIG. 33.

According to an embodiment, in the case of both examples of FIG. 32 and FIG. 33, it may be the same in that a preview is provided at the upper side (e.g., the top of the display 300) when entering an intermediate state for the first time. According to some embodiments, it may be also possible to provide a preview at the lower side (e.g., the bottom of the display 300) according to a configuration of a camera application.

For an example, as the operation of FIG. 32, when an intermediate state of the electronic device 101 has already used by a user and then when entering the next intermediate state, a preview may be disposed at a position the same as the last position of a preview by a user, and correspondingly thereto, a camera application may be configured to operate.

For another example, as the operation of FIG. 33, when an intermediate state of the electronic device 101 has already used by a user and then when entering the next intermediate state, a preview may be disposed at a position the same as a position frequently used by a user, and correspondingly thereto, a camera application may be configured to operate.

According to an embodiment, the electronic device 101 may be configured to have various menu items according to a preview position in an intermediate state (e.g., a flex mode). For example, the electronic device 101 may be configured to provide various functions through a camera device (e.g., the front camera device 305 or the rear camera device 308), and may be configured to provide various guides for photographing better quality images, through a user input based on various buttons (software buttons) and/or various menus, and/or through image analysis. Due to this, when various icons and/or pop-ups are configured and provided in the limited screen (e.g., a narrow screen) of the display 300 of the electronic device 101, a complex screen may be provided to a user. In various embodiments, through two areas divided in an intermediate state of the display 300, a preview area and a sub-area may be provided separately, and the complexity of screen composition of a preview and/or a layout of a preview area and a sub-area may be improved through an adaptive switching.

According to an embodiment, in the electronic device 101, a photographing button, a screen switching button, and/or a zoom button, which are the most used elements in a camera application, may be always fixed regardless of the position of a preview. For example, in the electronic device 101, the most important elements in a camera application may be provided in a fixed state regardless of a preview position, and thus it may be possible to provide clear usability to a user. According to an embodiment, in the electronic device 101, the objects, which deals with the important elements, may have priority to be set to high, and the important elements, of which priority is set to high, may be determined to be provided (e.g., arranged) at a fixed position.

According to an embodiment, in the electronic device 101, a notification pop-up (e.g., photographing time, warning, simple notification, mode, and/or an effect description), which is an element used to confirm a current situation, and/or an element of an area selection box (e.g., a motion recognition auto-detection area in a super slow motion mode, and an effect area in food mode) may be positioned (or arranged) together in an area (e.g., a preview area) in which a preview is positioned, for user confirmation or user convenience. According to an embodiment, in the electronic device 101, elements, which requires interaction with a user, such as a pop-up (e.g., blur or eye close image detection) for providing information to a user, tips (or guides) for inducing the changes of various configurations (or options) (e.g., night on, HDR on and/or flash on/off), and/or notifications requiring user interaction, may be positioned (or arranged) in an area (e.g., a preview area) that a user is looking at. According to an embodiment, in the electronic device 101, the objects, which deals with middle elements, may have priority to be set to middle, and the middle elements, of which priority is set to middle, may be determined to be provided (e.g., arranged) at a middle position of a preview area.

According to an embodiment, in the electronic device 101, elements, which have a relatively low usage rate in the intermediate state of the electronic device 101, such as icons for various operations (e.g., ratio, a filter, ISO, shutter speed, and/or a flash) and/or an icon for changing a photographing mode, may be positioned (or arranged) on a side (e.g., a sub-area) opposite to a side in which a preview is positioned, so as to prevent inconvenience in photographing, and through this, it may be possible to provide a comfortable photographing environment to a user. According to an embodiment, in the electronic device 101, the objects, which deals with elements having relatively lower importance, may have priority to be set to lower, and the non-important elements, of which priority is set to lower, may be determined to be provided (e.g., arranged) at an area (e.g., a sub-area) different from an area (e.g., a preview area) to which a preview is provided.

According to an embodiment, in the electronic device 101, a screen configuration in an intermediate state (e.g., a flex mode) for the above-described elements (e.g., important elements, middle elements, and non-critical elements) may be optimized according to a user, through learning usage pattern of a user. For example, in the electronic device 101, a specific configuration (or option) (e.g., a photographing mode item such as night on) may be provided for low-light photographing, but some users may not use the specific configuration and other users (e.g., users who change a lot photographing modes) may use the specific configuration frequently. Accordingly, the electronic device 101 may be configured to provide a configuration optimized for each user through learning usage pattern of a user. For example, in the electronic device 101, through learning usage pattern of a user, photographing mode items may be arranged in a preview area, and pop-ups, configurations, and/or notifications may be arranged an area (e.g., a sub-area) in which a preview does not exist. For example, in the electronic device 101, through learning usage pattern of a user, when a photographing mode change is used relatively more than a zoom function in an intermediate state (e.g., a flex mode) of the electronic device 101 by a user, the configuration of the intermediate state may be changed to suit the usage pattern of the user, and thus the icon for the zoom function may be positioned (or disposed) at a side (e.g., a sub-area) opposite to a preview area on which a preview is displayed, and the photographing mode change icon may be positioned (or disposed) in the preview area on which the preview is displayed.

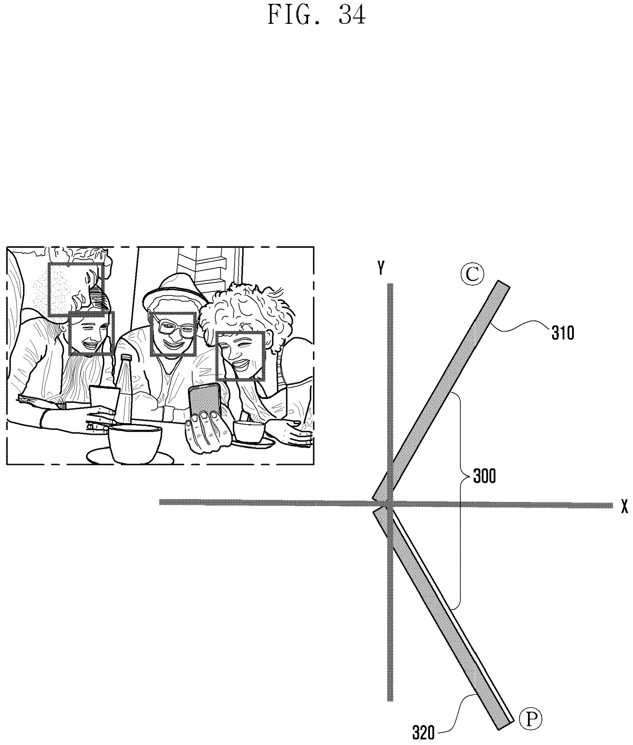

Hereinafter, with reference to FIG. 34 to FIG. 46, it will be described examples of operation for automatically controlling the movement of a preview in the electronic device 101 according to various embodiments.

According to an embodiment, the electronic device 101 may be configured to automatically control a movement of a preview (or preview area) through identifying a position of a user's gaze by using an angle (e.g., a predetermined inflection angle (e.g., the angle between the first housing 310 and the second housing 320) detected through a hinge module) at which the electronic device 101 is folded and a camera device (e.g., the front camera device 305 or the rear camera device 308) and/or identifying a state in which the electronic device 101 is placed, by using a sensor (e.g., 6-axis sensor). According to an embodiment, in FIG. 34 to FIG. 46, reference numeral C may indicate a camera device (e.g., the front camera device 305 or the rear camera device 308), and reference numeral P may indicate a preview displayed through a preview area designated in the display 300.

FIG. 34 to FIG. 39 may illustrate examples of setting a preview position by using a subject and an angle of a hinge module in the electronic device according to various embodiments. According to an embodiment, FIG. 34 to FIG. 39 may illustrate examples in which in the electronic device 101, based on subject recognition (e.g., face and/or eye recognition) and an unfolding angle (e.g., the angle between the first housing 310 and the second housing 320) of the electronic device 101, a camera angle (e.g., a high angle or a low angle) is determined, and based on the determined the camera angle, a preview position is set, so as to automatically control a movement of a preview.

FIG. 34, FIG. 35, and FIG. 36 are views for explaining examples of setting a preview position by using a subject and an angle of a hinge module in an electronic device according to various embodiments.

According to an embodiment, FIG. 34, FIG. 35, and FIG. 36 may illustrate examples in which in the electronic device 101, based on the determination of a high angle, a preview position is determined to the bottom of the display 300, so as to automatically control such that the preview is moved to the determined position.

Referring to FIG. 34, FIG. 35, and FIG. 36, as illustrated in FIG. 34, when a subject is recognized as a high angle by the camera device C (e.g., the rear camera device 308) and an unfolding angle (e.g., the angle between the first housing 310 and the second housing 320) of the electronic device 101 has a designated range of angle, the electronic device 101 in which the position the preview P is placed at the bottom of the display300 and a sub-area is placed at the top of the display 300 may be provided. According to an embodiment, the angles illustrated in FIG. 34, FIG. 35, and FIG. 36 may be angles illustrated with reference to the XY axis.

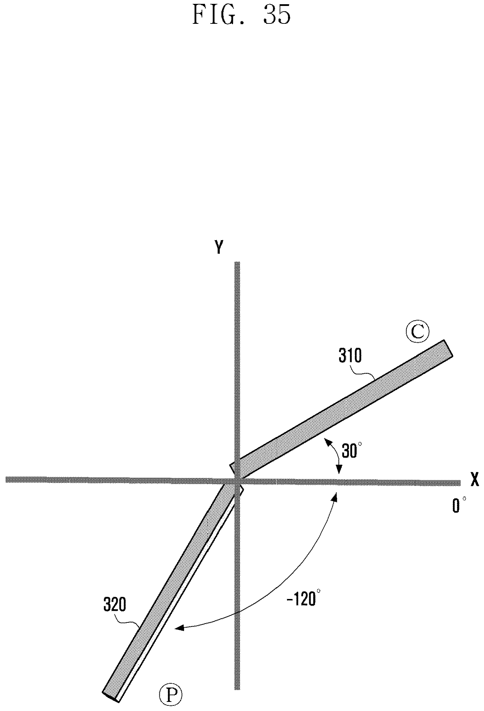

According to an embodiment, referring to FIG. 35, when a subject is recognized by the camera device C (e.g., the rear camera device 308), the first housing 310 has an angle of about 30 degrees with reference to the X axis, and the second housing 320 has an angle of about - 120 degrees (or about 240 degrees) with reference to the X axis, the electronic device 101 may be configured to determine a camera angle as a high angle. For example, based on the camera device C (e.g., the rear camera device 308) by which a subject is recognized, an angle (e.g., an angle of a hinge module) defined by each of the first housing 310 and the second housing 320, and an unfolding angle (e.g., the angle between the first housing 310 and the second housing 320) according to each defined angle, the electronic device 101 may configured to determine a camera angle (e.g., a high angle). According to an embodiment, in FIG. 35, the electronic device 101 may have an unfolding angle of about 150 degrees (e.g., about 145 degrees - about 155 degrees). According to an embodiment, when the rear camera device 308 is used, the unfolding angle is greater than a designated range, an angle (e.g., each about 30 degrees and about -120 degrees) of each of the first housing 310 and the second housing 320 for the designated range satisfies a first designated condition (e.g., at least one of an angle defined with respect to the first housing 310 and second housing 320 or an angle of each of the first housing 310 and second housing 320) is below (e.g., less than 0 degrees (or a negative (-) angle) with respect to the X axis), it may be determined that the electronic device 101 is a state of a high angle. According to an embodiment, based on the determined camera angle (e.g., a high angle), the electronic device 101 may be configured such that the position of a preview is determined (or set) to the bottom (e.g., Bottom preview) of the display 300.

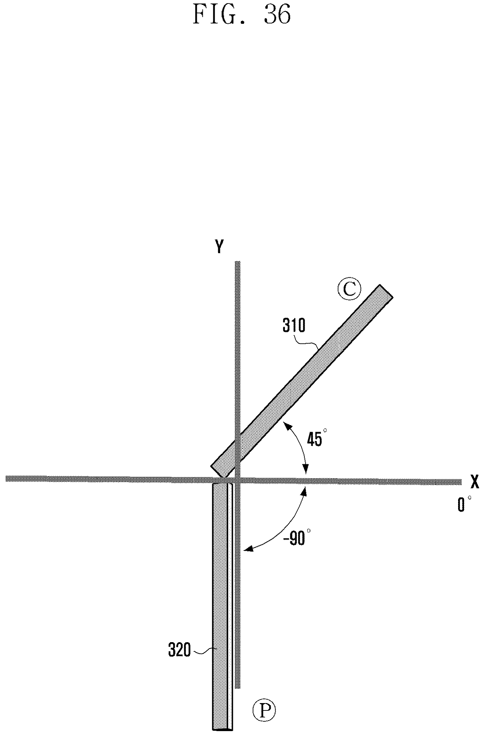

According to an embodiment, referring to FIG. 36, when a subject is recognized by the camera device C (e.g., the rear camera device 308), the first housing 310 has an angle of about 45 degrees with reference to the X axis, and the second housing 320 has an angle of about - 90 degrees (or about 270 degrees) with reference to the X axis, the electronic device 101 may be configured to determine a camera angle as a high angle. For example, based on the camera device C (e.g., the rear camera device 308) by which a subject is recognized, an angle (e.g., an angle of a hinge module) defined by each of the first housing 310 and the second housing 320, and an unfolding angle (e.g., the angle between the first housing 310 and the second housing 320) according to each defined angle, the electronic device 101 may configured to determine a camera angle (e.g., high angle). According to an embodiment, in FIG. 36, the electronic device 101 may have an unfolding angle of about 135 degrees (e.g., about 130 degrees - about 140 degrees). According to an embodiment, when the rear camera device 308 is used, the unfolding angle is equal to or greater than a designated range, an angle (e.g., each about 45 degrees and about -90 degrees) of each of the first housing 310 and the second housing 320 for the designated range satisfies a first designated condition (e.g., at least one of an angle defined with respect to the first housing 310 and second housing 320 or an angle of each of the first housing 310 and second housing 320) is below (e.g., less than 0 degrees (or a negative (-) angle) with respect to the X axis), it may be determined that the electronic device 101 is a state of a high angle. According to an embodiment, based on the determined camera angle (e.g., a high angle), the electronic device 101 may be configured such that the position of a preview is determined (or set) to the bottom (e.g., Bottom preview) of the display 300.

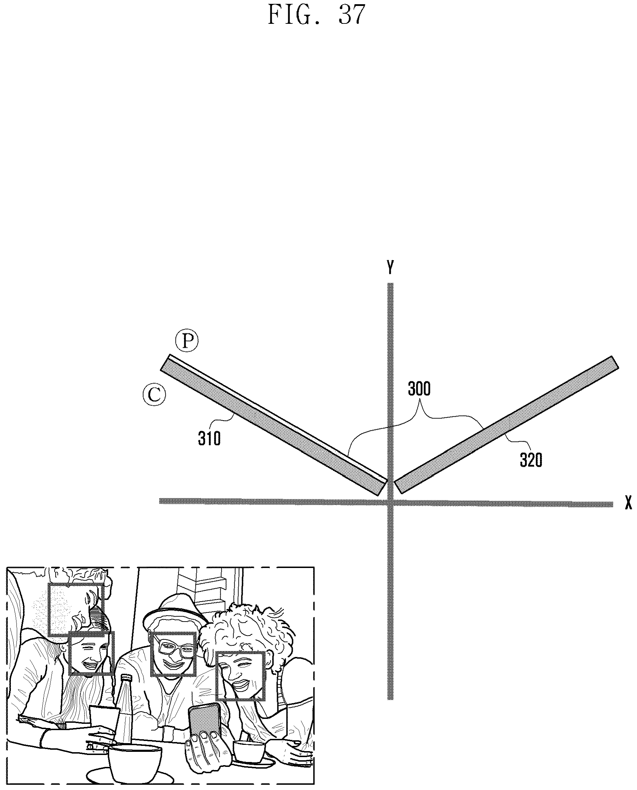

FIG. 37, FIG. 38, and FIG. 39 are views for explaining examples of setting a preview position by using a subject and an angle of a hinge module in an electronic device according to various embodiments.

According to an embodiment, FIG. 37, FIG. 38, and FIG. 39 may illustrate examples of determining, in the electronic device 101, based on the determination of a lower angle, a preview position to the top of the display 300, and automatically controlling such that the preview is moved to the determined position.

Referring to FIG. 37, FIG. 38, and FIG. 39, as illustrated in FIG. 37, when a subject is recognized as a low angle by the camera device C (e.g., the rear camera device 308) and an unfolding angle (e.g., the angle between the first housing 310 and the second housing 320) of the electronic device 101 has a designated range of angle, the electronic device 101 in which the position the preview P is placed at the top of the display300 and a sub-area is placed at the bottom of the display 300, may be provided. According to an embodiment, the angles illustrated in FIG. 37, FIG. 38, and FIG. 39 may be angles illustrated with reference to the XY axis.

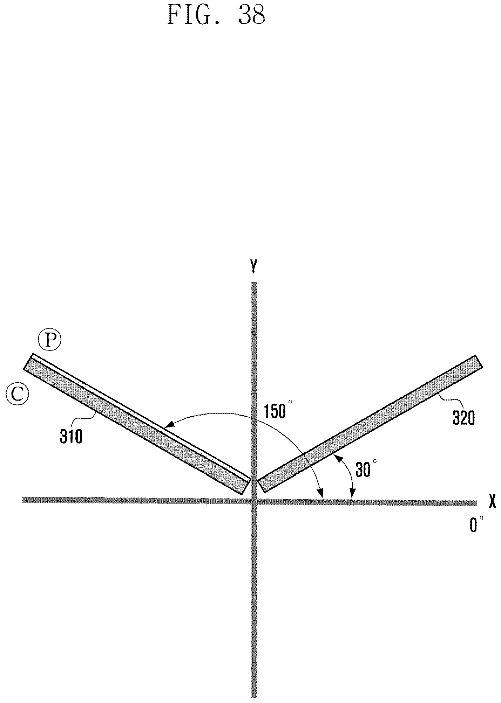

According to an embodiment, referring to FIG. 38, when a subject is recognized by the camera device C (e.g., the rear camera device 308), the first housing 310 has an angle of about 150 degrees with reference to the X axis, and the second housing 320 has an angle of about 30 degrees with reference to the X axis, the electronic device 101 may be configured to determine a camera angle as a low angle. For example, based on the camera device C (e.g., the rear camera device 308) by which a subject is recognized, an angle (e.g., an angle of a hinge module) defined by each of the first housing 310 and the second housing 320, and an unfolding angle (e.g., the angle between the first housing 310 and the second housing 320) according to each defined angle, the electronic device 101 may be configured to determine a camera angle (e.g., a low angle). According to an embodiment, in FIG. 38, the electronic device 101 may have an unfolding angle of about 120 degrees (e.g., about 115 degrees - about 125 degrees). According to an embodiment, when the rear camera device 308 is used, the unfolding angle is equal to or greater than a designated range, an angle (e.g., each about 150 degrees and about 30 degrees) of each of the first housing 310 and the second housing 320 for the designated range satisfies a second designated condition (e.g., all of an angle defined with respect to the first housing 310 and second housing 320 or an angle of each of the first housing 310 and second housing 320 are above (e.g., 0 degree or more (or a positive (+) angle) with respect to the X axis), it may be determined that the electronic device 101 is a state of a lower angle. According to an embodiment, based on the determined camera angle (e.g., a lower angle), the electronic device 101 may be configured such that the position of a preview is determined (or set) to the top (e.g., Top preview) of the display 300.

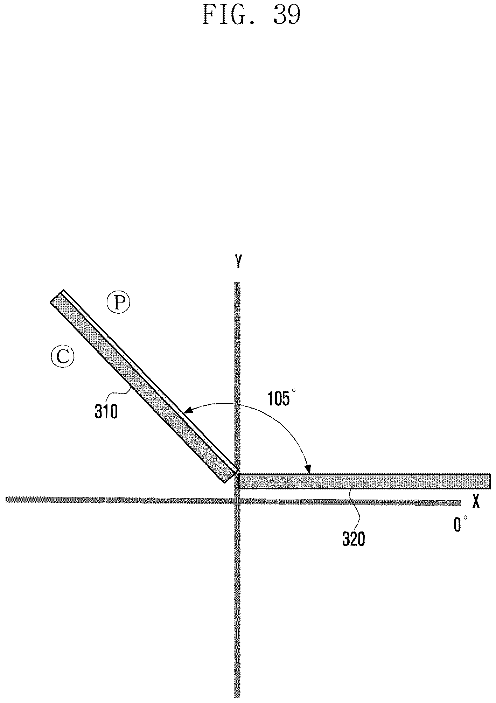

According to an embodiment, referring to FIG. 39, when a subject is recognized by the camera device C (e.g., the rear camera device 308), the first housing 310 has an angle of about 105 degrees with reference to the X axis, and the second housing 320 has an angle of about 0 degrees with reference to the X axis, the electronic device 101 may be configured to determine a camera angle as a low angle. For example, based on the camera device C (e.g., the rear camera device 308) by which a subject is recognized, an angle (e.g., an angle of a hinge module) defined by each of the first housing 310 and the second housing 320, and an unfolding angle (e.g., the angle between the first housing 310 and the second housing 320) according to each defined angle, the electronic device 101 may be configured to determine a camera angle (e.g., a low angle). According to an embodiment, in FIG. 39, the electronic device 101 may have an unfolding angle of about 105 degrees (e.g., about 100 degrees - about 110 degrees). According to an embodiment, when the rear camera device 308 is used, the unfolding angle is greater than a designated range, an angle (e.g., each about 105 degrees and about 0 degrees) of each of the first housing 310 and the second housing 320 for the designated range satisfies a second designated condition (e.g., all of an angle defined with respect to the first housing 310 and second housing 320 or an angle of each of the first housing 310 and second housing 320) are above (e.g., 0 degree or more (or a positive (+) angle) with respect to the X axis), it may be determined that the electronic device 101 is a state of a lower angle. According to an embodiment, based on the determined camera angle (e.g., a lower angle), the electronic device 101 may be configured such that the position of a preview is determined (or set) to the top (e.g., Top preview) of the display 300.

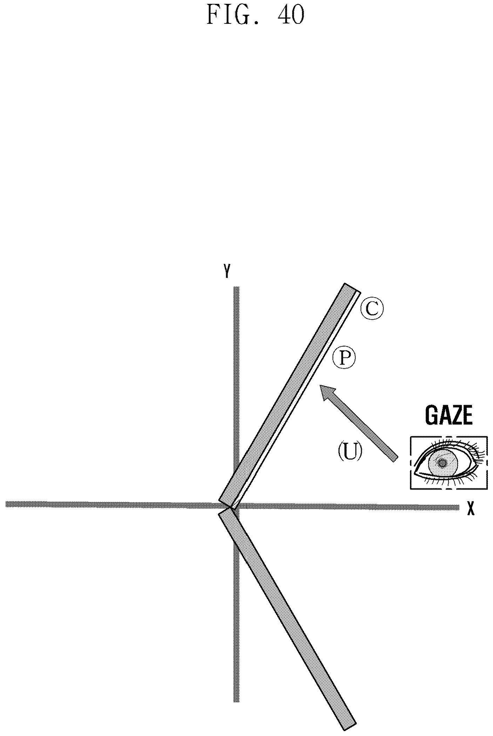

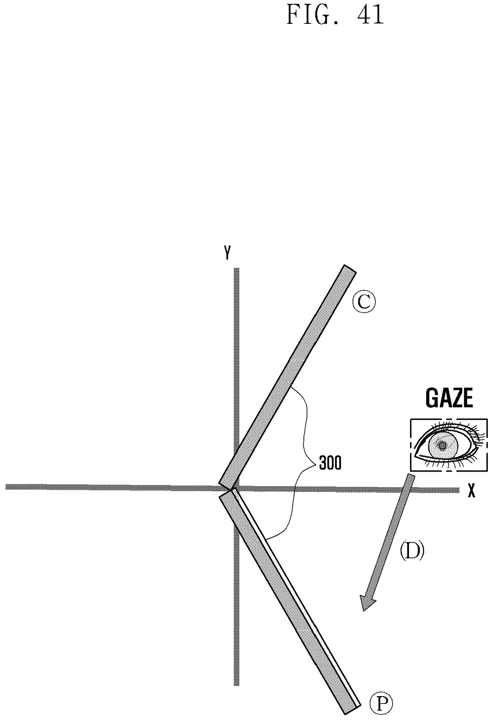

FIG. 40 and FIG. 41 are views for explaining examples of setting a preview position by using a gaze position of a photographer in an electronic device according to various embodiments.

According to an embodiment, the electronic device 101 may be configured to determine a preview position through the gaze direction of a photographer and automatically control such that the preview is moved to the determined position. For example, the electronic device 101 is may be configured such that the preview P is disposed and provided at the top (e.g., see FIG. 40) when a photographer's gaze is directed upward, and may be configured such that the preview P is disposed and provided at the bottom (e.g., see FIG. 41) when a photographer's gaze is directed downward.

Referring to FIG. 40 and FIG. 41, the electronic device 101 may be configured to perform eye tracking from the preview P obtained through the camera device C (e.g., the front camera device 305). According to an embodiment, the electronic device 101 may be configured to identify a user's gaze direction (e.g., the first direction U or the second direction D), based on eye tracking.

According to an embodiment, as illustrated in FIG. 40, when it is detected that the user's gaze is directed upward (e.g., the first direction U) of the display 300 in an unfolded state, the electronic device 101 may be configured such that the position of a preview is determined (or set) to the top (e.g., Top preview) of the display 300 and the preview P is disposed and provided at the top of the display 300.

According to an embodiment, as illustrated in FIG. 41, when it is detected that the user's gaze is directed downward (e.g., the second direction D) of the display 300 in an unfolded state, the electronic device 101 may be configured such that the position of a preview is determined (or set) to the bottom (e.g., Bottom preview) of the display 300 and the preview P is disposed and provided at the bottom of the display 300.

According to some embodiments, the electronic device 101 may be configured to perform additional tracking so as to compensate for a malfunction, in order to prevent an unnecessary malfunction (e.g., a position change of a preview when a user's gaze for control is moved by the user) according to a user's gaze direction tracking. For example, it may be also possible to determine whether to change a preview according to a gaze direction, through tracking the direction in which a user's movement is directed.

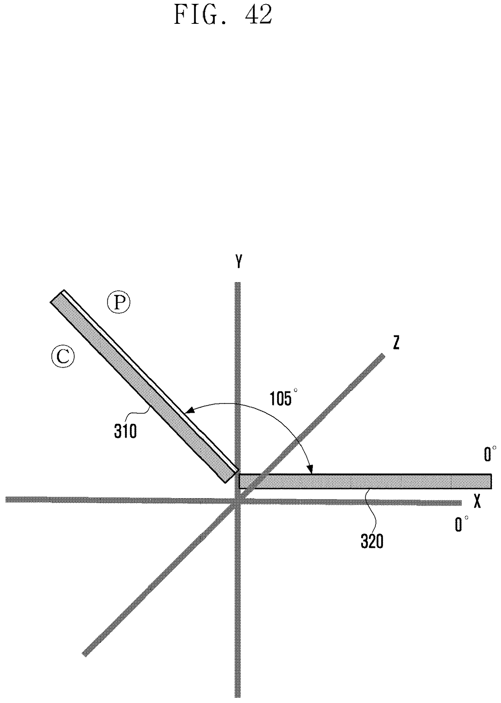

FIG. 42 is a view for explaining an example of setting a preview position by using a device angle and an angle of a hinge module in an electronic device according to various embodiments.

According to an embodiment, FIG. 42 may illustrate an example in which, in the electronic device 101, based on a device angle and an unfolding angle (e.g., the angle between the first housing 310 and the second housing 320) of the electronic device 101, a camera angle (e.g., a high angle or a low angle) is determined, and based on the determined camera angle, a preview position is set, so as to automatically control a movement of a preview.

Referring to FIG. 42, According to an embodiment of the electronic device 101, it may show an example of determining a preview position, based on an unfolding angle (e.g., the angle between the first housing 310 and the second housing 320) of the display 300, or an angle defined in each of the first housing 310 and the second housing 320 and a sensor value of at least one sensor (e.g., 6-axis sensor). According to an embodiment, the electronic device 101 may be configured to recognize a camera angle as a high angle or a low angle through the angle of each of the first housing 310 and the second housing 320, and to define a position of the preview P and a position of a sub-area by the high or the low angle. According to an embodiment, the angle illustrated in FIG. 42 may be an angle illustrated with reference to the XYZ axis.

According to an embodiment, when the camera device C (e.g., the rear camera device 308) operates, the first housing 310 has an angle of about 105 degrees with reference to the X axis, and the second housing 320 has an angle of about 0 degrees with reference to the X axis, the electronic device 101 may be configured to determine a camera angle as a low angle. For example, based on the camera device C (e.g., the rear camera device 308) by which a subject is recognized, an angle (e.g., an angle of a hinge module) defined by each of the first housing 310 and the second housing 320, and an unfolding angle (e.g., the angle between the first housing 310 and the second housing 320) according to each defined angle, the electronic device 101 may be configured to determine a camera angle (e.g., a low angle). According to an embodiment, in FIG. 42, the electronic device 101 may have an unfolding angle of about 105 degrees (e.g., about 100 degrees - about 110 degrees). According to an embodiment, when the rear camera device 308 is used, an unfolding angle is equal to or greater than a designated range, an angle (e.g., each about 105 degrees and about 0 degrees) of each of the first housing 310 and the second housing 320 for the designated range satisfies a corresponding designated condition (e.g., an angle defined with respect to the first housing 310 and the second housing 320, for example, an angle of each of the first housing 310 and the second housing 320 is above (e.g., 0 degrees or more (or a positive (+)) with respect to the X axis, or at least one angle thereof is below (e.g., less than 0 degrees (or a negative (-)), it may be determined that the electronic device 101 is a state of a lower angle. According to an embodiment, as illustrated in FIG. 42, based on the determined camera angle (e.g., a lower angle), the electronic device 101 may be configured such that the position of a preview is determined (or set) to the top (e.g., Top preview) of the display 300. According to an embodiment, the electronic device 101 may be configured to identify a designated state (e.g., a state in which a user is holding the electronic device 101) (or a device angle) of the electronic device 101 by using a 6-axis sensor. For example, the electronic device 101 may be configured to determine a state in which the electronic device 101 is placed, by using a 6-axis sensor, and in the determined state, configured to automatically control a movement of a preview (or a preview area), based on the angle defined in the first housing 310 and second housing 320.

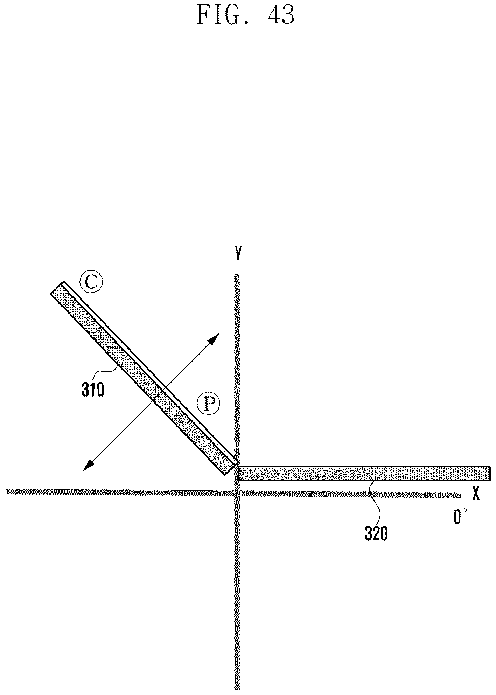

FIG. 43, FIG. 44, FIG. 45, and FIG. 46 are views for explaining examples of setting a preview position by using a fixed position and an angle of a hinge module in an electronic device according to various embodiments.

According to an embodiment, FIG. 43, FIG. 44, FIG. 45 and FIG. 46 may illustrate examples in which a camera angle (e.g., a high angle or a low angle) is determined, based on a use state of the camera device C (e.g., the front camera device 305 or the rear camera device 308) and an angle of a hinge module, in a state (e.g., a fixed state or a fixed position) in which the electronic device 101 is placed in a designated area such as a table or a floor, and a position of the preview P is set based on the determined camera angle. According to an embodiment, the electronic device 101 may be configured to determine a camera angle by using the fixed position of the electronic device 101 and the angle of a hinge module, to determine a position of the preview P to the top or the bottom of the display 300, based on the determination of the camera angle, and to automatically control such that the preview is moved to the determined position.

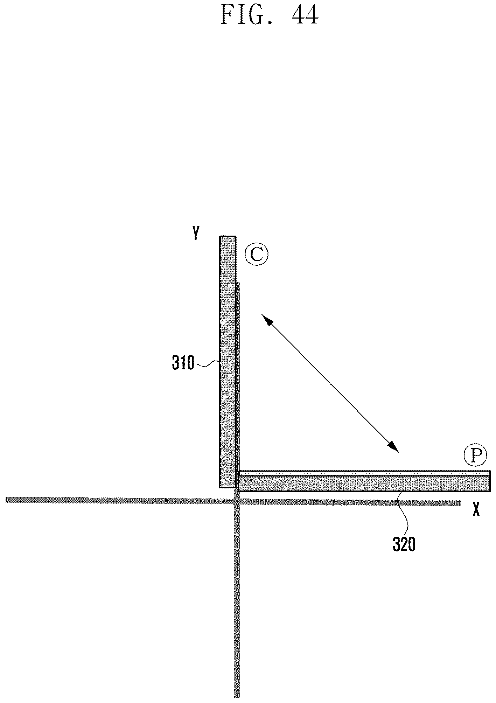

According to an embodiment, FIG. 43 and FIG. 44 may illustrate examples in which the camera device C (e.g., the front camera device 305) of the electronic device 101 is used in a state (e.g., a fixed state) in which the electronic device 101 is placed on a table.

Referring to FIG. 43 and FIG. 44, the electronic device 101 may be configured such that a position of the preview P is set to the top or the bottom thereof, based on the case where photographing is performed using the camera device C (e.g., the front camera device 305), and an unfolding angle (e.g., the angle between the first housing 310 and the second housing 320), with reference to a designated angle (e.g., about 90 degrees (e.g., a defined angle)), has an angle (e.g., an angle greater than about 90 degrees) greater than the designate angle or an angle (e.g., an angle less than or equal to about 90 degrees) less than or equal to the designated angle.

According to an embodiment, as illustrated in FIG. 43, in a fixed state (e.g., a state placed on a table, for example, when the second housing 320 has an angle of about 0 degrees with respect to the X axis), when the used camera device C is the front camera device 305, and the unfolding angle (e.g., the angle between the first housing 310 and the second housing 320) of the electronic device 101 is greater than a designated angle (e.g., about 90 degrees), the electronic device 101 may be configured such that the position of the preview P is placed and provided at the top (e.g., Top preview) of the display 300 and a sub-area is disposed and provided at the bottom of the display 300.

According to an embodiment, as illustrated in FIG. 44, in a fixed state (e.g., a state placed on a table, for example, when the second housing 320 has an angle of about 0 degrees with respect to the X axis), when the used camera device C is the front camera device 305, and the unfolding angle (e.g., the angle between the first housing 310 and the second housing 320) of the electronic device 101 is less than or equal to a designated angle (e.g., about 90 degrees), the electronic device 101 may be configured such that the position of the preview P is placed and provided at the bottom (e.g., Bottom preview) of the display 300 and a sub-area is disposed and provided at the top of the display 300.

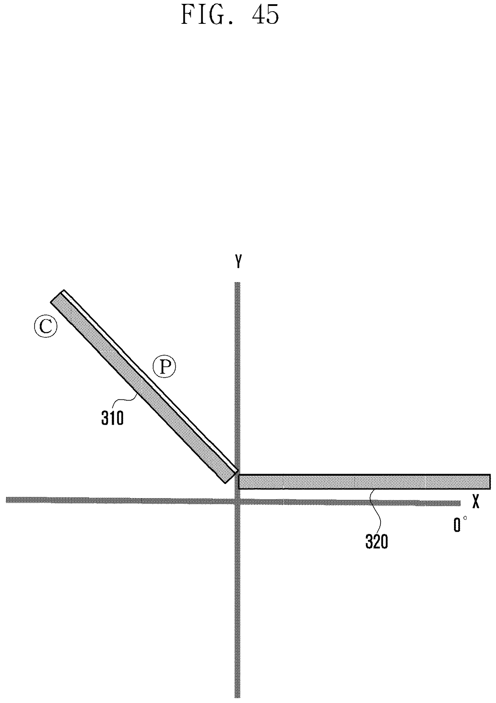

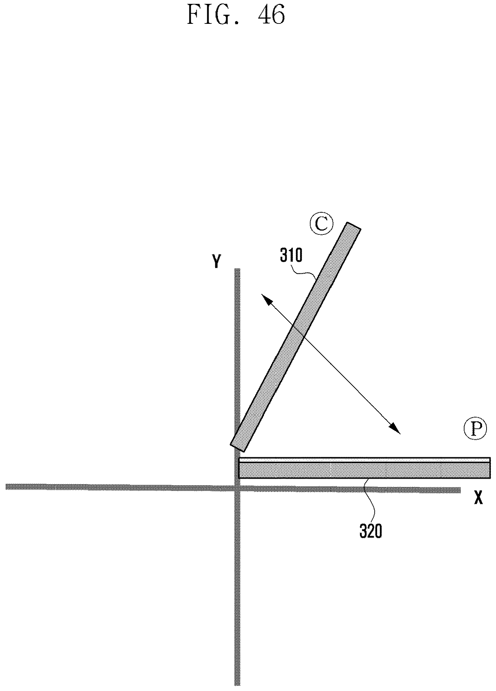

According to an embodiment, FIG. 45 and FIG. 46 may illustrate examples in which the camera device C (e.g., the rear camera device 308) of the electronic device 101 is used in a state (e.g., a fixed state) in which the electronic device 101 is placed on a table.

Referring to FIG. 45 and FIG. 46, the electronic device 101 may be configured such that a position of the preview P is set to the top or the bottom, based on the case where photographing is performed using the camera device C (e.g., the front camera device 308), and an unfolding angle (e.g., the angle between the first housing 310 and the second housing 320), with reference to a designated angle (e.g., about 90 degrees (e.g., a defined angle)), has an angle (e.g., an angle greater than about 90 degrees) greater than the designate angle or an angle (e.g., an angle less than or equal to about 90 degrees) less than or equal to the designated angle, according to a state change of the electronic device 101 (e.g., the display 300).

According to an embodiment, as illustrated in FIG. 45, in a fixed state (e.g., a state placed on a table, for example, when the second housing 320 has an angle of about 0 degrees with respect to the X axis), when the used camera device C is the rear camera device 308, and the unfolding angle (e.g., the angle between the first housing 310 and the second housing 320) of the electronic device 101 is greater than a designated angle (e.g., about 90 degrees), the electronic device 101 may be configured such that the position of the preview P is placed at the top (e.g., Top preview) of the display 300 and a sub-area is disposed and provided at the bottom of the display 300.

According to an embodiment, as illustrated in FIG. 46, in a fixed state (e.g., a state placed on a table, for example, when the second housing 320 has an angle of about 0 degrees with respect to the X axis), when the used camera device C is the rear camera device 308, and the unfolding angle (e.g., the angle between the first housing 310 and the second housing 320) of the electronic device 101 is less than or equal to a designated angle (e.g., about 90 degrees), the electronic device 101 may be configured such that the position of the preview P is placed at the bottom (e.g., Bottom preview) of the display 300 and a sub-area is disposed and provided at the top of the display 300.

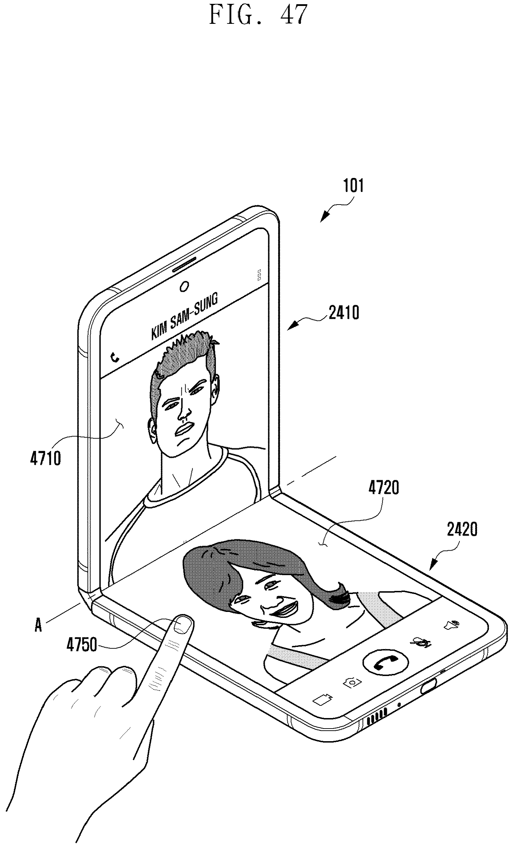

FIG. 47 is a view for explaining an example of an operation for changing a preview position in an intermediate state of the electronic device according to various embodiments.

According to an embodiment, FIG. 47 may illustrate an example in which previews 4710 and 4720 obtained from different camera devices are provided through the preview area 2410 and the sub-area 2420, respectively. According to an embodiment, the different camera devices of FIG. 47, as the example of the FIG. 16D, may be the front camera device 305 and the rear camera device 308 of the electronic device 101. According to another example, the different camera devices of FIG. 47, as the example of the FIG. 16E, may be the camera device 305 or 308 of the electronic device 101 and a camera device of an external electronic device.

According to an embodiment, when the front camera device 305 and the rear camera device 308 are used at the same time, the electronic device 101 may be configured to provide the first area 2410 (or a default preview area) as a preview area (e.g., a front preview area) of the front camera device 305, and provide the second area 2420 (or another default preview area) as a preview area (e.g., a rear preview area) of the rear camera device 308. According to some embodiments, when a camera device (e.g., the front camera device 305 or the rear camera device 308) of the electronic device 101 and a camera device of an external electronic device are used at the same time, the electronic device 101 may be configured to provide the second area 2420 (or a default sub-area) as a preview area of the camera device 305 or 308 of the electronic device 101, and provide the first area 2410 (or a default preview area) as a preview area of the camera device of the external electronic device.

According to an embodiment, while a preview 4710 of preview data obtained from the front camera device 305 is displayed through the first area 2410 (e.g., a front preview area), the electronic device 101 may be configured to connect the rear camera device 308, based on a user input, such that a preview 4720 of preview data obtained from the rear camera device 308 is displayed through the second area 2420 (e.g., a rear preview) area. For example, the electronic device 101 may be configured to simultaneously provide the preview 4710 of the front camera device 305 and the preview 4720 of the rear camera device 308, through the first area 2410 and second area 2420. According to some embodiments, according to a configuration of the electronic device 101, the first area 2410 may be provided as a preview area of the rear camera device 308, and the second area 2420 may be provided as a preview area of the front camera device 305.

According to some embodiments, the electronic device 101 may be configured to provide the second area 2420 as a preview area of a camera device (e.g., the front camera device 305 or the rear camera device 308) of the electronic device 101, and provide the first area 2410 as a preview area of a camera device (not shown) of an external electronic device (not shown). According to some embodiments, according to a configuration of the electronic device 101, the first area 2410 may be provided as a preview area of the camera devices 305 and 308 of the electronic device 101, and the second area 2420 may be provided as a preview area of a camera device of an external electronic device.

According to various embodiments, the electronic device 101 may be configured to change roles of the first area 2410 and the second area 2420, based on a user input 4750. For example, the electronic device 101 may be configured to provide a change between the previews 4710 and 4720 of the first area 2410 and the second area 2420 of the display 300, which are divided, based on the designated user input 4750.

According to an embodiment, when a specific event (e.g., a user input 4750) is generated by a user in a state where the preview 4710 of a first camera device (e.g., the front camera device 305) is displayed at the top (e.g., the first area 2410) of the display 300, and the preview 4720 of a second camera device (e.g., the rear camera device) is displayed at the bottom (e.g., the second area 2420), in an intermediate state, the electronic device 101 may be configured such that the preview 4710 of the first camera device, which is displayed at the top (e.g., the first area 2410), is moved to the bottom (e.g., the second area 2420), and the preview 4720 of the second camera device, which is displayed at the bottom (e.g., the second area 2420), is moved to the top (e.g., the first area 2410). For example, when the designated user input 4750 occurs in a state where the preview 4710 of the front camera device 305 is displayed in the first area 2410, and the preview 4720 of the rear camera device 308 is displayed in the second area 2420, the electronic device 101 may be configured to change the positions of the preview 4710 of the first area 2410 and the preview 4720 of the second area 2420 each other.

According to an embodiment, for example, the user input 4750 may include an input for single-tapping/double-tapping any area of the electronic device 101, an input for selecting and dragging a preview to be moved so as to move (e.g., drag/drop) to another area, an input of pre-mapped hardware physical keys (e.g., volume up/down buttons), a voice-based switching command input, an input for adjusting an unfolding angle of the electronic device 101, and/or an input for converting (e.g., shaking) a motion (or gesture) of the electronic device 101. For example, the user input 4750 may include various user inputs using a software interface designated for changing positions of previews each other, a physical interface, a voice interface, and/or a gesture interface.

An operation method performed in an electronic device 101 according to various embodiments of the disclosure may include an operation of identifying a state of the electronic device 101, based on the execution of a camera device, an operation of identifying a display operating in response to an operation mode of the camera device and the execution of the camera device, based on a state of the electronic device 101, an operation of updating a configuration of the camera device, at least based on an operation mode of the camera device and the identified display, and an operation of displaying, through the identified display, a preview obtained from the camera device, based on the updated configuration.

According to various embodiments, the method of the electronic device 101 may include an operation of determining the camera device as a corresponding operation mode, based on a state of the electronic device 101, an operation of establishing a connection of a first display or a second display, based on the determination as the operation mode, an operation of updating a configuration of the camera device, at least based on an attribute of a display connected in the operation mode, and an operation of displaying, through the connected display, a preview data obtained based on the updated configuration from the camera device as a preview.

According to various embodiments, the method of the electronic device 101 may include an operation of monitoring a state change of the electronic device 101, and an operation of performing a correction for each process of the camera device, based on a state change of the electronic device 101.

According to various embodiments, the method of the electronic device 101 may include an operation of dividing the display into the first area and the second area with reference to a folding axis, an operation of providing the first area as a preview area for a preview of the camera device, and an operation providing the second area as a sub-area associated with the preview.

According to various embodiments, the sub-area may be changed to have another layout, based on an operation of the camera device.

According to various embodiments, the first area may be configured to provide a layout associated with an interface, which non-interacts with a user, and the second area may be configured to provide a layout associated with an interface, which interacts with a user.

According to various embodiments, the method of the electronic device 101 may include an operation of sensing a trigger for a multi-preview display while a main preview is displayed through the display, an operation of obtaining a sub-preview for another display from the main preview of the display, and an operation displaying the main preview through the display and of simultaneously displaying the sub-preview through said another display.

According to various embodiments, the sub-preview may be generated at least based on an image in which at least a portion of the main preview displayed through the display is cropped, or an image in which the main preview displayed through the second display is resized.

Various embodiments of the disclosure disclosed in the specification and the drawings are merely specific examples presented to easily describe the technical content of the disclosure and to help understanding of the disclosure, and are not intended to limit the scope of the disclosure. Accordingly, it should be interpreted that not only embodiments disclosed herein but also all changed or modified forms derived based on the technical idea of the disclosure are included in the scope of the disclosure.

## Claims

1. An electronic device comprising:
a camera device;
a first display;
a second display; and
a processor, wherein the processor is configured to
identify a state of the electronic device, based on the execution of the camera device,
identify a display operating in response to an operation mode of the camera device and the execution of the camera device, based on a state of the electronic device,
update a configuration of the camera device, at least based on an operation mode of the camera device and the identified display, and
display, through the identified display, a preview obtained based on the updated configuration from the camera device.

2. The electronic device of claim 1, wherein the processor is configured to
determine the camera device as a first operation mode in a first state of the electronic device,
establish a connection of the first display, based on the determination as the first operation mode,
update a configuration of the camera device, at least based on the first operation mode and an attribute of the first display, and
deliver, to the first display, preview data obtained based on the updated configuration from the camera device so as to display a preview through the first display.

3. The electronic device of claim 2, wherein the processor is configured to monitor a state change of the electronic device, and
perform a correction for each process of the camera device, based on a state change of the electronic device.

4. The electronic device of claim 3, wherein the processor is configured to
sense a state change of the electronic device in at least one proceeding process of a process of connecting the camera device, a preview loading process in a connection state of the camera device, and an image photographing process,
perform at least one of a disconnection of the camera device, a configuration refresh of the camera device, and/or a connection operation of the camera device, based on the process in which a change is sensed, and
display, through a corresponding display, a preview corrected according to a new configuration corresponding to a state change from the camera device after reconnection of the camera device.

5. The electronic device of claim 1, wherein the processor is configured to
determine the camera device as a second operation mode in a second state of the electronic device,
establish a connection of the second display, based on the determination as the second operation mode,
update a configuration of the camera device, at least based on the second operation mode and an attribute of the second display, and
deliver, to the second display, preview data obtained based on the updated configuration from the camera device so as to display a preview through the second display.

6. The electronic device of claim 1, wherein the processor is configured to
determine the camera device as a third operation mode in a third state of the electronic device,
based on the determination as the third operation mode, update a configuration of the camera device, at least based on the third operation mode and an attribute of the second display connected in the third operation mode, and
deliver, to the second display, preview data obtained based on the updated configuration from the camera device so as to display a preview through a designated partial area of the second display.

7. The electronic device of claim 6, wherein the processor is configured to
divide the second display into a first area and a second area with reference to a folding axis, based on the determination as the third operation mode,
provide the first area as a preview area for a preview of the camera device, and
provide the second area as a sub-area associated with the preview, and
the sub-area is changed to have another layout, based on an operation of the camera device.

8. The electronic device of claim 7, wherein the processor is configured to
update a configuration of the camera device so as to correspond to an attribute of the first area of the second display.

9. The electronic device of claim 7, wherein the processor is configured to
provide, to the first area, a layout associated with an interface which non-interacts with a user, and
provide, to the second area, a layout associated with an interface which interacts with a user.

10. The electronic device of claim 7, wherein the processor is configured to
identify a layout associated with a sub-area configured in the second area, based on a preview state of the first area or a user configuration state,
provide a first user interface comprising the preview through the first area, and
provide a second user interface comprising operation information corresponding to a sub-area designated through the second area.

11. The electronic device of claim 1, wherein the processor is configured to
establish a connection of another display while a preview is displayed through the identified display, based on a trigger for a multi-preview display, and
simultaneously display a preview through the display and said another display.

12. The electronic device of claim 11, wherein the processor is configured to
sense a trigger for a multi-preview display while a main preview is displayed through the second display in a second state of the electronic device,
obtain a sub-preview for the first display from the main preview of the second display, and
display the main preview through the second display and simultaneously display the sub-preview through the first display, and
the sub-preview is generated
at least based on an image in which at least a portion of the main preview displayed through the second display is cropped, or an image in which the main preview displayed through the second display is resized.

13. The electronic device of claim 1, wherein
the first display is disposed on the rear surface of the electronic device, configured to display a preview of the camera device in a folded state of the electronic device, and configured to selectively display a preview according to an operation mode of the camera device in an unfolded state or an intermediate state of the electronic device,
the second display comprises a flexible display disposed on the front surface the electronic device and folded, bent, or unfolded around a designated folding axis, and is configured to display a preview of the camera device in an unfolded state or an intermediate state of the electronic device, and
the first display and the second display are configured to operate with screen sizes and/or screen resolutions different from each other.

14. A method for operating an electronic device, the method comprising
identifying a state of the electronic device, based on the execution of a camera device,
identifying a display operating in response to an operation mode of the camera device and the execution of the camera device, based on a state of the electronic device,
updating a configuration of the camera device, at least based on an operation mode of the camera device and the identified display, and
displaying, through the identified display, a preview obtained from the camera device, based on the updated configuration.

15. The method of claim 14, comprising
determining the camera device as a corresponding operation mode, based on a state of the electronic device,
establishing a connection of a first display or a second display, based on the determination as the operation mode,
updating a configuration of the camera device, at least based on an attribute of a display connected in the operation mode, and
displaying, through the connected display, a preview data obtained based on the updated configuration from the camera device as a preview.
